# EUROPEAN PATENT SPECIFICATION

(11) **EP 1 307 029 B1**
(45) Date of publication and mention of the grant of the patent: **28.12.2005**
(21) Application number: 02257348.9
(22) Date of filing: 23.10.2002
(51) Int. Cl.: H04L 29/12

(54) **Address conversion scheme for communications between different address systems**
Verfahren für eine Umwandlung von Netzwerkadressen zwischen verschiedene Adresssysteme
Procédé pour la conversion d' adresses pour la communication entre des systèmes d' adressage différents

(30) Priority: 24.10.2001 JP 2001325740; 18.06.2002 JP 2002176788
(43) Date of publication of application: 02.05.2003
(73) Proprietor: FUJITSU LIMITED, Kawasaki-shi, Kanagawa 211-8588 (JP)
(72) Inventor: Iwata, Eiki, c/o Fujitsu Limited, Kawasaki-shi, Kanagawa 211-8588 (JP); Iwakura, Hirokazu, c/o Fujitsu Limited, Kawasaki-shi, Kanagawa 211-8588 (JP); Kurita, Toshihiko, c/o Fujitsu Limited, Kawasaki-shi, Kanagawa 211-8588 (JP); Yamashima, Hiroyuki, c/o Fujitsu Limited, Kawasaki-shi, Kanagawa 211-8588 (JP)
(74) Representative: Fenlon, Christine Lesley

(56) References cited:
- EP-A- 0 840 482
- WO-A-99/32956
- US-A- 5 774 660
- US-A- 6 038 233
- US-A- 6 061 349
- TSIRTSIS G ET AL: "Network Address Translation - Protocol Translation (NAT-PT)" REQUEST FOR COMMENTS, February 2000 (2000-02), XP002167711 Retrieved from the Internet: <URL:http://www.faqs.org/rfcs/rfc2766.html > [retrieved on 2001-05-18]
- AFIFI H ET AL: "Methods for IPv4-IPv6 transition" PROCEEDINGS IEEE INTERNATIONAL SYMPOSIUM ON COMPUTERS AND COMMUNICATIONS, XX, XX, 6 July 1999 (1999-07-06), pages 478-484, XP002159749
- SRISURESH P ET AL: "LOAD SHARING USING IP NETWORK ADDRESS TRANSLATION (LSNAT)" REQUEST FOR COMMENTS, August 1998 (1998-08), XP002922809 Retrieved from the Internet: <URL:HTTP://WWW.GECKIL.COM/~HARVEST/RFC/RF C2391.TXT> [retrieved on 1999-11-09]

## Description

### BACKGROUND OF THE INVENTION

### 1. Field of the Invention

The present invention relates to communications between different address systems, and in particular, to address conversion scheme for communications between communications networks having different address systems.

### 2. The Description of the Related Art

For example, a case of communications between an IPv4 (Internet Protocol Version 4) network and an IPv6 (Internet Protocol Version 6) network having the total allocatable numbers of communications addresses different from each other will now be discussed. In such a case, a system is desired in which communications between an IPv4 communications apparatus and an IPv6 communications apparatus can be performed without being conscious of complicatedness concerning the difference in the address systems, the limited total allocatable number of addresses, and so forth, by applying a gateway apparatus (for example, communications address conversion apparatus) which performs a relay operation of changing a name of a communications apparatus of IPv6 network into a relevant IPv6 communications address.

As a communications method in the related art, a scheme is known to start communications by making an inquiry to a DNS, and, then, using an address from the DNS in response. For example, when communicating from an IPv4 communications apparatus to an IPv6 communications apparatus, a scheme disclosed by Japanese laid-open patent application No. 10-154994 may be used.

The above-mentioned DNS means a domain name system used in a TCP/IP (Transmission Control Protocol/Internet Protocol). In this case, a DNS server has a correspondence table for storing information concerning a correspondence between a host name and an IP address, and a user receives a notice of IP address by sending a host name instead of an IP address itself. And when receiving a mail via the Internet, proper mail acceptance is attained by beforehand registering a receiving person's mail server name into the DNS server.

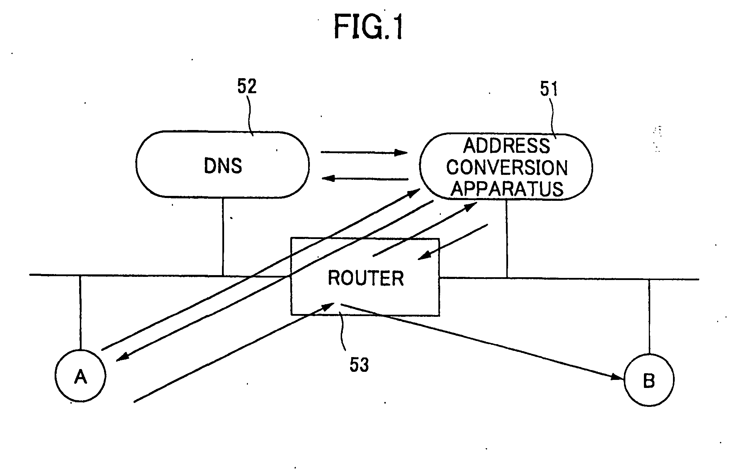

FIG. 1 shows a diagram of the above-mentioned related art. With this related art, an address conversion system which enables realization of communications between terminals (referred to as "communications apparatuses", hereinafter) given with addresses according to respective different address systems is performed without beforehand making a large alteration into the existing address systems.

As shown in FIG. 1, on a occasion of performing communications directed to an IPv6 communications apparatus B which operates according to the IPv6 communications system, an IPv4 communications apparatus A which operates according to the IPv4 communications system sends an inquiry to an address conversions apparatus 51 for an address of the IPv6 communications apparatus B. The address conversion apparatus 51 acquires the network address (IPv6 address) of the IPv6 communications apparatus B from a name server (DNS) 52, and returns a temporary IPv4 address corresponding to it to the IPv4 communications apparatus A. The IPv4 communications apparatus A starts communications with the IPv6 communications apparatus B using this temporary IPv4 address.

After a router 53 acquires a correspondence table for the IPv6 address with respect to the temporary IPv4 address from the address conversion apparatus at that time and changing the temporary IPv4 address into the IPv6 address according to this correspondence table, actual communications are established with the communications apparatus B.

That is, in the above-mentioned address conversion system, the address conversion apparatus 51 notifies the temporary IPv4 address to the IPv4 communications apparatus A, and the IPv4 communications apparatus A starts communications based on the temporary IPv4 address. In the router (gateway apparatus) 53 which performs a relay operation between the IPv4 network and the IPv6 network, when a communications start request is received from the IPv4 communications apparatus A, it asks to the apparatus which changes the name of the IPv6 communications apparatus B into the address. The correspondence table for the IPv6 address and temporary IPv4 address, which IPv6 address is the communications partner's actual address, is then acquired, and, after that, the communications partner's temporary IPv4 address is used to be converted into the IPv6 address which is the actual address according to the correspondence table concerned. Thus, the relay operation is performed, and, a communications start request is sent to the IPv6 communications apparatus B, and communications between the IPv4 communications apparatus A and IPv6 communications apparatus B are established.

As well-known, the above-mentioned IPv6 is a next-generation communications protocol which replaces the conventional "IPv4" which is the present standard internet protocol, for the purpose of solving various problems (exhaustion of the Class B, saturation of the path control information, exhaustion of the 32-bit addresses, etc.) concerning the address space of the present Internet communications system.

The above-described scheme using the address conversion apparatus has the following problems. That is, since only a temporary IPv4 address is used for acquiring an IPv6 address, when communications requests directed to a plurality of IPv6 communications apparatuses occurs from a plurality of IPv4 communications apparatuses simultaneously, the corresponding number of temporary IPv4 addresses for the respective destination IPv6 addresses is needed. In fact, as well-known, the total allocatable number of addresses of IPv4 network is very smaller than the total allocatable addresses in the IPv6 network. Therefore, when considering large-scale relay operation between the IPv4 network and IPv6 network, the total allocable number of temporary IPv4 address may become shortage in near future.

TSIRTSIS G ET AL: "Network Address Translation - Protocol Translation (NAT-PT)" REQUEST FOR COMMENTS, February 2000 (2000-02), XP002167711 URL: http://www.faqs.org/rfcs/rfc2766.html> discloses a technique according to the preamble of each independent claim, which uses a pool of IPv4 addresses for assignment to IPv6 nodes on a dynamic basis as sessions are initiated across v4-v6 boundaries. To enhance the usage of IPv4 addresses, it is proposed to translate transport identifies (e.g. port numbers) so as to allow the transport identifier of a number of IPv6 hosts to be multiplexed into the transport identifier of a single assigned IPv4 address.

US-A-6.061 349 discloses a system and method for using a single physical machine to handle a plurality of connection requests made for a plurality of virtual machines. A packet translation system is used to intercept incoming packets on a network and translate a virtual machine IP address and virtual machine port number into a physical machine IP address and physical machine port number. In this way it is possible to implement many IP addresses and port numbers on a single machine which only has a single IP address of its own.

SRISURESH P ET AL: "LOAD SHARING USING IP NETWORK ADDRESS TRANSLATION (LSNAT)" REQUEST FOR COMMENTS, August 1998 (1198-08), XP002922809 URL:
HTTP://WWW.GECKIL.COM/~HARVEST/RFC/RFC 2391.TXT> discloses a similar technique in which inbound packets are translated so as to restrict an access request to any of a plurality of hosts in a server pool, selected using a real-time load sharing algorithm. In this way it is possible for network load to be transparently distributed across the pool of servers.

Despite the above proposals, the problem still exists of maximising usage of temporary IPv4 addresses in a large-scale relay operation between an IPv4 and IPv6 network.

### SUMMARY OF THE INVENTION

The present invention has been made for solving this problem, and, is directed to effectively reduce the number of temporary addresses required to be allocated to addresses of another side of network, thereby enabling a large-scale communications between the two communications networks having different address systems, i.e., IPv4 system and IPv6 system without shortage of address resource.

According to a first aspect of the invention, there is provided a communications system for performing communications between first and second communications networks having different address systems, comprising:
an allocating part operable to allocate a temporary address, according to an address system of the first communications network for an address of a terminal on the second communications network according to an address system of the second communications network,
a registering part operable to register, as correspondence information for the temporary address, the address on the second communications network for which the temporary address is allocated; and
an address converting part operable to perform address conversion according to the correspondence information registered by said registering part;
characterised in that:
said registering part is operable to register at least any one of an address and a predetermined application identifier of a terminal on the first communications network as part of said correspondence information.

Further aspects of the invention are as defined in the independent claims.

Thus, according to the present invention, an address of a relevant terminal on its own network or a relevant predetermined application identifier is made to be registered at the same time as address conversion between communications networks which have different address systems. As a result, even in a case where the total allocatable number of temporarily addresses is not so large to be allocated for addresses in the different address system, it becomes possible to make multiple use of each temporary address by combining the address of the own terminal or relevant application identifier together with the temporary address, and thereby, it is possible to apparently increase the number of times of allocation of the temporary addresses. As a result, it becomes possible to effectively reduce the number of temporary addresses of the own communications network, for example, IPv4, needed for establishing a communications with the other communications network, for example, IPv6.

According to the present invention, since a temporary address used on an occasion of address conversion in a case of communications between communications networks which are different from each other in address rule is registered with a corresponding address or a predetermined application identifier (port number, for example) of a terminal of transmission-source-side communications network. Thereby, it becomes possible to utilize each temporary address many times simultaneously without confusion, and, thus, to utilize a limited available allocatable temporary addresses effectively.

Other objects and further features of the present invention will become more apparent from the following detailed description when read in conjunction with the accompanying drawings.

### BRIEF DESCRIPTION OF THE DRAWINGS

FIG. 1 illustrates a possible problem in communications between different address systems;
FIG. 2 shows a diagram of a communications system according to a first embodiment of the present invention;
FIG. 3 shows a configuration of an IPv4 communications apparatus shown in FIG. 2;
FIG. 4 shows a configuration of a name solution apparatus shown in FIG. 2;
FIG. 5 shows a configuration of a communications address conversion apparatus shown in FIG. 2;
FIGS. 6A and 6B show table data according to the first embodiment of the present invention, FIG. 6A showing a transmission source port number table, and FIG. 6B showing a temporary IPv4 address table;
FIGS. 7A and 7B show other table data according to the first embodiment of the present invention, FIG. 7A showing a correspondence information table with an IPv4 transmission source address, and FIG. 7B showing a correspondence information table with a transmission source port number;
FIG. 8 illustrates a first communications method according to the first embodiment of the present invention;
FIG. 9 shows how to delete correspondence information table data with the IPv4 transmission source address according to the first embodiment of the present invention;
FIG. 10 shows a processing flow chart of the IPv4 communications apparatus according to the first embodiment of the present invention;
FIG. 11 shows a processing flow chart of the name solution apparatus according to the first embodiment of the present invention;
FIG. 12 shows a processing flow chart of the communications address conversion apparatus according to the first embodiment of the present invention;
FIG. 13 illustrates a second communications method according to the first embodiment of the present invention;
FIG. 14 illustrates a method of deleting the correspondence information table data with the transmission source port number according to the second method of the first embodiment of the present invention;
FIG. 15 shows a processing flow chart of the IPv4 communications apparatus in the second method of the first embodiment of the present invention;
FIG. 16 shows a processing flow chart of the name solution apparatus in the second method of the first embodiment of the present invention;
FIG. 17 shows a processing flow chart of the communications address conversion apparatus in the second method of the first embodiment of the present invention;
FIGS. 18 and 19 illustrate possible problems on transmission source address registration;
FIG. 20 shows a system configuration of a second embodiment of the present invention;
FIG. 21 shows a configuration of an IPv4 communications apparatus shown in FIG. 20;
FIG. 22 shows a configuration of a name solution apparatus shown in FIG. 20;
FIG. 23 shows a configuration of a name server shown in FIG. 20;
FIG. 24 shows a configuration of an address conversion apparatus shown in FIG. 20;
FIG. 25 illustrates an address conversion table according to the second embodiment of the present invention;
FIG. 26 illustrates address conversion scheme according to the second embodiment of the present invention;
FIG. 27 shows a flow chart which shows operation of the address conversion apparatus at a time of communications reception from the IPv4 communications apparatus according to the second embodiment of the present invention;
FIG. 28 shows a flow chart which shows operation of the address conversion apparatus at a time of correspondence request reception according to the second embodiment of the present invention;
FIG. 29 shows a flow chart which shows operation of the address conversion apparatus at a time of communications reception from the IPv4 communications apparatus according to the second embodiment of the present invention;
FIG. 30 shows a flow chart of the address conversion apparatus of deleting a table entry, according to the second embodiment of the present invention;
FIG. 31 shows an address conversion table according to a third embodiment of the present invention;
FIG. 32 shows a flow chart of operation of the address conversion apparatus at a time of correspondence request reception according to the third embodiment of the present invention;
FIG. 33 shows a flow chart of operation of the address conversion apparatus at a time of communications reception from the IPv4 communications apparatus according to the third embodiment of the present invention;
FIG. 34 illustrates a fourth embodiment of the present invention;
FIG. 35 shows a functional diagram of a processing load sharing apparatus shown in FIG. 34;
FIG. 36 illustrates a system configuration of the fourth embodiment of the present invention;
FIG. 37 shows a configuration of an address conversion apparatus shown in FIG. 36;
FIG. 38 illustrates a management table of a filtering part shown in FIG. 37;
FIG. 39 shows a system configuration concerning address conversion methods according to the above-mentioned first and second embodiments of the present invention;
FIG. 40 shows a flow chart of the address conversion method according to the first embodiment of the present invention;
FIG. 41 shows a flow chart of the address conversion method according to the second embodiment of the present invention;
FIG. 42 shows a system configuration concerning an address conversion load sharing method according to the fourth embodiment of the present invention;
FIG. 43 shows a configuration of an address conversion apparatus shown in FIG. 42;
FIG. 44 shows a flow chart of operation according to the fourth embodiment of the present invention;
FIG. 45 shows a correspondence request signal according to the fourth embodiment of the present invention;
FIG. 46 shows a management table of a filtering part of the address conversion apparatus according to the fourth embodiment of the present invention;
FIGS. 47 and 48 show a flow chart of an address conversion method according to a fifth embodiment of the present invention:
FIG. 49 illustrates a correspondence request signal according to the fifth embodiment of the present invention;
FIG. 50 illustrates a management table of the filtering part of the address conversion apparatus according to the fifth embodiment of the present invention;
FIGS. 51 and 52 show a flow chart of an address conversion method according to a sixth embodiment of the present invention:
FIG. 53 illustrates a correspondence request signal according to the sixth embodiment of the present invention; and
FIG. 54 shows a configuration of an address conversion apparatus according to a seventh embodiment of the present invention.

### DETAILED DESCRIPTION OF THE PREFERRED EMBODIMENTS

Hereafter, an embodiment of the present invention will now be described in detail based on the drawings.

First, terms used by the following description will now be descried as follows.

"IPv4 communications apparatus" means a communications apparatus belonging to an IPv4 network 11.

"IPv6 communications apparatus" means a communications apparatus belonging to an IPv6 network 13.

"Address" means a communications address.

A communications system according to a first embodiment of the present invention will now be described.

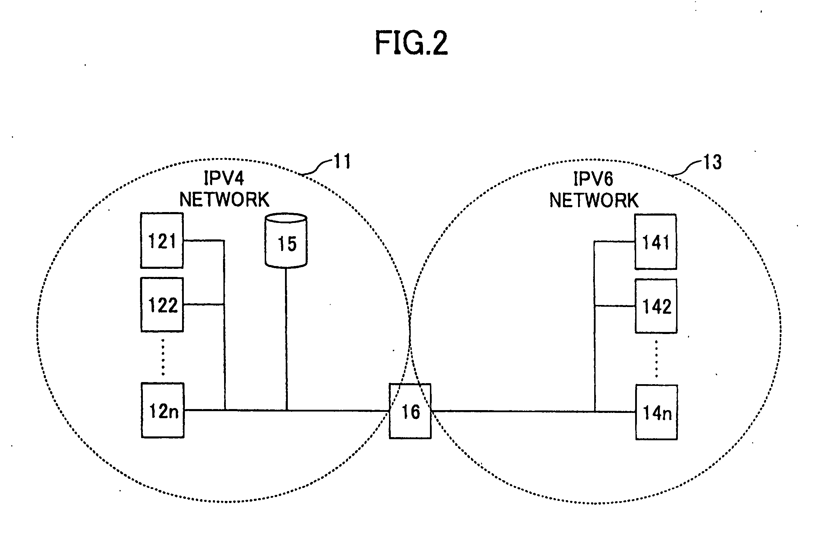

FIG. 2 is a diagram of the communications system concerned. This communications system is an example of a system for communicating from an IPv4 communications apparatus to an IPv6 communications apparatus. In this communications system, while providing a name solution apparatus 15 which changes a given name of an IPv6 communications apparatus into a temporary address effective in the IPv4 network 11, there are a plurality of IPv4 communications apparatuses 121 through 12n. Moreover, a plurality of IPv6 communications apparatuses 141 through 14n are provided in the IPv6 network 13.

A common communications address conversion apparatus 16 (apparatus which functions as a gateway apparatus) which relays communications between the IPv4 network and the IPv6 network is provided in the boundary between the IPv4 network 11 and IPv6 network 13.

The communications circuit (a communications circuit by radio or a communications circuit by cable) is prepared between the name solution apparatus 15, the plurality of IPv4 communications apparatuses 121 through 12n, the plurality of IPv6 communication apparatuses 141 through 14n, and the communications address conversion apparatus 16.

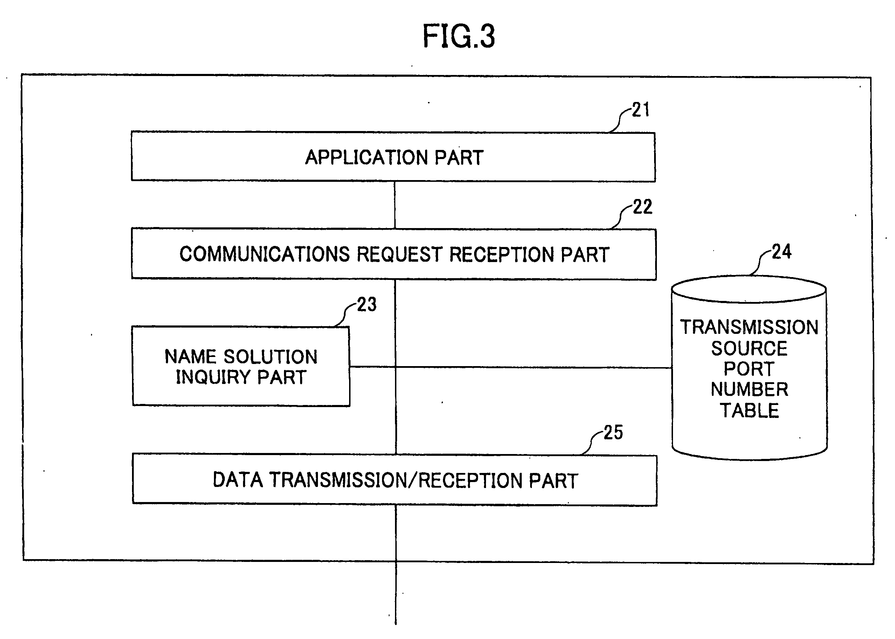

A configuration of each IPv4 communication apparatus will now be described. FIG. 3 is a configuration diagram of each IPv4 communication apparatus. As shown in the figure, the IPv4 communication apparatus includes an application part 21 issuing a communications request; a communications request reception part 22 which receives the communications request directed to an IPv6 communications apparatus, from the application part 21; a name solution inquiry part 23 which asks the name solution apparatus 15 an address of IPv4 based on a host name of the IPv6 communications apparatus; a transmission source port number table 24 for managing transmission source port numbers used at a time of communications, and a data transmission/reception part 25 which performs transmission and reception of data via the communications circuit. The above-mentioned application part 21, the communications request receptionist part 22, the name solution inquiry part 23, and the data transmission/reception part 25 are processing units to be embodied, for example, by execution of software programs by a computer, respectively.

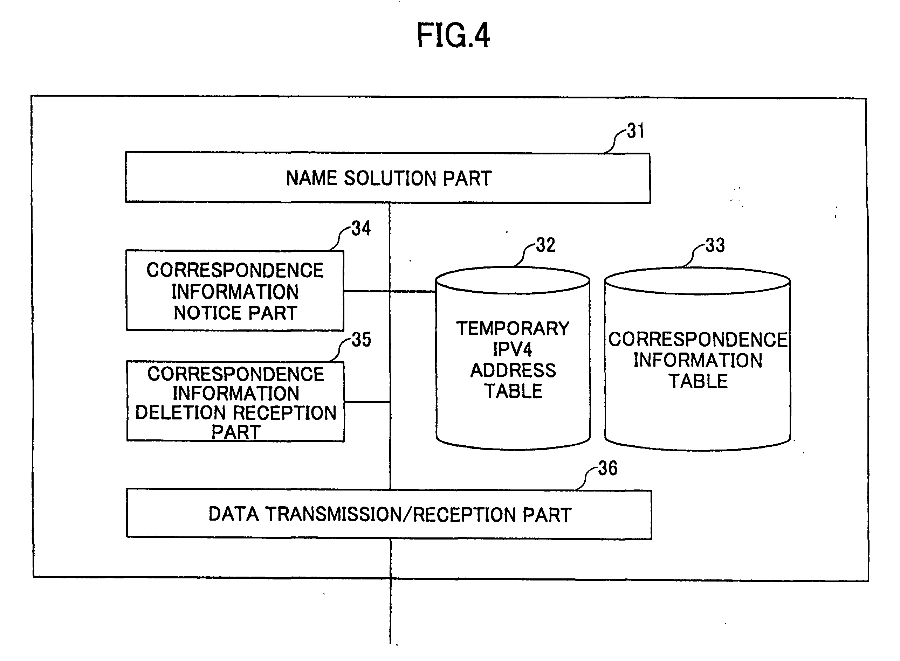

The above-mentioned name solution apparatus will now be described. FIG. 4 is a configuration diagram of the name solution apparatus. As shown in FIG. 4, the name solution apparatus 15 includes: a name solution part 31 which changes a host name given into a relevant IPv6 address; a temporary IPv4 address table 32 for managing destination addresses in the IPv4 address system (referred to as "temporary IPv4 addresses") to be notified to an asking IPv4 communications apparatus; a correspondence information table 33 for managing IPv6 addresses (referred to as "IPv6 destination addresses" hereinafter), and temporary IPv4 addresses obtained from the above-mentioned temporary IPv4 address table 32, together with the IPv4 addresses in the IPv4 communications apparatuses (referred to as "IPv4 transmission source addresses" hereinafter), or the transmission source port numbers used when communicating, for the temporary IPv4 address, as correspondence information; a correspondence information notification part 34 notifying the IPv6 destination address, temporary IPv4 transmission source address, IPv4 transmission source address, or transmission source port number (referred to as "correspondence information" hereinafter) to the communications address conversion apparatus 16; a correspondence information deletion reception part 35 which receives the correspondence information from the communications address conversion apparatus 16 after the finish of the communications directed to the IPv6 communications apparatus from the IPv4 communications apparatus; and a data transmission/reception part 36 which performs transmission and reception of data via the communications circuit.

The above-mentioned name solution part 31, the correspondence information notification part 34, the correspondence information deletion reception part 35, and the data transmission/reception part 36 are processing units embodied by execution of programs by the computer, respectively, for example.

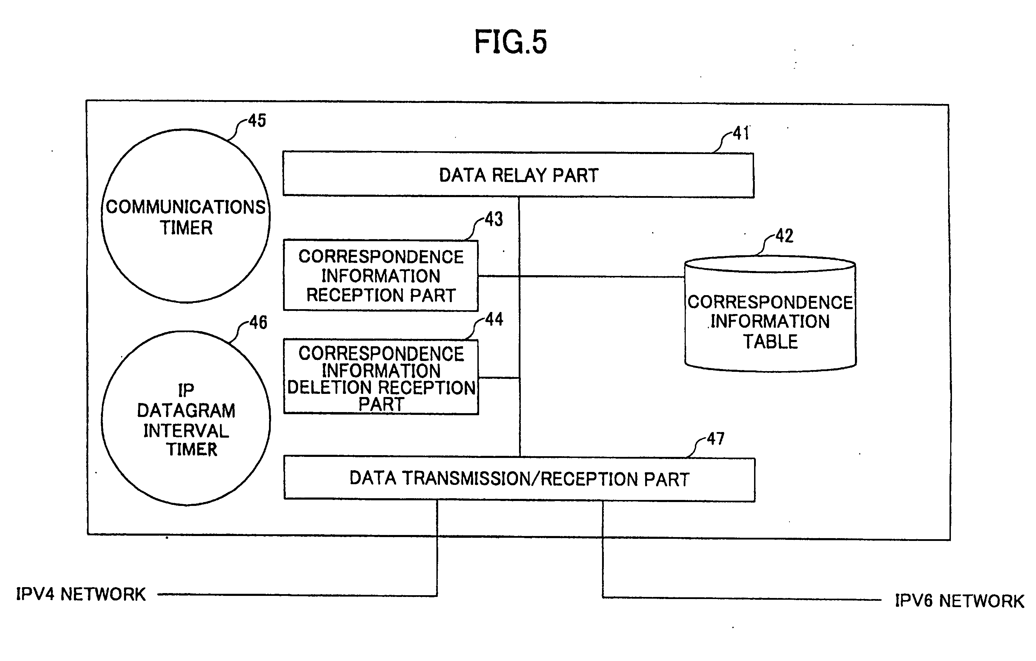

The above-mentioned communications address conversion apparatus will now be described. FIG. 5 is a configuration diagram of the communications address conversion apparatus. As shown in a FIG. 5, the communications address conversion apparatus 16 includes: a data relay part 41 which performs a relay operation for an IPV6 communications apparatus in response to a communications request for a temporary IPv4 address from an IPv4 communications apparatus based on the correspondence information; a correspondence information table 42 which manages the correspondence information; a correspondence information reception part 43 which receives the correspondence information given by the name solution apparatus 15; a correspondence information deletion notice part 44 which notifies the correspondence information to the name solution apparatus 15 after the end of the communications with the IPv6 communications apparatus by the IPv4 communications apparatus; a timer 45 which monitors a communications time; a timer 46 which monitors an interval of IP datagram; and a data transmission/reception part 47 by which communications are enabled between apparatuses belonging to the IPv4 network and IPv6 network.

The above-mentioned data relay part 41 which carries out the relay operation, the correspondence information reception part 43, the correspondence information deletion notice part 44, and the data transmission/reception part 47 are processing units which may be embodied by execution of software programs by a computer, respectively, for example.

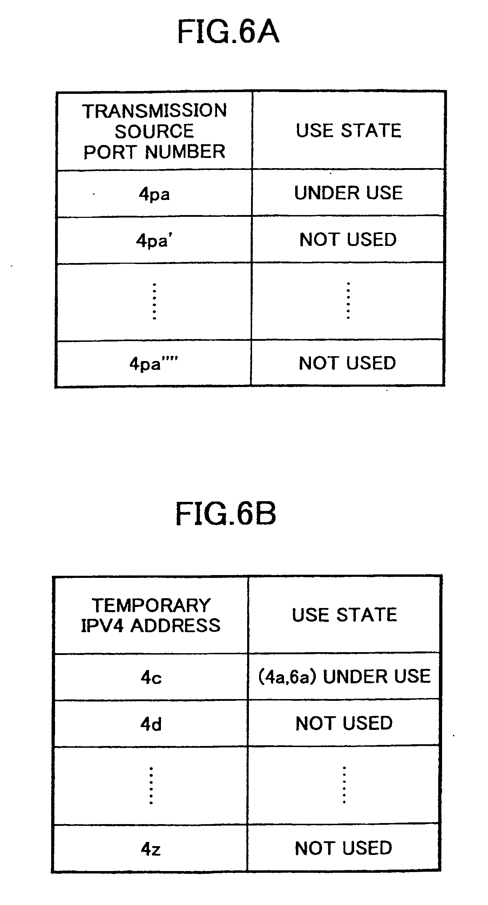

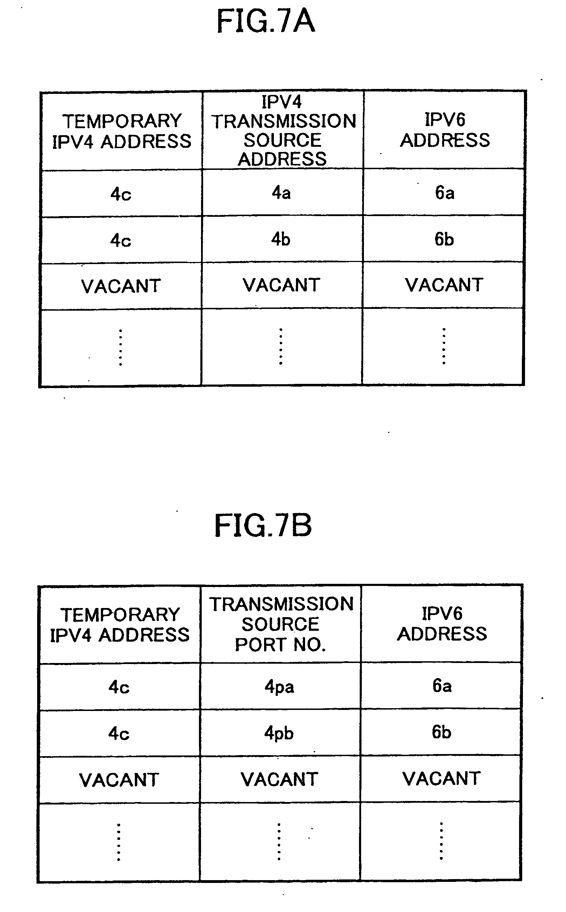

Next, the above-mentioned table data will now be described. FIG. 6A shows a transmission source port number table and FIG. 6B shows a temporary IPv4 address table. Similarly FIG. 7A shows a correspondence information table with IPv4 transmission source address and FIG. 7B shows a correspondence information table with transmission source port number.

The transmission source port number table shown in FIG. 6A is a table configured so that each pair of a transmission source port number and use state information which shows whether or not it is under use can be registered with information concerning a correspondence therebetween. For example, the use state of a port having the transmission source port number 4pa is "under use", while the use state of a port having the transmission source port number 4pa' is "not used."

Next, the temporary IPv4 address table shown in FIG. 6B is a table managed by the name solution apparatus 15. On this table, items for "temporary IPv4 address" and "use state" are provided, and data can be registered according to these items. Namely, on this temporary IPv4 address table, the "use state" which shows whether or not it is under use can be registered in a combination with a temporary IPv4 address, an IPv4 transmission source address and an IPv6 address, or a combination of a transmission source port number and an IPv6 address.

For example, the use state on the temporary IPv4 address 4c is "(4a, 6a) under use", while the use state on the temporary IPv4 address 4c is "not used."

The correspondence information table with IPv4 transmission source address shown in FIG. 7A is a correspondence information table for managing the correspondence information by the name solution apparatus 15 or the communications address conversion apparatus 16. This table is provided with items for "temporary IPv4 address", "IPv4 transmission source address" and "IPv6 address", and data can be registered according to these items. For example, as shown in the figure, temporary IPv4 address: 4c, IPv4 transmission source address: 4a and IPv6 address: 6a, while, in the next entry, IPv4 temporary address: 4c, IPv4 transmission source address 4b and IPv6 address: 6b.

Next, the correspondence information table with the transmission source port number shown in FIG. 7B is a correspondence information table for managing the correspondence information in the name solution apparatus 15 or the communications address conversion apparatus 16. Data can be registered according to respective items, i.e., "temporary IPv4 address", "transmission source port number", and "IPv6 address" on this table. In the example shown, temporary IPv4 address: 4c, transmission source port number: 4pa, and IPv6 address: 6a, while, on the next entry, temporary IPv4 address; 4c, transmission source port number: 4pb and IPv6 address: 6b.

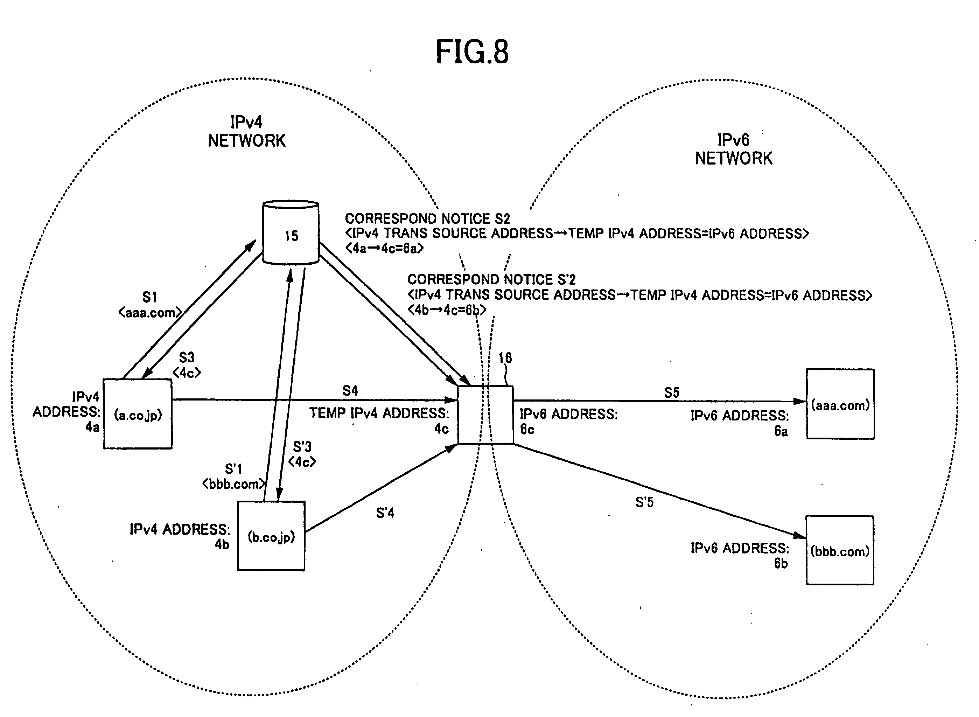

Next, a first communications method which can be carried out in the above-mentioned communications system according to the first embodiment of the present invention will now be described. FIG. 8 is a diagram illustrating this first communications method. The communications method concerned is a method for communicating from an IPv4 communications apparatus to an IPv6 communications apparatus based on the above-mentioned correspondence information table with the IPv4 transmission source address.

In FIG. 8, when communicating from an IPv4 communications apparatus (a.co.jp) to an IPv6 communications apparatus (aaa.com), the IPv4 communications apparatus (a.co.jp) asks as "a name solution request" to the name solution apparatus 15 for a temporary IPv4 address to "aaa.com" which is the name of the IPv6 communications apparatus (aaa.com) concerned (in a step S1 of FIG. 8). The name solution apparatus 15 which has received the name solution request from the IPv4 communications apparatus (a.co.jp) obtains an IPv4 address "4a" of the IPv4 communications apparatus (a.co.jp), and an IPv6 address "6a" of (aaa.com) which is the name of the IPv6 communications apparatus aaa.com in a predetermined manner. Then, a setting is made as "4a and 6a under use" which means that the IPv4 address 4a and the IPv6 address 6a are under use, for the temporary IPv4 address 4c selected, which has been vacant, from the temporary IPv4 address table 32 (see FIG. 4 and FIG. 6B).

Next, the above-mentioned IPv4 transmission source address 4a, temporary IPv4 address 4c, and IPv6 address 6a are saved to the correspondence information table 33 with the IPv4 transmission source address (see FIG. 4 and FIG. 7A). Moreover, this correspondence information concerned is also notified to the communications address conversion apparatus 16 (in a step S2 of FIG. 8). The communications address conversion apparatus 16 to which the correspondence information concerned was notified saves the correspondence information concerned to the correspondence information table with the IPv4 transmission source address (FIG. 7A). The name solution apparatus 15 then transmits the temporary IPv4 address "4c" as a reply to the name solution request from the IPv4 communications apparatus a.co.jp, after notifying the correspondence information concerned to the communications address conversion apparatus 16 (in a step S3 of FIG. 8).

The IPv4 communications apparatus a.co.jp which obtained the reply for the name solution request uses the temporary IPv4 address 4c concerned, and thus starts communications directly with the communications address conversion apparatus 16 (in a step S4 of FIG. 8). In the communications address conversion apparatus 16, "temporary IPv4 address 4c" as transmission destination address and "IPv4 transmission source address 4a" as "transmission source address" are read from the signal concerned received from the IPv4 communications apparatus a.co.jp.

Next, "6a" is obtained as the IPv6 address as a result of searching the correspondence information table (see FIG. 7A) with the transmission destination address 4c and the transmission source address 4a as key information. The communications address conversion apparatus 16 can relay the signal received from the IPv4 communications apparatus a.co.jp to the corresponding IPv6 communications apparatus aaa.com by using the thus-obtained IPv6 address 6a concerned (in a step S5 of FIG. 8).

Also, in a case where another communications request for an IPv6 communications apparatus (bbb.com) occurs from another IPv4 communications apparatus (b.co.jp) while the communications from the IPv4 communications apparatus a.co.jp to the IPv6 communications apparatus aaa.com is on operation, the same temporary IPv4 address "4c" may be chosen for example same as in the communications starting process on the above-mentioned IPv4 communications apparatus (a.co.jp), and then, new communications are started by using this temporary address "4c" (in steps S'1 and S'5 of FIG. 8) again. However, when the temporary IPv4 address "4c" is obtained, the use state of temporary IPv4 address "4c" has been already set as"4a, 6a under use" by the above-mentioned processing as mentioned above (FIG. 6B). In this case, it can be determined that this use state "4a, 6a" is not coincide with the new communications for (4b, 6b) requested by the new IPv4 transmission source "4b" for the IPv6 address "6b." Therefore, the same address "4c" can be chosen again as the temporary IPv4 address.

That is, according to this scheme, for each temporary IPv4 address, in case registration is made, IPv4 transmission source address and IPv6 transmission destination address in connection with the communications concerned are registered together. Consequently, the same temporary IPv4 address can be used for another occasion of communications on which an IPv4 transmission source address and an IPv6 transmission destination address in connection with the new occasion of communications concerned differ from the already registered ones. That is, since a temporary IPv4 address is registered combining a related IPv4 transmission source address and a related IPv6 transmission destination address together, duplicate use of the same temporary IPv4 address is allowed. Consequently, by this method, effective use of temporary IPv4 addresses is attained. Accordingly, it becomes possible to simultaneously respond to the number of communications requests several times the number of the actual total available number of the temporary addresses.

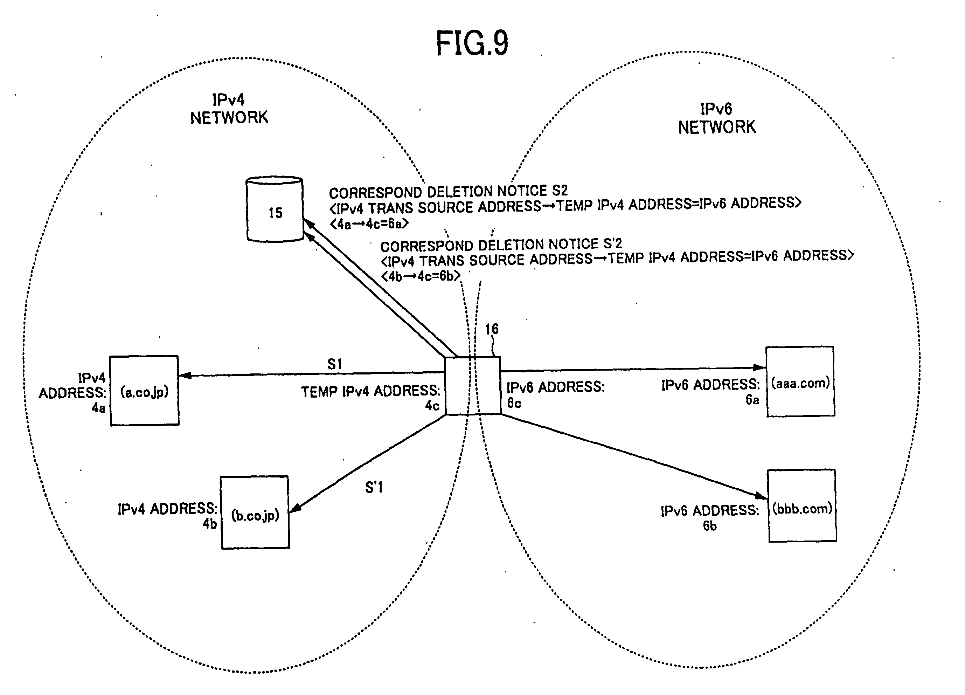

Next, how to delete correspondence information, once registered, from the correspondence information table with the IPv4 transmission source address will now be described. FIG. 9 is a diagram showing how to delete from the correspondence information table with the IPv4 transmission source address. This method is a method for deleting the correspondence information concerned after the end of the communications with the IPv6 communications apparatus started as described above based on the correspondence information table with the IPv4 transmission source address (FIG. 7A) from the IPv4 communications apparatus. As a result of such deletion, it is possible to create a state such that the temporary IPv4 address can be reused freely.

As shown in FIG. 9, when communications are started from the IPv4 communications apparatus a.co.jp to the IPv6 communications apparatus aaa.com (in a step S1 FIG. 9), with the communications address conversion apparatus 16, the timer 45 (see FIG. 5) which monitors the above-mentioned communications time, and the timer 46 which monitors the interval of IP datagram are started. Whenever the timer which monitors the interval of IP datagram receives an IP datagram, it resets the measurement value once, and, thus, monitors the interval on the latest IP datagram.

For example, in case a deadline time of the timer which monitors the communications time is set as 5 minutes while a deadline time of the timer which monitors the interval of IP datagram is set as 5 seconds, when the measurement value of the timer which monitors the communications time passes 5 minutes, or when the measurement value of the timer which monitors the interval of IP datagram passes 5 seconds, it is determined that the occasion of communications concerned are finished. Then, the correspondence information concerned is deleted from the correspondence information table with the IPv4 transmission source address currently held in the communications address conversion apparatus 16. Moreover, a notice of correspondence information deletion for deleting the above-mentioned correspondence information is sent out from the communications address conversion apparatus 16 to the name solution apparatus 15 simultaneously (in a step S2 of FIG. 9). The name solution apparatus 15 having the correspondence information concerned notified then deletes the corresponding correspondence information from the own correspondence information table with the IPv4 transmission source address.

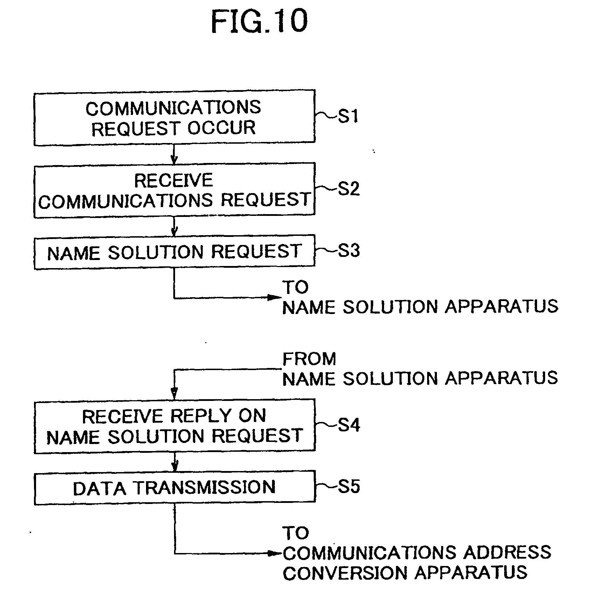

Next, processing performed by each apparatus will now be described in detail. First, processing of each IPv4 communications apparatus will now be described. FIG. 10 shows a processing flow chart of each IPv4 communications apparatus. When a communications request for an IPv6 communications apparatus aaa.com occurs from an IPv4 communications apparatus (in a step S1), the communications are received in the communications request reception part 22 (in a step S2), and the name solution request for the IPv6 communications apparatus aaa.com to the name solution apparatus 15 is issued from the name solution inquiry part 23 to the data transmission/reception part 25 (in a step S3). After that, the data transmission/reception part 25 receives a reply on the name solution request from the name solution apparatus 15 (in a step S4), a temporary IPv4 address is read from the reply in the name solution inquiry part 23, and then, data transmission using the temporary IPv4 address is made from the communications request reception part 22 to the data transmission/reception part 25 (in a step S5).

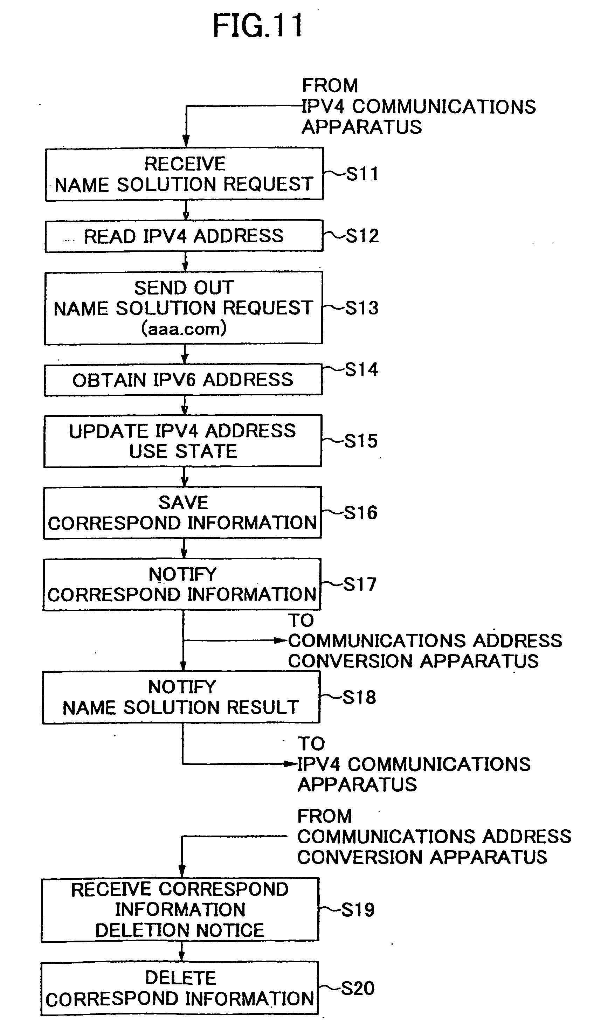

Next, processing of the name solution apparatus will now be described. FIG. 11 shows a processing flow chart on the name solution apparatus. When the name solution request from the IPv4 communications apparatus is received in the data transmission/reception part 36 of the name solution apparatus 15 (in a step S11), the name solution request (aaa.com) for an IPv6 communications apparatus is read out from the received signal (in a step S12), and the name solution request for the relevant IPv6 communications apparatus (aaa.com) is transferred to the data transmission/reception part 36 (in a step S13). The predetermined name solution table is searched by the name solution part 31 by using the name solution request concerned as key information, and thus, the IPv6 address of the relevant IPv6 communications apparatus is obtained (in a step S14).

Then, setting is made as "4a and 6a under use" in the temporary IPv4 address table as the use state of the temporary IPv4 address "4c" concerned (in a step S15). Further, in the correspondence information table with the IPv4 transmission source address, the three items, i.e., the IPv4 address of the IPv4 communications apparatus concerned, the IPv6 address of the IPv6 communications apparatus, and the temporary IPv4 address are saved as the correspondence information (in a step S16). Then, the correspondence information notice part 34 makes a transmission request directed to the communications address conversion apparatus 16 for the above-mentioned correspondence information to the data transmission/reception part 36 (in a step S17). Next, the name solution part 31 makes a transmission request directed to the data transmission/reception part 36 for the temporary IPv4 address concerned as a reply on the name solution request made from the IPv4 communications apparatus (in a step S18).

On the other hand, in the data transmission/reception part 36 of the name solution apparatus 15, when "notice of correspondence information deletion" mentioned above is received from the communications address conversion apparatus 16 (in a step S19), this is sent to the information deletion reception part 34, and, based on the notified correspondence information, the relevant correspondence information is deleted from the correspondence information table (in a step S20).

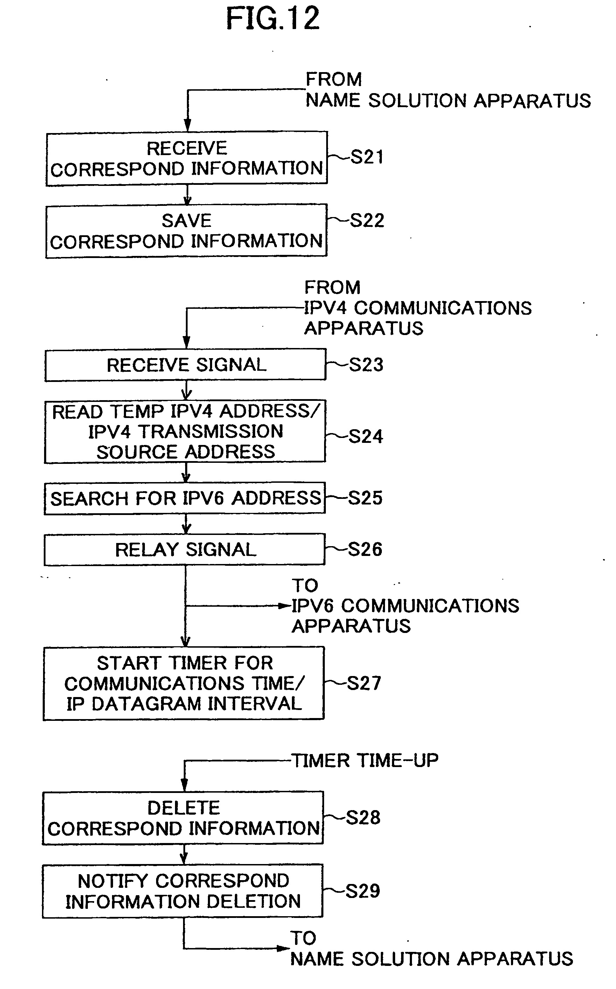

Next, processing of the communications address conversion apparatus will now be described. FIG. 12 shows a processing flow chart of the communications address conversion apparatus. In the data transmission/reception part 47 of the communications address conversion apparatus 16, when the above-mentioned correspondence information is received from the name solution apparatus 15 (in a step S21), the correspondence information concerned is read by the correspondence information reception part 43, and it is saved into the correspondence information table 42 (in a step S22).

Then, in the data transmission/reception part 47 of the communications address conversion apparatus 16, when the signal directed to the temporary IPv4 address is received from the IPv4 communications apparatus (in a step S23), the temporary IPv4 address and the IPv4 transmission source address are read out therefrom (in a step S24), and these temporary IPv4 address and IPv4 transmission source address are used as key information in searching for the IPv6 address from the correspondence information table 42(in a step S25). Next, the signal received from the IPv4 communications apparatus is relayed using the IPv6 address thus obtained (in a step S26). At this time, the timer which monitors the communications time, and the timer which monitors the interval of IP datagram are started (in a step S27). And when the timer which monitors the interval of IP datagram or the timer which monitors the communications time measures into the time-up value, the correspondence information in connection with the communications monitored by the timer is deleted from the correspondence information table 42 (in a step S28). Next, from the correspondence information deletion notice part 44, the notice of correspondence information deletion is sent to the data transmission/reception part 47 for the name solution apparatus 15 (in a step S29).

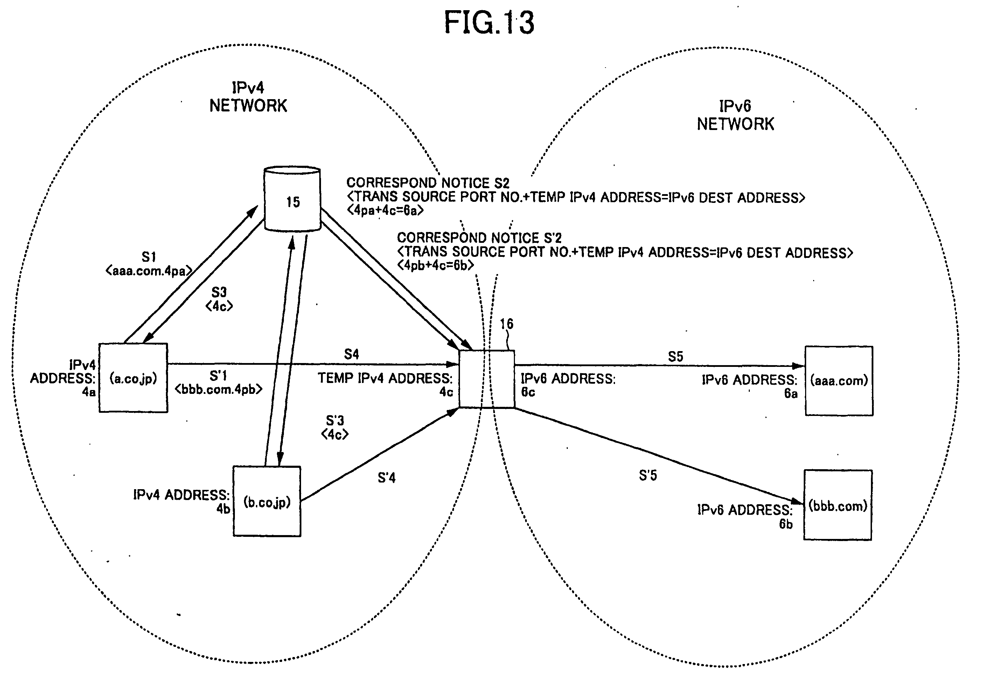

Next, a second communications method which may instead be performed by the first embodiment of the present invention will now be described. FIG. 13 is a diagram of the second communications method according to the first embodiment of the present invention. The communications method concerned is a method of performing communications to an IPv6 communications apparatus from an IPv4 communications apparatus based on the correspondence information table with the "transmission source port number."

For example, when communicating from an IPv4 communications apparatus "a.co.jp" to an IPv6 communications apparatus "aaa.com" as in the above-mentioned first method, the IPv4 communications apparatus a.co.jp asks a temporary IPv4 address for "aaa.com" which is a name of the IPv6 communications apparatus "aaa.com" as a name solution request to the name solution apparatus 15 (in a step S1 of FIG. 13). At this time, the IPv4 communications apparatus a.co.jp notifies a port number 4pa to the name solution apparatus 15, which port number corresponds to a transmission source port (or an application identifier) used by this IPv4 communications apparatus in the communications at this time with the IPv6 communications apparatus aaa.com.

The name solution apparatus 15 which has received the name solution request from the IPv4 communications apparatus a.co.jp obtains the IPv4 address "4a" of the IPv4 communications apparatus a.co.jp, and the IPv6 address "6a" of the IPv6 communications apparatus aaa.com. And a temporary IPv4 address which is vacant in the temporary address table currently held, for example, "4c", is chosen therefrom, and setting is made as "4pa and 6a under use" there which means that the relevant temporary IPv4 address 4c is under use in connection with the transmission source port number 4pa and the IPv6 address 6a.

Next, the transmission source port number 4pa, temporary IPv4 address 4c, and IPv6 address 6a are saved in "the correspondence information table with the transmission source port number". The correspondence information concerned is also notified to the communications address conversion apparatus 16 (in a step S2 of FIG. 13). The communications address conversion apparatus 16 having the correspondence information notified thereto then saves this correspondence information to "the correspondence information table with the transmission source port number" there too.

The name solution apparatus 15 transmits the temporary IPv4 address "4c" as a reply to the name solution request from the IPv4 communications apparatus a.co.jp, after notifying the correspondence information concerned to the communications address conversion apparatus 16 (in a step S3 of FIG. 13). The IPv4 communications apparatus a.co.jp which has obtained the reply to the name solution request uses the thus-obtained temporary IPv4 address 4c, and starts communications directed to the communications address conversion apparatus 16 (in a step S4 of FIG. 13).

In the communications address conversion apparatus 16, the temporary IPv4 address 4c and the transmission source port number 4pa are read from the signal then received from the IPv4 communications apparatus a.co.jp. Then, the temporary IPv4 address 4c and transmission source port number 4pa are used as a key, the correspondence information table is searched, and thus, the corresponding IPv6 address 6a is obtained therefrom. As a result, the communications address conversion apparatus 16 becomes possible to relay the signal received from the IPv4 communications apparatus a.co.jp to the IPv6 communications apparatus aaa.com (in a step S5 of FIG. 13).

Moreover, while communications are made from the IPv4 communications apparatus a.co.jp to the IPv6 communications apparatus aaa.com, even in a case where another communications request for an IPv6 communications apparatus "bbb.com" occurs from another IPv4 communications apparatus "b.co.jp", or the like, the same temporary IPv4 address "4c" may be again used for the IPv4 communications apparatus b.co.jp directed to the IPv6 communications apparatus bbb.com, for example, and, then, by using it, relevant communicates can be made (in a steps S'1 through S'5 of FIG. 13). In this case, when the temporary IPv4 address is obtained, the use state of the temporary IPv4 address "4c" is already set as "4pa, 6a", and newly requested communications on the transmission source port number "4pb" can be determined as not being coincident therewith as having the different port number, and as a result, the same temporary address 4c can be allocated again.

That is, by this method, since each temporary IPv4 address is registered combining a related transmission source port number, many-times/multiple use of the same temporary IPv4 address is attained. Consequently, also by this method, effective use of temporary IPv4 addresses is attained. Thereby, it is possible to respond to the number of communications requests several times the number of the actual total available number of temporary addresses.

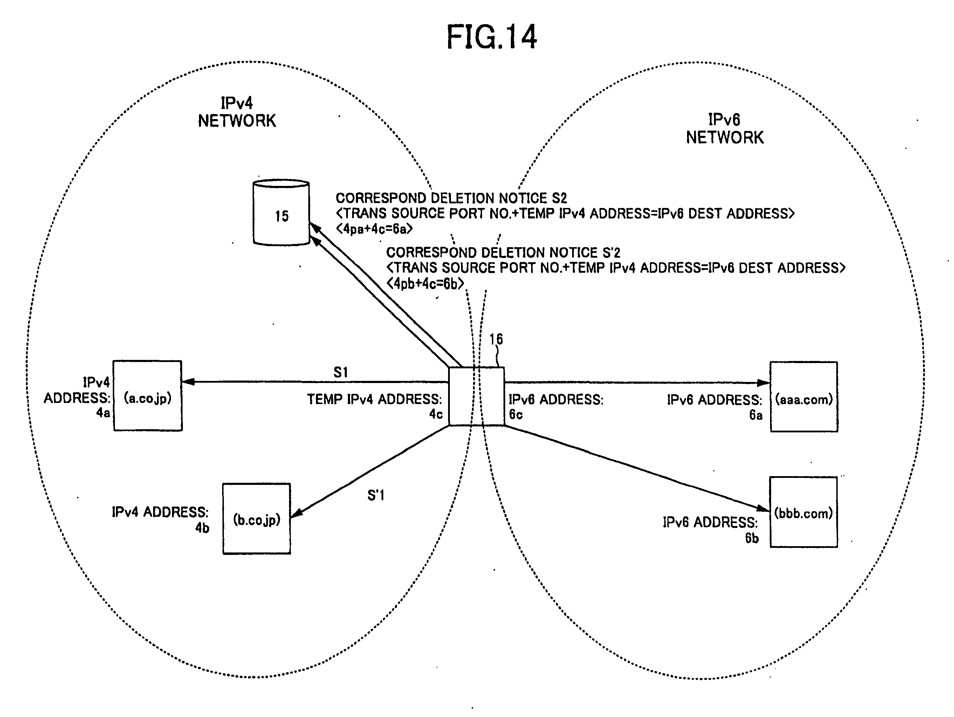

Next, how to delete correspondence information from the correspondence information table with the transmission source port number will now be described. FIG. 14 is a diagram illustrating a method of deleting from the correspondence information table with the transmission source port number. This method is a method of deleting correspondence information from the correspondence information table after the end of the communications directed to the an IPv6 communications apparatus started based on "the same correspondence information of the correspondence information table with the transmission source port number,", thereby enabling reuse of the relevant temporary IPv4 address.

When communications are started from the IPv4 communications apparatus a.co.jp to the IPv6 communications apparatus aaa.com (in a step S1 of FIG. 14) with communications address conversion apparatus 16, the timer which monitors communications time, and the timer which monitors the interval of IP datagram are started. Whenever the timer which monitors the interval of IP datagram receives an IP datagram, it resets its measured value, and thus, it monitors the interval of the latest IP datagram. The actual operation and determination of the end of relevant communications are the same as those described above in the description of the first method. When the end of the communications is determined, the corresponding correspondence information is deleted from the correspondence information table with the transmission source port number.

A fact that a combination of a communications address (i.e., temporary address) assigned as an identifier indicating the communications apparatus at the other end together with an address of the transmission source communications apparatus or the application identifier (i.e., the transmission source port number in this case) is used for relevant communications is notified to the name solution apparatus from the communications address conversion apparatus 16. And also, a notice of the correspondence information deletion for deleting the correspondence information on the above-mentioned combination is sent to the name solution apparatus from the communications address conversion apparatus 16 after a predetermined time has elapsed, which time is determined beforehand, since the relevant communications were started (in a step S2 of FIG. 14). The name solution apparatus 15 to which the above-mentioned notice of correspondence information deletion is notified then deletes the corresponding correspondence information from the correspondence information table with the transmission source port number.

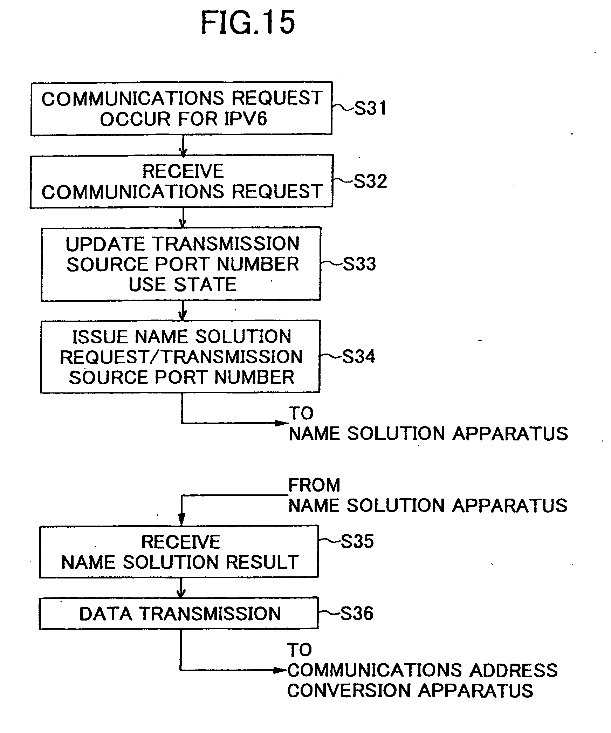

Next, processing of each apparatus in this second method will be described. Processing of each IPv4 communications apparatus will now be described first. FIG. 15 shows a processing flow chart of each IPv4 communications apparatus. When a communications request to the IPv6 communications apparatus aaa.com occurs from the IPv4 communications apparatus (in a step S31), a communications request concerned is received in the communications request reception part 22 (in a step S32). Then, from the transmission source port number table 24, a port number currently not used is extracted, and this transmission source port number is registered into the state under use (in a step S33). Next, a name solution request for the IPv6 communications apparatus to the name solution apparatus 15 and the notice of a transmission source port number are issued from the name solution inquiry part 23 to the data transmission/reception part 25 (in a step S34).

Then, after a reply to the name solution request is received from the name solution apparatus 15 in the data transmission/reception part 25, a temporary IPv4 address is read therefrom in the name solution inquiry part 23 (in a step S35), and data transmission using the thus-obtained temporary IPv4 address is started from the communications request reception part 22 to the data transmission/reception part 25 (in a step S36).

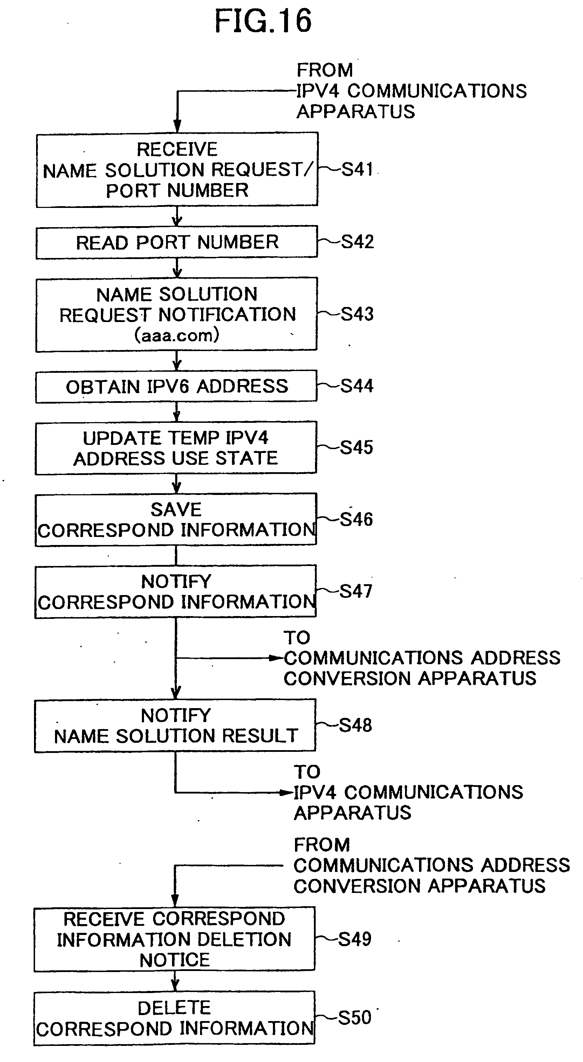

Next, processing of the name solution apparatus will now be described. FIG. 16 shows a processing flow chart of name solution apparatus. In the data transmission/reception part 36 of the name solution apparatus 15, when a name solution request and a notice of a transmission source port number are received from the IPv4 communications apparatus (in a step S41), the transmission source port number concerned is read therefrom (in a step S42), and the name solution request (aaa.com) from IPv4 communications apparatus is notified to the name solution part 31 (in a step S43). Then, the IPv6 address for the relevant IPv6 communications apparatus is obtained according to a predetermined name solution table in the name solution part 31 (in a step S44). Then, an address for which the use state of the temporary IPv4 address is not "4pa, 6a" is searched for from the temporary IPv4 address table 32. When, for example, the temporary IPv4 address "4c" is chosen as a result, setting is made as "4pa and 6a under use" for this temporary IPv4 address (in a step S45).

Next, into "the correspondence information table with the transmission source port number" among the correspondence information tables 33, the transmission source port number of the above-mentioned IPv4 communications apparatus, IPv6 address of IPv6 communications apparatus, and temporary IPv4 address are saved as correspondence information (in a step S46). The correspondence information notice part 34 makes a transmission request to the communications address conversion apparatus 16 with this correspondence information directed to the data transmission/reception part 36 (in a step S47). Next, in the name solution part 31, a transmission request is made to the data transmission/reception part 36 with the temporary IPv4 address as a reply to the name solution request from the IPv4 communications apparatus (in a step S48).

When a correspondence information deletion notice is received from the communications address conversion apparatus 16 in the data transmission/reception part 36 of the name solution apparatus 15 (in a step S49), this notice is transferred to the information deletion reception part 35. Then, the notified correspondence information is used as a key, the relevant correspondence information is acquired and deleted from the correspondence information table 33 (in a step S50).

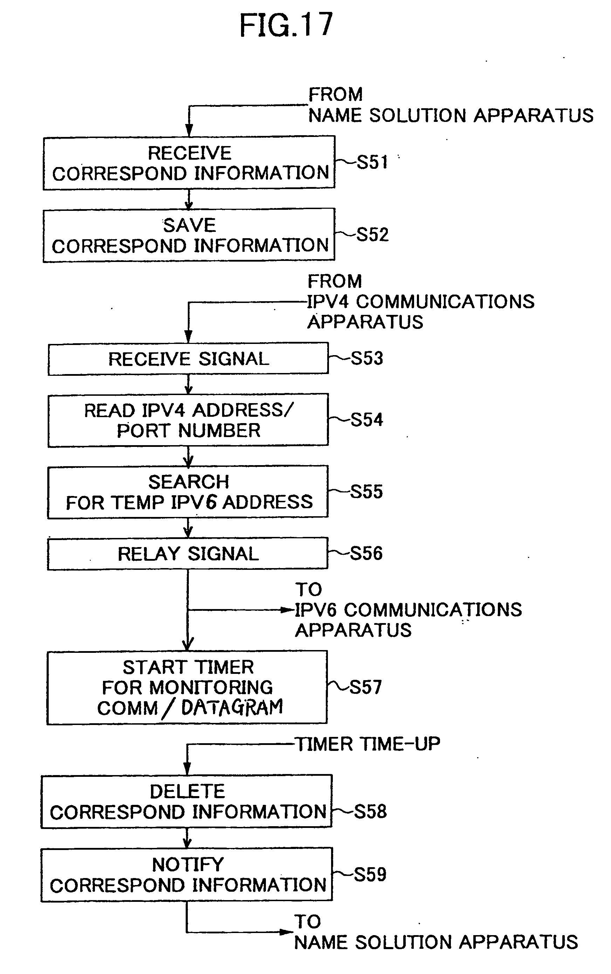

Next, processing of the communications address conversion apparatus will now be described. FIG. 17 shows a processing flow chart of the communications address conversion apparatus. In the data transmission/reception part 47 of the communications address conversion apparatus 16, when correspondence information is received from the name solution apparatus 15 (in a step S51), the correspondence information concerned is read out by the correspondence information reception part 43, and, then, the contents thereof are saved into the correspondence information table 42 (in a step S52).

Next, in the data transmission/reception part 47 of the communications address conversion apparatus 16, when a signal for the temporary IPv4 address is received from the IPv4 communications apparatus (in a step S53), the temporary IPv4 address and transmission source port number (in a step S54) are read out therefrom, and the relevant IPv6 address is searched by the data relay part 41 from the correspondence information table 42 by using the temporary IPv4 address concerned and transmission source port number as a key (in a step S55).

Next, the signal received from the IPv4 communications apparatus is relayed by using the IPv6 address by the data relay part (in a step S56). At this time, the timer which monitors the communications time, and the timer which monitors the interval of IP datagram are started (in a step S57). And when the timer which monitors the communications time, or the timer which monitors the interval of IP datagram measures into the deadline, the correspondence information related to the communications monitored by the timer is deleted from the correspondence information table (in a step S58). Then, from the correspondence information deletion notice part 44, the correspondence information deletion notice is sent to the data transmission/reception part 47 for the name solution apparatus 15 (in a step S59).

The above-described first embodiment of the present invention has the following features: That is, according to the first method of the embodiment, an IPv6 address is identified from a combination of an IPv4 transmission source address and a temporary IPv4 address. For this reason, as long as IPv4 transmission source addresses differ, a same temporary IPv4 address can be used (multiple use) for identify a plurality of IPv6 communications apparatuses even in a case, simultaneously, a plurality of communications requests occur from a plurality of IPv4 communications apparatuses for a plurality of IPv6 communications apparatuses. Moreover, similarly, according to the second method, as an IPv6 address is identified from a combination of a relevant transmission source port number and an allocated temporary IPv4 address, as long as transmission source port numbers differ, the same temporary IPv4 address can be used many times at the same time.

In a case according to the second method, in which an IPv6 address is identified from a combination of a transmission source port number and a temporary IPv4 address, it is possible to deal with two types of cases, i.e., a first case in which communications requests occur to a plurality of IPv6 communications apparatuses from a plurality of IPv4 communications apparatuses; and a second case in which communications requests occur to a plurality of IPv6 communications apparatus from a single IPv4 communications apparatus.

Thus, since multiple use of same temporary IPv4 address can be simultaneously carried out according to the first embodiment of the present invention, the required total available number of temporary IPv4 addresses to be assigned to the communications address conversion apparatus 16 can be effectively reduced. As a result, it becomes possible to perform relay operation covering a large-scale communications between an IPv4 network and an IPv6 network with a reduced total available number of temporary IPv4 addresses needed at the same time.

Next, description will now be made for a further detailed apparatus configuration example of the above-described first embodiment of the present invention, and, also, for a case where the present invention is applied to a recording medium. The above-mentioned name solution apparatus 15 and communications address conversion apparatus 16 may be embodied by any type of computer, such as a workstation, a personal computer, or the like. In this case, the system includes a computer body, a display unit connected to the computer body, an input device (keyboard/mouse), a removable disk drive, a hard disk drive unit, etc.

A CPU which performs various internal control and internal processing, a ROM (non-volatile memory) for storing programs and various types of data, a work memory, an interface control part (I/F control part), a communications control part, etc. are provided in the computer body. A flexible disk drive, an optical disk drive, or the like may be used as the above-mentioned removable disk drive. In this computer system, the above-described various types of processing can be performed by storing a program for executing the processing of the name solution apparatus 15 and communications address conversion apparatus 16 in a magnetic disk (recording medium) of the hard disk drive unit, and reading this program and performing it by the CPU.

The program may be installed into the hard disk drive instead by the following method, and, after that, the program is executed by the CPU: That is, the program (which may be created by another computer system) stored in the removable disk is read by the removable disk drive, and is stored/installed into the recording medium of the hard disk drive unit. Alternatively, the program which may be transmitted from another computer system through a communications circuit, is received through the communications control part, and is stored/installed into the recording medium (magnetic disk) of the hard disk drive unit.

Next, problems which the above-described first embodiment of the present invention may involve will now be described. That is, according to the first embodiment of the present invention, the above-described respective processes may not be performed properly, in a case where name solution and actual communications may be performed by means of different communications interfaces where the plurality of communications interfaces are employed there, or in a case where an actual transmission source address of communications becomes different from a transmission source address on name solution where many name solution processes are performed for each communications occasion, or the like.

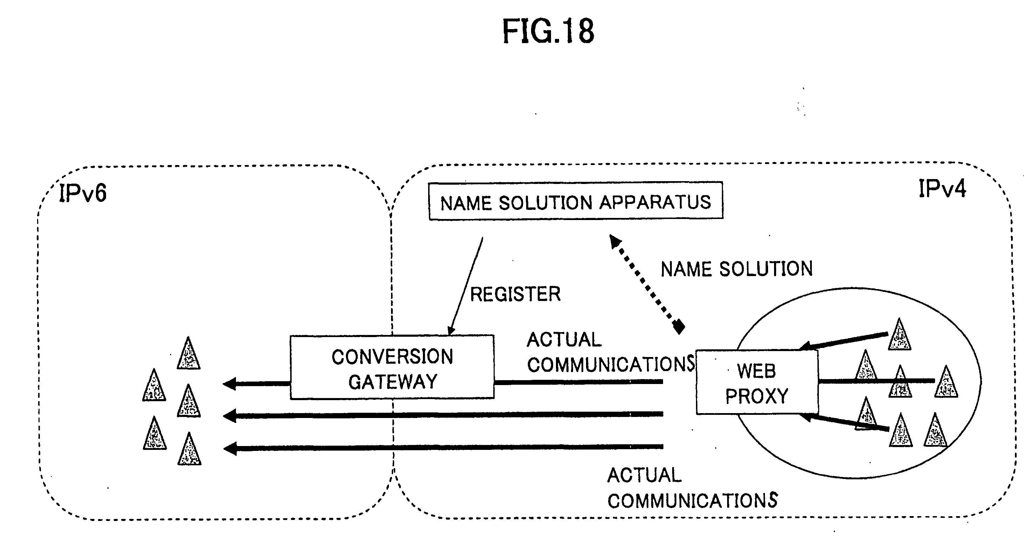

For example, a case of FIG. 18 will now be discussed, in which a communications apparatus which has an IPv4 address performs communications, via a substitute server, such as a web proxy server, with a communications apparatus of ^{T}Pv6. In this case, the IPv4 address of the transmission source related with an IPv4 temporary address may be changed into a substitute server's IPv4 address, and thus, may not become the own IPv4 address of the IPv4 communications apparatus which required the communications with the communications apparatus of the IPv6 network.

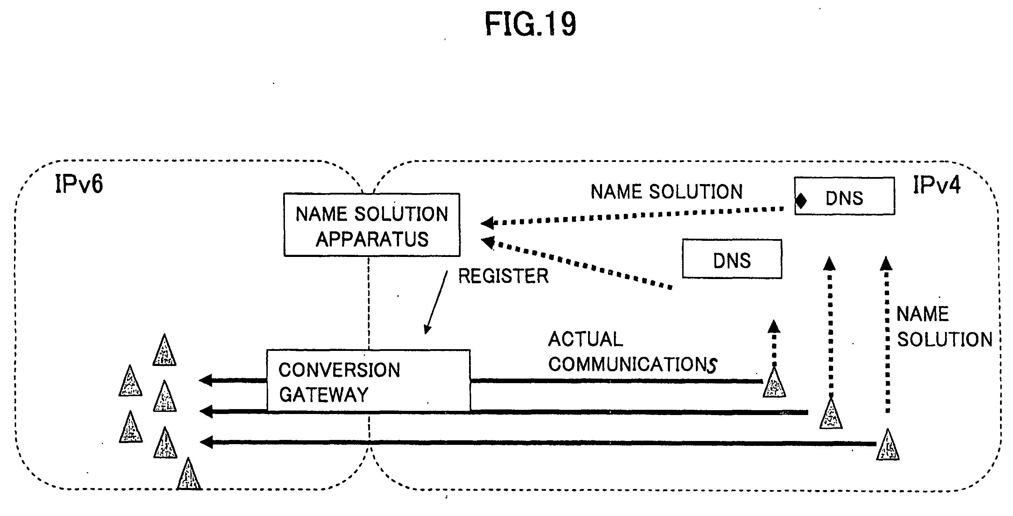

In another case, as shown in a FIG. 19, in case of multiple use of name solution apparatus, such as DNS, the IPv4 address of the transmission source related with an IPv4 temporary address may be changed into an IPv4 address of the name solution apparatus, and may not become the own IPv4 address of IPv4 communications apparatus which required the communications with the communications apparatus of the IPv6 network.

A second embodiment of the present invention has been devised for the purpose of solving such a problem. According to the second embodiment of the present invention, inconsistency in transmission source address is prevented from occurring between on name solution and on actual communications occasion by performing registration of transmission source address, not at a time of name solution but at a time an actual communications occur.

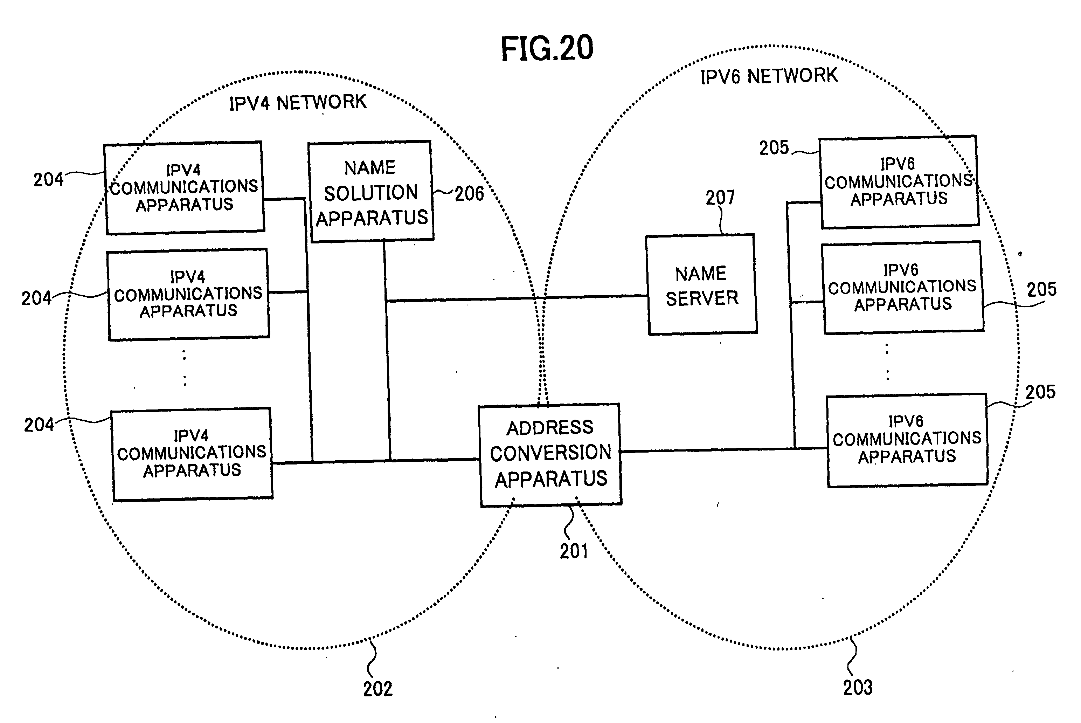

FIG. 20 shows a configuration of the second embodiment of the present invention. A communications system according to the second embodiment includes: communications apparatuses 204 on IPv4 network 202 (simply referred to as IPv4 communications apparatuses, hereinafter), communications apparatuses 205 on Pv6 network 203 (simply referred to as IPv6 communications apparatuses, hereinafter), a name solution apparatus 206 which changes a given name of IPv6 communications apparatus 205 into a relevant communications address, an address conversion apparatus 201 which relays communications between the IPv4 network and the IPv6 network, and a name server 207 which stores correspondence information indicating correspondence between each communications apparatus and corresponding IP address, and changes a given name into a corresponding IP address.

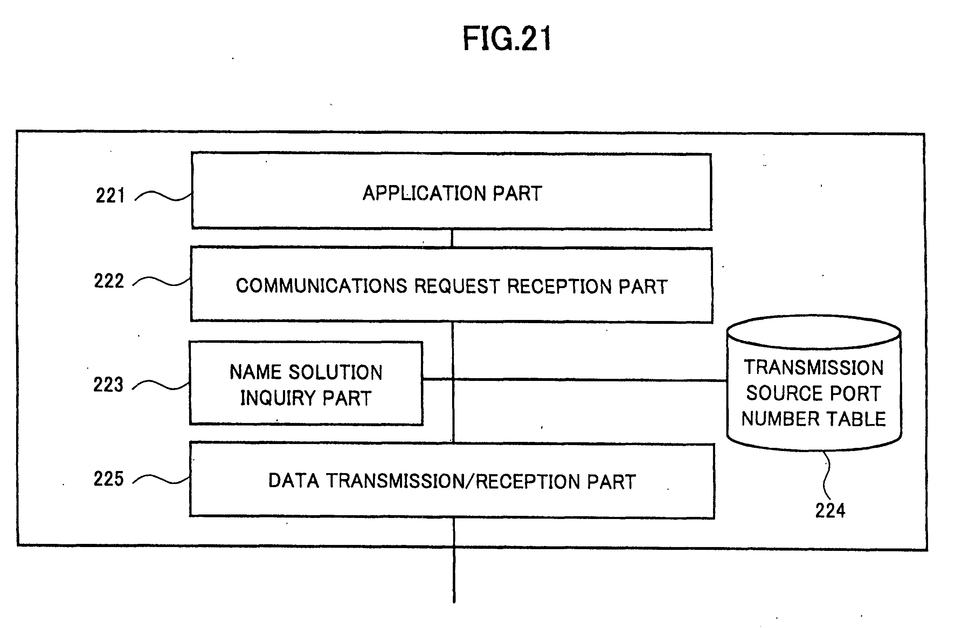

FIG. 21 shows a configuration of each IPv4 communications apparatus 204. As shown in the figure, the IPv4 communications apparatus 204 includes: an application part 221 which makes a communications request, a communications request reception part 222 which receives the communication request for an IPv6 communications apparatus 205 sent from the application part, a name solution inquiry part 223 which asks the name solution apparatus 206 a destination address in IPv4 address based on a given host name of the IPv6 communication apparatus 205, and a transmission source port number table 224 managing transmission port numbers used in communications occasions, and a data transmission/reception part 225.

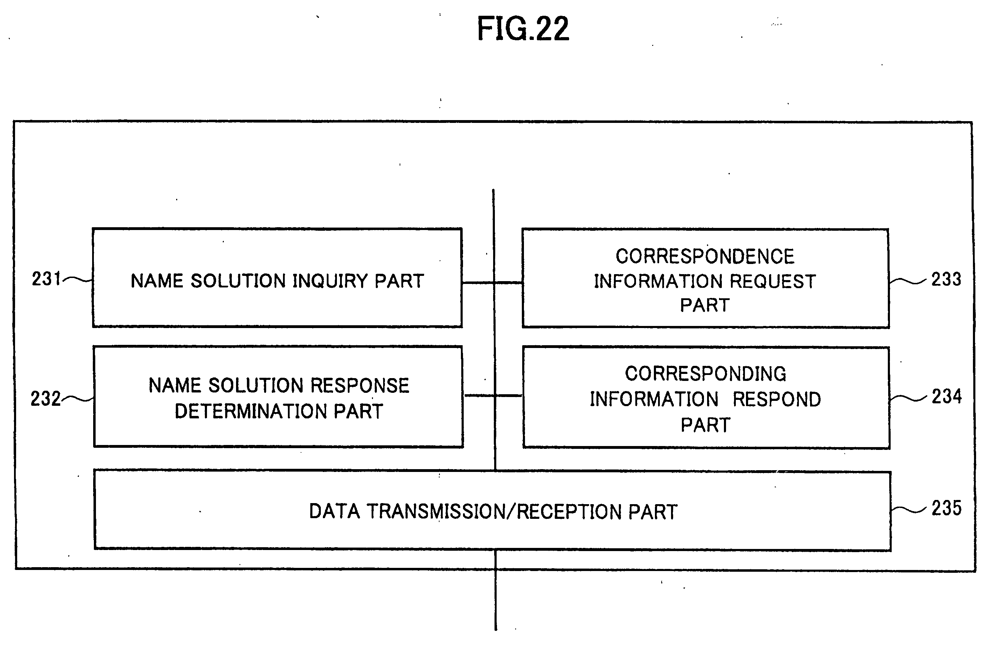

FIG. 22 shows a configuration diagram of the name solution apparatus 206. The name solution apparatus 206 includes a name inquiry part 231 which inquires of the name server 207 with a given host name, a determination part 232 which determines, from a result of the above-mentioned inquiry, whether or not it is necessary to make a correspondence for the address for another address system, a correspondence inquiry part 233 which inquires a correspondence in case the correspondence is needed, a correspondence information response part 234 which responds to the communications apparatus which required the name solution concerned with the correspondence result, and a data transmission/reception part 235.

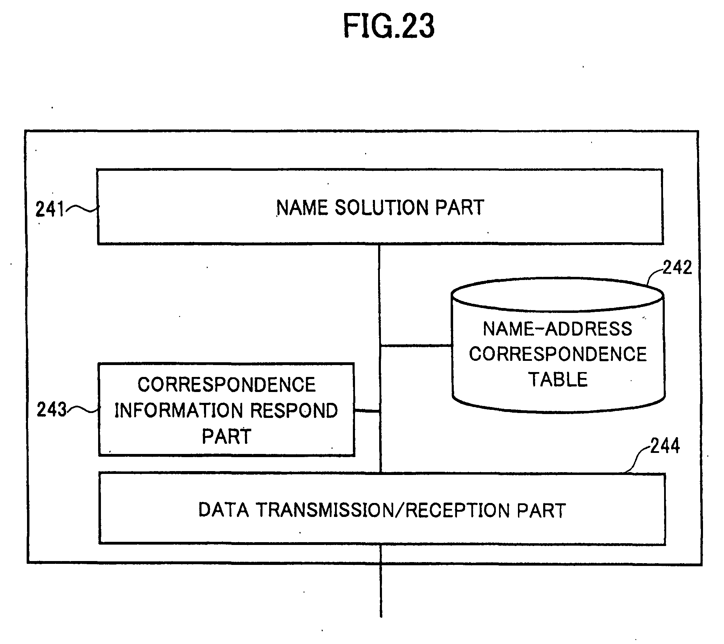

FIG. 23 shows a configuration diagram of the name server 207. The name server 207, which receives a name solution request, includes a name-address correspondence table 242 holding a correspondence between a given name and an address thereof, a name solution part 241 which searches for an address assigned from a given name using the name-address correspondence table 242 so as to solves the name, a correspondence information response part 243 which responds a name solution request source with a solution result, and a data transmission/reception part 244.

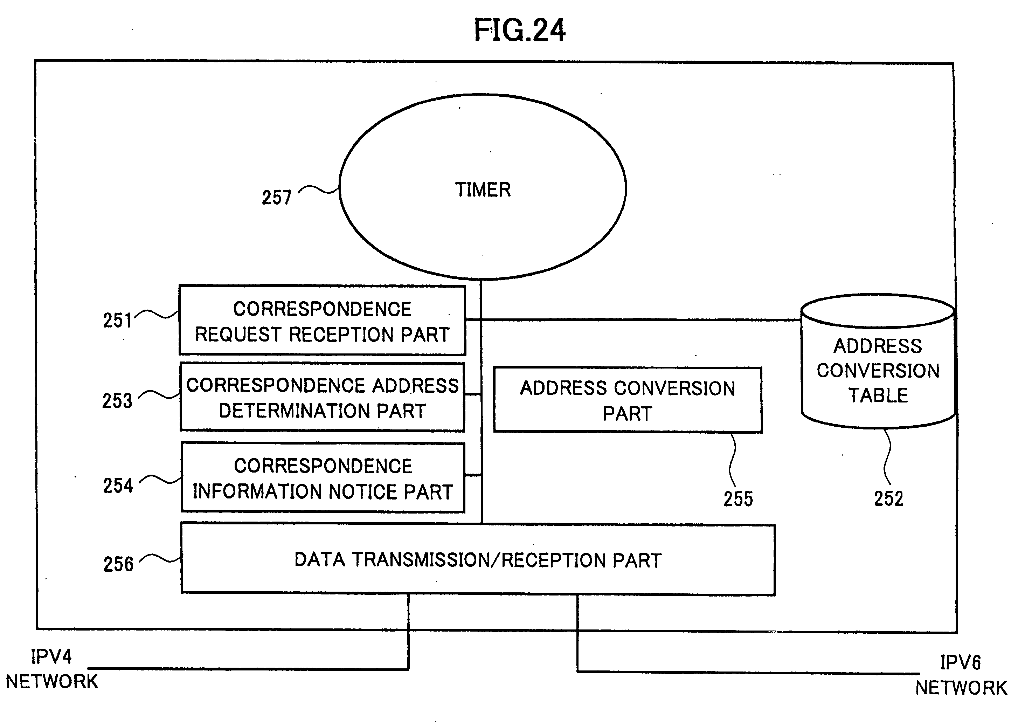

FIG. 24 shows a configuration diagram of the address conversion apparatus 201. The address conversion apparatus 201 includes: a correspondence request reception part 251 which receives a correspondence request for a temporary IPv4 address sent from the name solution apparatus 206, a correspondence address determination part 253 which assigns a temporary IPv4 address by searching an address conversion table 252 in response to a request, a correspondence information notice part 254 which responds the name solution apparatus 206 with a correspondence result, an address conversion part 255 which receives actual communications, and appropriately converts a given address by searching the address conversion table 252, a data communications part 256 and a timer 257 which measures an existence time for every entry of "temporary allocated" state remaining on the address conversion table 252.

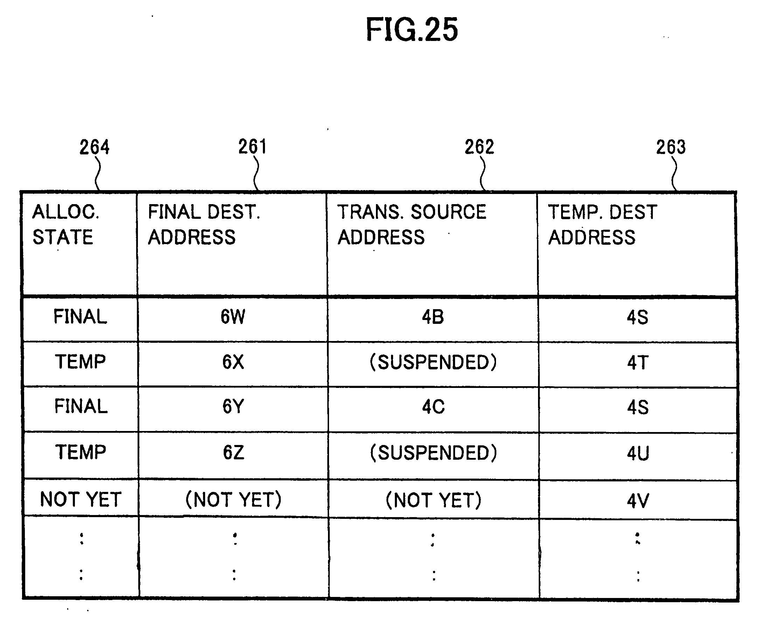

FIG. 25 shows an example of the contents of the address conversion table 252 which the address conversion apparatus 201 holds. The address conversion table 252 includes a plurality of entries each having the following items, i.e., a final destination address 261 which shows a final IP address of a different address management system from that of a source communications apparatus concerned, a transmission source address 262 which shows a transmission source IP address of the communications apparatus, a temporary destination address 263 used for identifying the address of a communications destination of the address management system different from that of the communications apparatus of the transmission source, and an allocation state 264 which shows an allocation state of the entry.

The number of the respective entries of the address conversion table 252 is at least the total available IPv4 addresses which can be allocated temporarily for the IPv6 network 203 from the IPv4 network. Further, at least one entry is provided for each IPv4 address which is temporarily allocated, and, an IPv4 address is beforehand set in the temporary destination address 263 thereof. When the allocation state 264 is of finally allocated, the temporary address 263 specified by the transmission source of the transmission source address 262 is converted into the final destination address 261.

A plurality of entries can be set for a same temporary destination address 263 on which the allocation state 264 is of finally allocated, having the transmission source addresses 262 and the final destination addresses 261 each different from one another. Although the temporary destination address 263 is finally allocated to the final destination address 261, the transmission source address 262 is in a "suspension" state while the allocation state 264 is of "temporary allocated".

At a stage at which the communications apparatus indicates this temporary destination address 263 so as to start actual communications, the address conversion apparatus 201 which receives it registers the transmission source IP address of this communications apparatus as the transmission source address 262 of the relevant "temporary allocated" entry, and, then, changes the allocation state thereof from of "temporary allocated" into of "finally allocated". However, not a plurality of entries can exist whose allocation state 264 is of "temporary allocated", having the same temporary destination address 263. Thereby, when a communications apparatus indicates this temporary destination address 263 and starts actual communications, the final destination address 261 can be prevented from being obtained through erroneous conversion from the temporary destination address 263.

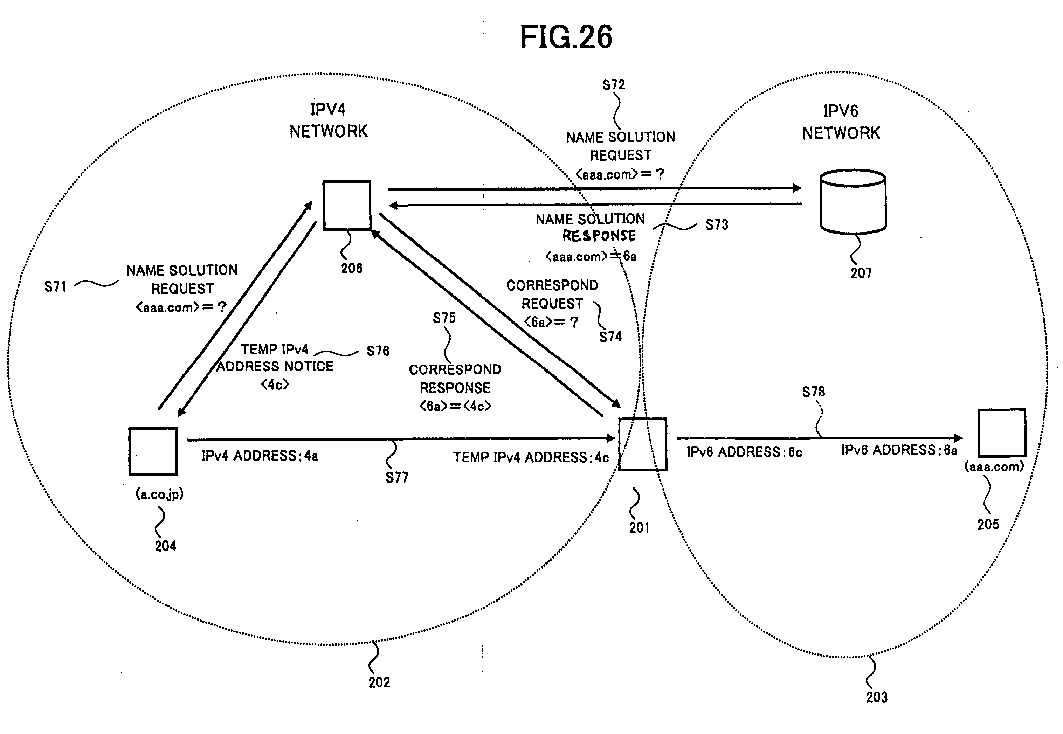

FIG. 26 shows how the address conversion apparatus 201 registers a transmission source address when an IPv4 communications apparatus 204 starts actual communications according to the second embodiment of the present invention. For example, when communicating from an IPv4 communications apparatus 204 "a.co.jp" to an IPv6 communications apparatus 205 "aaa.com", the IPv4 communications apparatus 204 (a.co.jp) asks as a name solution request to the name solution apparatus 206 for an IPv4 address of "aaa.com" which is the name of the IPv6 communications apparatus 205 (aaa.com) (in a step S71). The name solution apparatus 206 which received the name solution request concerned from the IPv4 communications apparatus 204 (a.co.jp) asks as a name solution request of the name servers 207 which may hold relevant address information for "aaa.com" (in a step S72).

In the name server 207 which received the name solution request concerned, the name solution part 241 searches the name-address correspondence table 242, obtains the IPv6 address "6a" corresponding to "aaa.com", and, therewith, the name solution response part 243 answers the name solution apparatus 206 (in a step S73). The name solution apparatus 206 which received the name solution response concerned determines whether or not it is necessary to require a correspondence for an address of the address conversion apparatus 201 in the name solution response determination part 232.

When it is determined that it is necessary to require as a result, the correspondence information request part 233 requires a correspondence for a temporary IPv4 address with respect to the above-mentioned "6a" of the address conversion apparatus 201 (in a step S74). The address conversion apparatus 201 which received the correspondence request on the address concerned receives this in the correspondence address request reception part 251, and then the correspondence address determination part 253 determines an IPv4 address of "4c" for "6a" by searching the address conversion table 252. And the result is responded by the correspondence information response part 54 to the name solution apparatus 106 (in a step S75).

The correspondence information response part 234 answers the temporary IPv4 address "4c" which received the address correspondence response concerned from the address conversion apparatus 201, to the IPv4 communications apparatus 204 (in a step S76). The IPv4 communications apparatus 204 which received the result on the name solution concerned transmits an IPv4 packet directed to the thus-obtained temporary IPv4 "4c" (in a step S77).

Predetermined path control is carried out such that the IPv4 packet directed to the this temporary IPv4 "4c" reaches the address conversion apparatus 201, and the data receiving part 256 of the address conversion apparatus 201 receives the packet for this "4c". The address conversion part 255 of the address conversion apparatus 201 determines that this IPv4 packet for "4c" should be processed with address conversion, and thus obtains a relevant IPv6 address by searching the address conversion table 252. And the IP address of the received packet is changed into "6a", and is sent out (in a step S78).

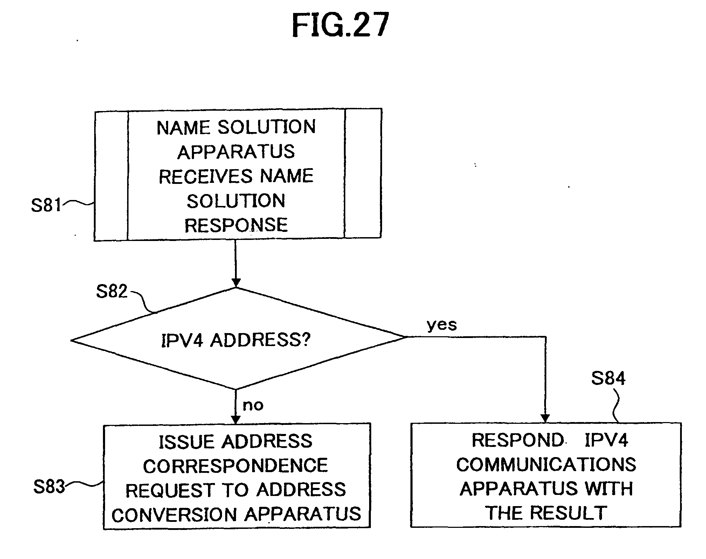

Operation in the above-mentioned name solution apparatus 206 and address conversion apparatus 201 will now be described based on a flow chart. FIG. 27 is a flow chart which shows operation at a time of name solution apparatus 206 receives a name solution response from the name server 207. In this figure, when the name solution apparatus 206 receives the name solution response in a step S71 from the name server 207 (in a step S81), the result of name solution is checked as to whether it is an IPv4 address or an IPv6 address. Since the "IPv4" communications apparatus 204 makes the name solution request, it is determined in this case as to whether or not the relevant address is an IPv4 address (in a step S82).

When the result is an IPv6 address, in a step S73 which is the communications which requires correspondence for a temporary IPv4 address with respect to the IPv6 address to the address conversion apparatus 201 is performed (in a step S83). However, in a case where the check result is an IPv4 address, the IPv4 address is answered to the IPv4 communications apparatus 204 which performed the name solution request (in a step S84).

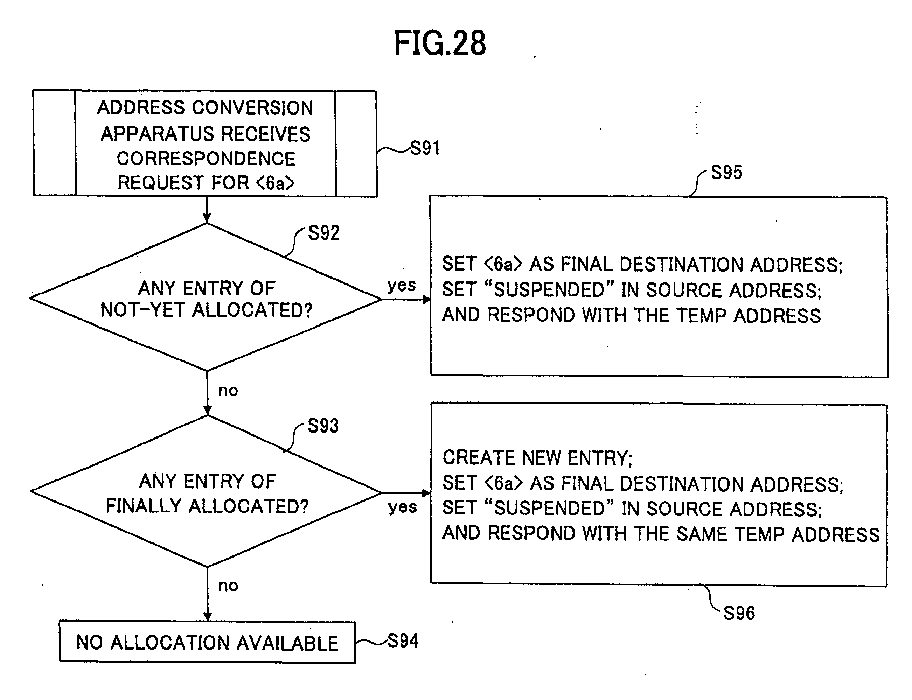

FIG. 28 is a flow chart which shows operation at a time of the address conversion apparatus 201 receiving an address correspondence request. It is assumed that, for example, a temporary destination IPv4 address is allocated with a correspondence to an IPv6 address <6a>. When the address conversion apparatus 201 receives an address correspondence request in a step S74 from the name solution apparatus 206 (in a step S91), it searches as to whether or not an entry having the allocation state 264 of "not-yet allocated" exits in the address conversion table 252 (in a step S92).

When there is a not-yet-allocated entry as a result, <6a> is then registered into the final destination address 261 of this entry, the allocation state 264 thereof is set up as "temporary allocated", and the transmission source address 262 thereof is set into a "suspension" state. And, as a response of address correspondence, the temporary allocation address 263 of the entry is sent out as in the step S75 to the name solution apparatus 206 (in a step S95).

On the other hand, when there is no not-yet-allocated entry as a result of the search in the above-mentioned step S92, search is made as to whether or not there is any entry of "finally allocated" in the allocation state 264 in the address conversion table 252 at this time (in a step S93). When there is an entry of finally allocated, a new entry with the same temporary destination address 263 is created having the same temporary destination address as that of the above-mentioned finally allocated entry, and is added to the address conversion table 252. And, <6a> is registered into the final destination address 261 of this newly added entry, the allocation state 264 thereof is set as "temporary allocated", and the transmission source address 262 is made into a "suspension" state. And, as a response of address correspondence, the temporary destination address 263 of the entry is sent out via the communications of the step S75 to the name solution apparatus 206 (in a step S96).

When the allocation state 264 of all the entries of the address conversion table 252 is in a "temporary allocated" state as a result of search of the above-mentioned steps S92 and S93, as this means that there is no temporary destination address 263 which can be allocated temporarily to the present address correspondence request, this address correspondence request is canceled (in a step S94).

The processing order of the step S92 and the step S93 may be replaced with one another.

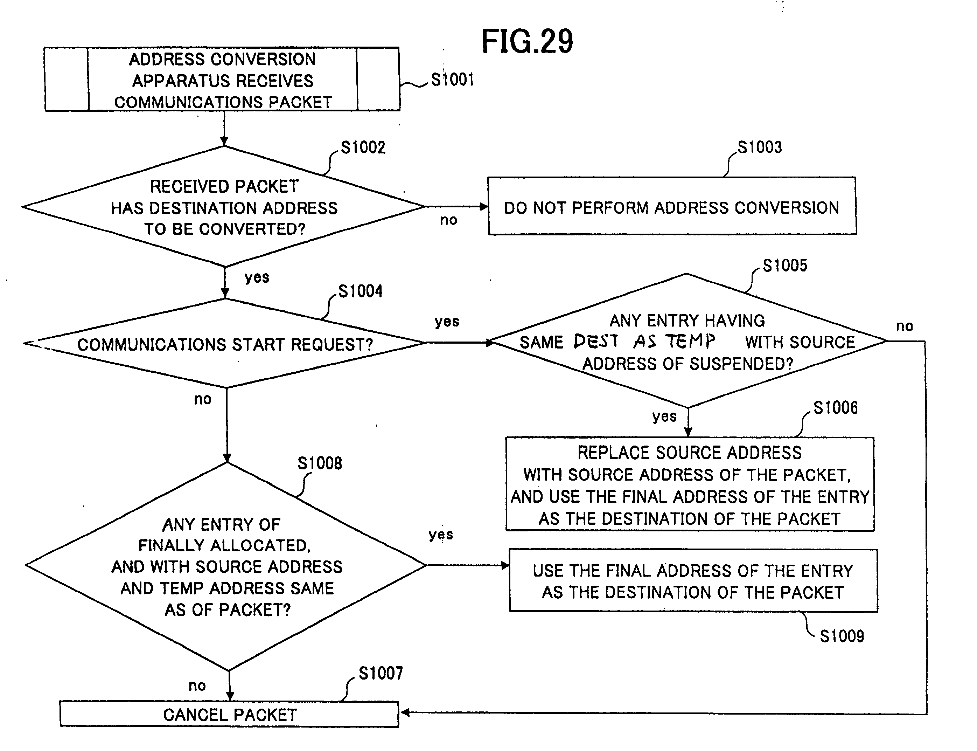

FIG. 29 is a flow chart which shows operation at a time of the address conversion apparatus 201 receiving a communications packet which an IPv4 communications apparatus 204 transmits. When the address conversion apparatus 201 receives the communications packet via the step S77 which the IPv4 communications apparatus 204 transmits (in a step S1001), the address conversion apparatus 201 determines whether or not the communications packet should be processed with address conversion (in a step S102).

This determination is performed by checking whether or not this packet is directed to an address corresponding to that predetermined for being processed with address conversion, for example. When the packet concerned is a communications packet which is not one to be processed with address conversion as a result of this determination, the address conversion apparatus 201 performs nothing on the communications packet (in a step S1003).

When this is a packet to be processed with address conversion, it is then checked as to whether or not the packet includes a communications start request (in a step S1004). The method of distinguishing whether or not the relevant packet includes the communications start request may be such as that of checking as to whether or not it includes a predetermined specific communications start command, or by checking as to whether or not the port number which the communications packet concerned has corresponds to one which is a specific one predetermined as being used for communications starting, or the like.

When the received packet includes a start request as a result of the above-mentioned determination, search is made on the address conversion table 252 as to whether there is any entry whose allocation state 264 is of temporary allocated, and whose temporary destination address 263 is coincident with the transmission destination address of the communications packet (in a step S1005). When there is a relevant entry in the address conversion table 252 as a result of search, the transmission source address of the communications packet concerned is set into the transmission source address 262 of the entry, and the allocation state thereof is made into of finally allocated (in a step S1006). Consequently, the communications packet which indicates the temporary destination address 263 of this entry with the same transmission source after that comes to be converted into the communications packet to be sent to the final destination address 261 of the same entry.

When there is no relevant entry in the address conversion table 252 as a result of the above-mentioned search, the communications packet concerned is canceled (in a step S1007). On the other hand, when the received packet is not one including a start request, search is made as to whether or not there is an entry whose allocation state 264 is of finally allocated, whose temporary destination address is coincident with the transmission destination address of the communications packet concerned, and also, whose transmission source address 262 is coincident with the transmission source address of the communications packet concerned (in a step S1008).

When there is a relevant entry in the address conversion table 252 as a result of the search, this communications packet is converted into a communications packet to be sent to the final destination address 261 of the same entry as in the above-mentioned case (in a step S1009). When there is no relevant entry in the address conversion table 252 as a result of the search, this communications packet is canceled (in a step S1007).

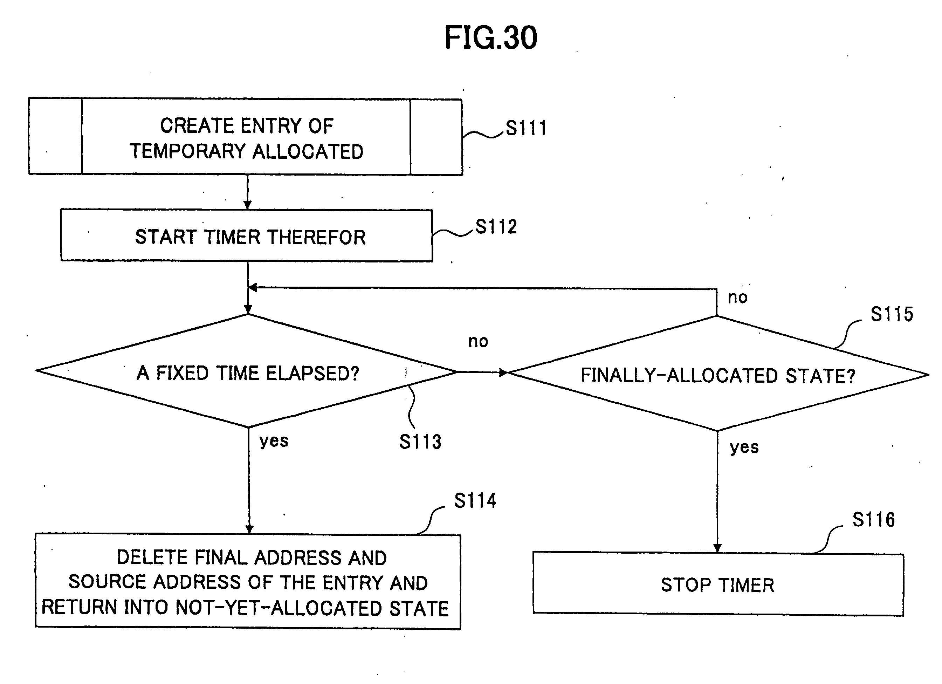

FIG. 30 shows operation for deleting an entry left in the address conversion table 252 with the state of temporary allocated. Each time an entry of a temporary allocated state in the allocation state 264 is created in the address conversion table 252 (in a step S111), the timer 257 which can measure for each entry is made to start measurement (in a step S112). And it is determined as to whether the measurement value of the timer 257 exceeds a predetermined value (in a step S113), and, when it exceeds, the entry is retuned into the state of not-yet allocated (in a step S114). When it have not exceeded, it is then determined as to whether or not the allocation state 264 of the same entry is changed into of finally allocated. Then, when it is changed into of finally allocated, the timer measurement on this entry is stopped.

Furthermore, when a predetermined interval has elapsed after it is finally used or a communications end thereof could be determined by a predetermined communications command on the communications packet even when the allocation state 264 thereof is of finally allocated, the relevant entry may be returned into a not-yet-allocated state.

Thus, according to the above-described second embodiment of the present invention, at a stage of processing a communications request, only a relevant IPv6 destination address is registered while the transmission source address item is left as "suspension" for a relevant temporary IPv4 address. And then, when actual relevant communications are started, the transmission source address of the packet sent from the transmission source IPv4 communications apparatus is registered as the transmission source address item corresponding to the temporary IPv4 address. Consequently, always the correct transmission source address is registered to the temporary IPv4 address concerned.

However, also according to the above-described second embodiment of the present invention, proper communications may not be performed when the same IPv4 communications apparatus 204 performs communications with a plurality of different IPv6 communications apparatuses 205 simultaneously, and, also, at that time, the same temporary address is allocated therefor accidentally. When the IPv4 communications apparatus 204 is a communications apparatus which does not communicate with a plurality of IPv6 communications apparatuses 205 simultaneously like a cellular phone, such a problem does not arise. Moreover, even when the same IPv4 communications apparatus 204 communicates with a plurality of IPv6 communications apparatuses 205 simultaneously, a possibility that the same temporary address is allocated therefor accidentally is very low.

A third embodiment of the present invention provides a configuration by which proper communications can be performed even when such a rare state occurs.

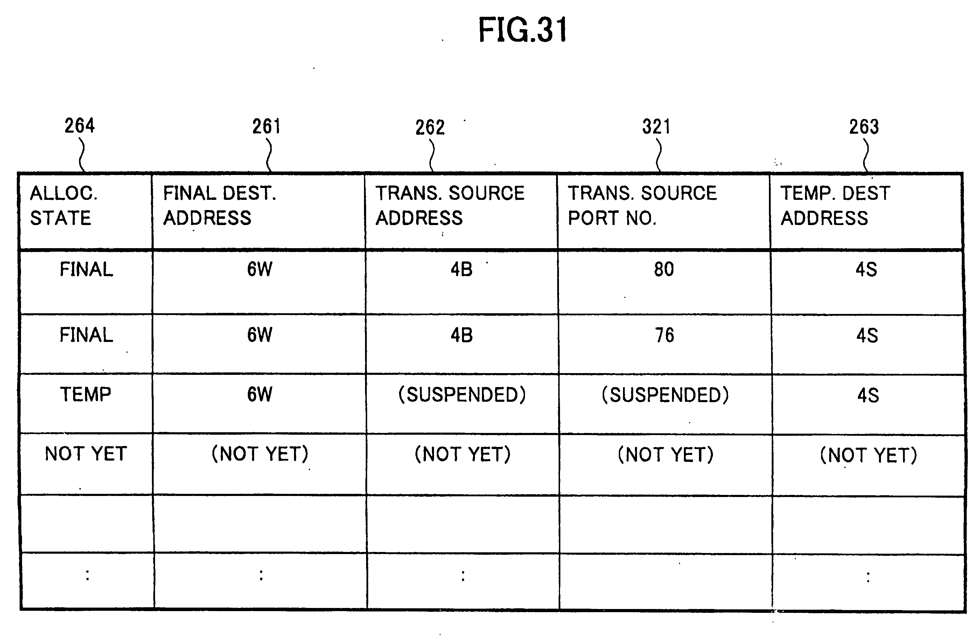

FIG. 31 shows an address conversion table 252 which an address conversion apparatus 201 according to the third embodiment of the present invention holds. On the address conversion table 252 in this embodiment, an item of transmission source port number 121 as an application identifier by which a plurality of occasions of communications can be identified on a same IPv4 communications apparatus 204 is added to each entry.

And, when a communications packet is received while an entry has the allocation state 264 of finally allocated, the transmission source address of the communications packet is coincident with the same item 262 of the entry, the transmission source port number currently used in the IPv4 communications apparatus 204 which has the transmission source address 262 same as that of the entry is coincident with the same item 321 of the entry, and also, the temporary address indicated by the communications packet is coincident with the same item 263 of the entry, the address of the communications packet is changed into the final destination address 261 of the entry.

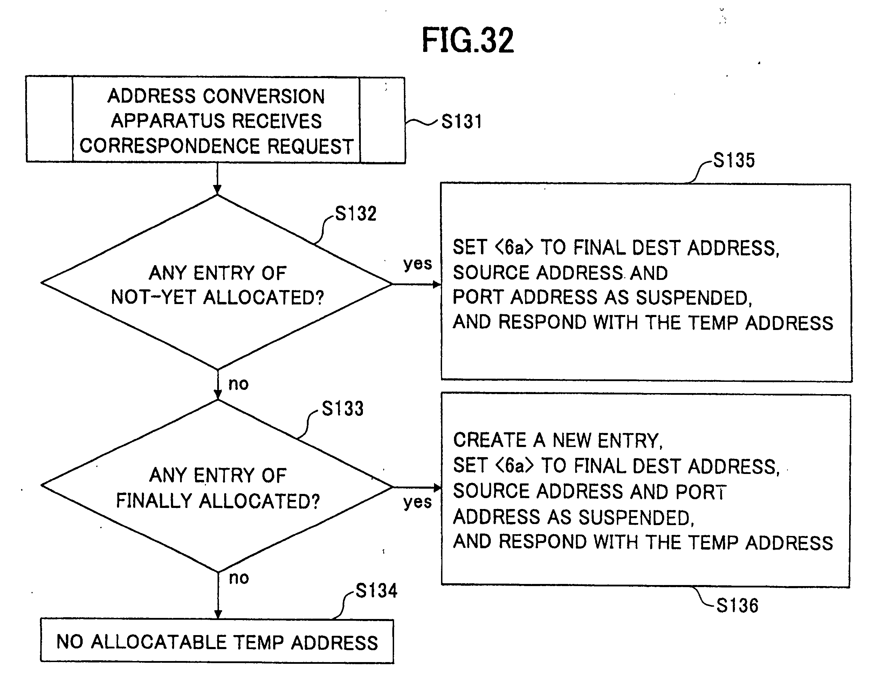

FIG. 32 is a flow chart which shows operation at a time of the address conversion apparatus 201 according to the third embodiment receiving an address correspondence request. It is assumed that, for example, a temporary destination IPv4 address is allocated for an IPv6 address <6a>.

When the address conversion apparatus 201 receives an address correspondence request via the step S74 from the name solution apparatus 206 (in a step S131), search is made as to whether or not an entry having the allocation state 264 of not-yet allocated exists in the address conversion table 252 (in a step S132).

When there is a not-yet-allocated entry, <6a> is registered as the final destination address 261 of this entry, the allocation state 264 thereof is changed into "of temporary allocated", and the transmission source address 262 and the transmission source port number 321 are set as a "suspension" state each. And, as a response of address correspondence, the temporary allocation address 263 of the entry is sent via communications of the step S75 to the name solution apparatus 206 (in a step S135).

When there is no not-yet-allocated entry in the address conversion table 252 as a result of the above-mentioned search, then search is made as to whether or not an entry of finically allocated state in the allocation state 264 in the address conversion table 252 (in a step S133). When there is an entry of finally allocated state, a new entry with the same temporary destination address 263 as that of the above-mentioned entry of finally allocated state is created, and the new entry is added to the address conversion table 252. And, <6a> is registered into the final destination address 261 of this new entry, the allocation state 264 thereof is set as "of temporary allocated", and the transmission source address 262 and the transmission source port number 321 are set into a "suspension" state each. And, as a response of address correspondence, the temporary allocation address 263 of the entry is transmitted to the name solution apparatus 206 via the communications of step S75 (in a step S136).

When the allocation state 264 of all the entries of the address conversion table 252 is in a temporary allocated state as a result of the above-mentioned search, as this means that there is no temporary destination address 263 which can be allocated temporarily to the present address correspondence request, this address correspondence request is cancelled (in a step S134).

The processing order of the step S132 and step S133 may be replaced.

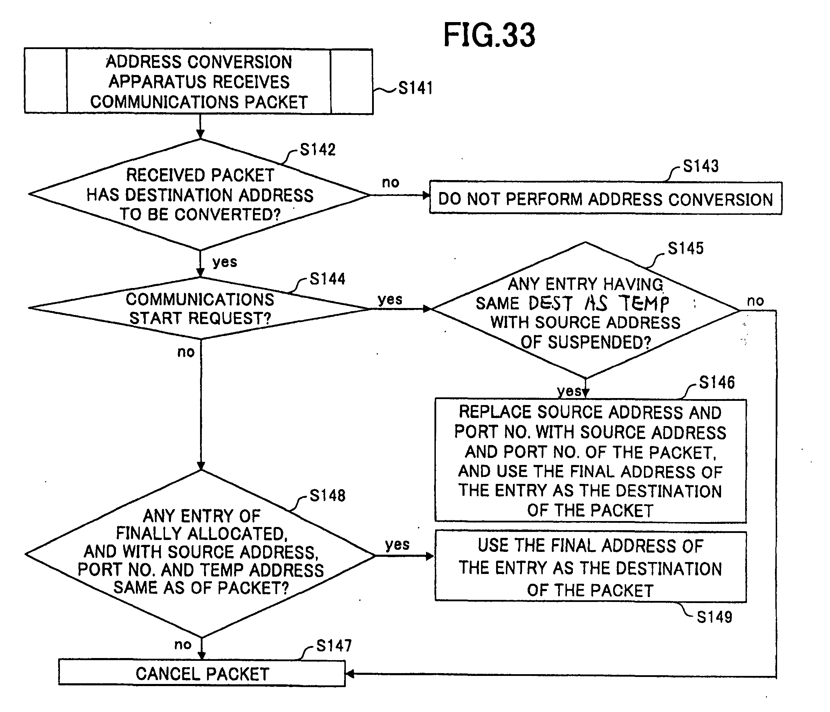

FIG. 33 is a flow chart which shows operation at a time of reception of a communications packet by the address conversion apparatus 201 transmitted from an IPv4 communications apparatus 204 according to the third embodiment of the present invention. In this figure, when the address conversion apparatus 201 receives the communications packet via the step S77 which the IPv4 communications apparatus 204 transmits (in a step S141), the address conversion apparatus 201 determines whether or not the communications packet is to be processed with address conversion (in a step S142). This determination can be made by checking as to whether or not this packet is directed to an address corresponding to one predetermined to be processed with address conversion, or the like.

When it is determined that the communications packet is not one to be processed with address conversion as a result, the address conversion apparatus 201 performs nothing on the communications packet (in a step S143). When this packet is determined as a packet to be processed with address conversion, the packet is determined as to whether or not it has a communications start request (in a step S144). This determination can be made by checking as to whether or not it has a specific communications start command, as to whether or not it has a port number corresponding to one which is specifically used in communications start occasion, or the like.

When the received packet is determined to have a start request as a result, search is made as to whether there is an entry of "temporary allocated" state in the item 264, wherein the temporary destination address 263 of the entry is coincident with the transmission destination address of the communications packet, in the address conversion table 252 (in a step S145). When there is a relevant entry in the address conversion table 252 as a result of the search, the transmission source address of the communications packet concerned is registered into the transmission source address item 262 of this entry, the transmission source port number of the communications packet concerned is registered into the transmission source port number item 321 of the same entry, and the allocation state item 264 is changed into "finally allocated" (in a step S146).

Consequently, each communications packet which specifies the temporary destination address 263 of this entry by a same operation program which operates on the same IPv4 communications apparatus 204 henceforth comes to be changed into a communications packet directed to the final destination address 261 of the same entry.

On the other hand, when there is no relevant entry in the address conversion table 252 as a result of the above-mentioned search, this communications packet is canceled (in a step S147). Moreover, when the received packet is not one of a start request, search is made as to whether or not an entry having the allocation state item 264 of "finally allocated", the temporary destination address 263 same as the transmission destination address of the communications packet concerned, the transmission source address 262 same as that of this packet, and, also, the transmission source port number 321 same as that of the communications packet concerned is included in the address conversion table 252 (in a step S148).

When there is a relevant entry in the address conversion table 252 as a result of the search, address conversion of this communications packet is carried out into the communications packet directed to the final destination address 261 of the same entry (in a step S149).

When there is no relevant entry in the address conversion table 252 as a result of the search, this communications packet is canceled (in a step S147).

Thus, according to the third embodiment of the present invention, even in a case where a plurality of communications occasions are simultaneously occur from an IPv4 communications apparatus which has the same transmission source address, a same temporary IPv4 address can be allocated therefor. That is, since these plurality of occasions of communications have different transmission source port numbers allocated although they are made from the single IPv4 communications apparatus of the same transmission source address, by registering these transmission source port numbers together with the temporary IPv4 address concerned collectively, for the respective occasions of communications, these can be positively distinguished correctly and thus communications can be properly performed with the respective IPv6 destination communications apparatuses.

Although not shown in the figure, the above-mentioned address conversion apparatus may be embodied as a hardware by a computer which includes a bus which connects one or a plurality of CPUs, a main memory unit, an external storage, such as a hard disk drive, and a communications device, and so forth. A software program for operating this computer as the address conversion apparatus may be stored in a recording medium such as a carriable medium memory, a semiconductor memory, a hard disk drive, etc., the program being appropriately executed by the CPU(s)

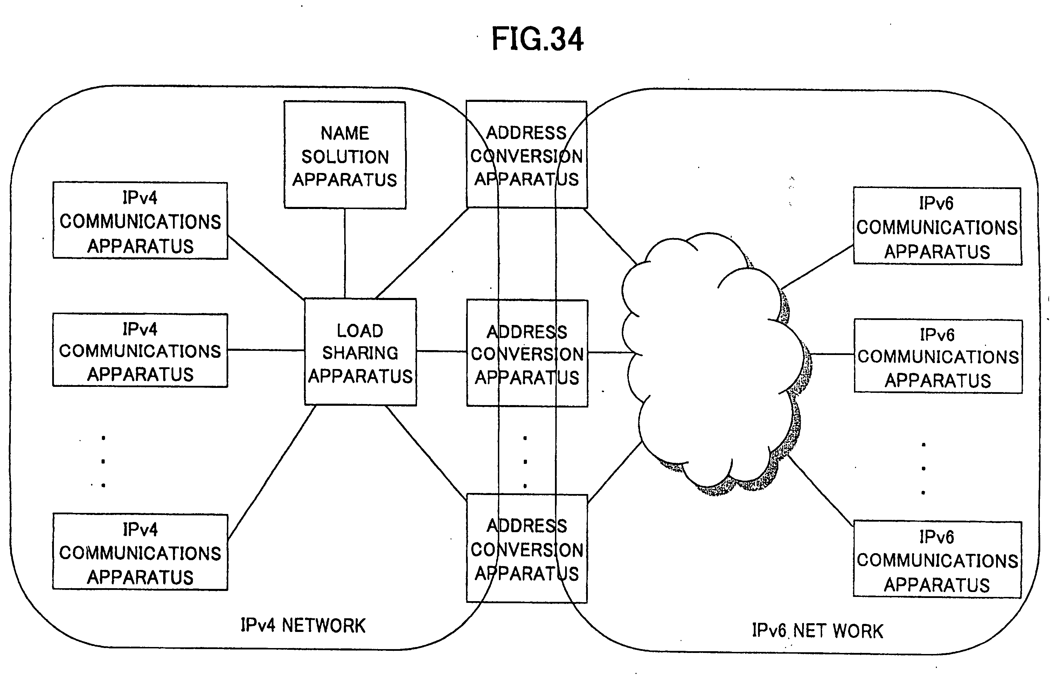

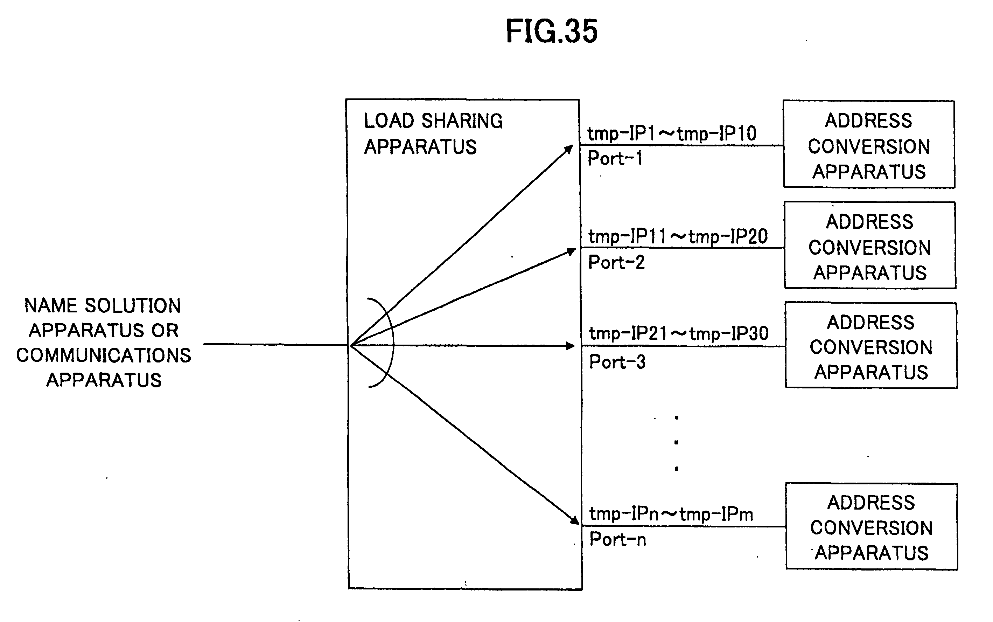

A method of load sharing with regard to the processing load borne by the address conversion apparatus according to each of the above-mentioned embodiments of the present invention into a plurality of address conversion apparatuses will now be described. According to each embodiment described above, after a correspondence request signal or correspondence notice signal is sent from the name solution apparatus, a communications signal is sent from a relevant communications terminal. In order to perform load sharing with regard to communications including such two sets of bidirectional communications with different apparatuses, first, the correspondence request signals or the correspondence notice signals from the name solution apparatus are distributed by means of a predetermined load sharing apparatus. Thereby, the signals are made to be sent to respective particular address conversion apparatuses. Then, communications signals directed to temporary addresses to be handled by the respective address conversion apparatuses are made to be sent to the relevant address conversion apparatus, respectively (see FIGS. 34 and 35).

In such a case, when the signal transmitted from the name solution apparatus is a correspondence request signal or notice signal, the load sharing apparatus should transfer this signal to a specific address conversion apparatus according to a predetermined load sharing policy, and an actual communications signal (payload) directed to a temporary address managed by each address conversion apparatus to the relevant address conversion apparatus. Alternatively, when the correspondence notice signal or notice signal is sent from the name solution apparatus, the load sharing apparatus should transfer this signal to a specific address conversion apparatus according to a predetermined load sharing policy, and a payload signal directed to a temporary address to be once managed by all the address conversion apparatuses into the all address conversion apparatuses.

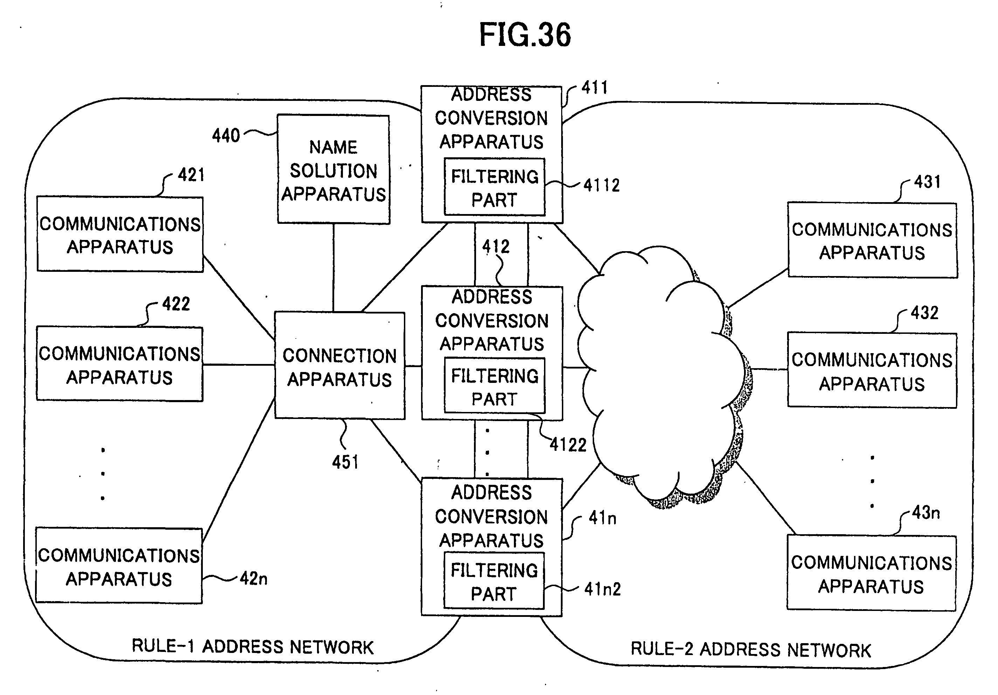

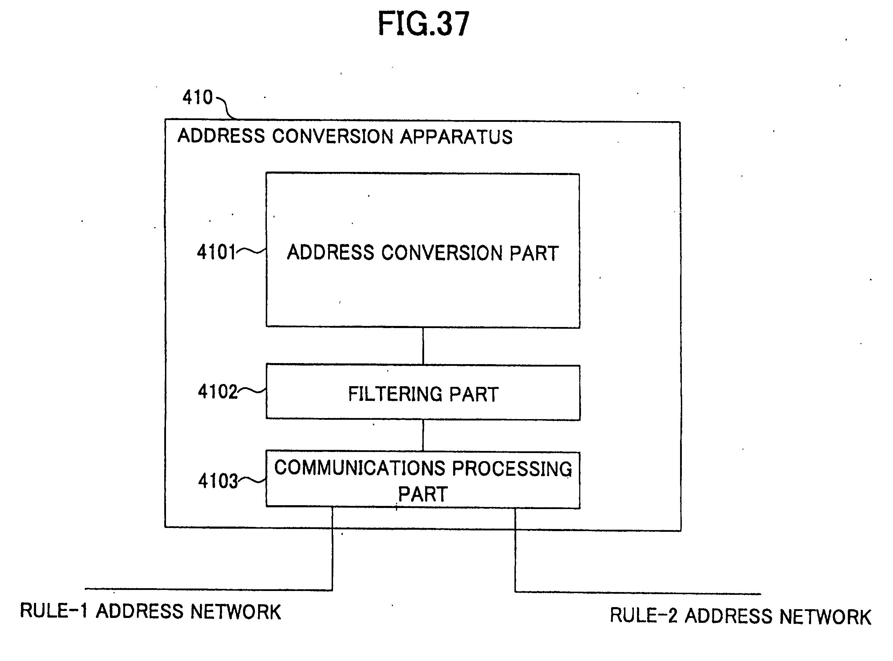

According to a fourth embodiment of the present invention, a system enabling effective load sharing processing is provided. FIG. 36 is a system configuration of the fourth embodiment of the present invention. As shown in the figure, reference numerals 411-41n represent respective address conversion apparatuses, and as shown in FIG. 37, each thereof includes an address conversion part 4101, a filtering part 4102, and a communications processing part 4103.

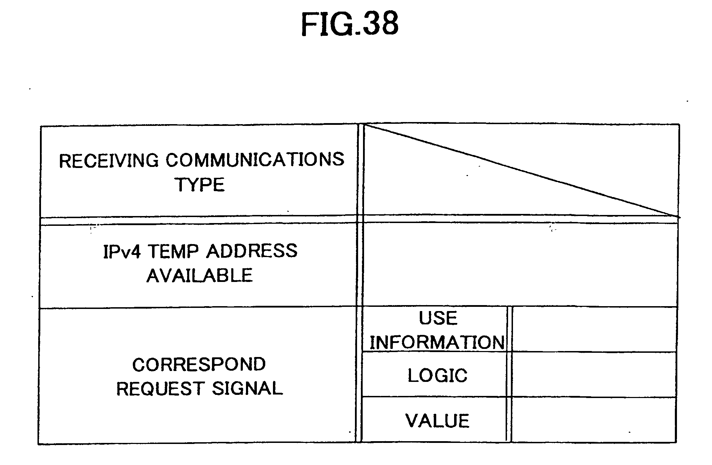

In each address conversion apparatus, a part or all information is extracted from a correspondence request signal or notice signal received by the communications processing part 4103 according to predetermined use information, logic, and value beforehand registered in a management table managed by the filtering part 4102. Then, calculation/operation is made according to the logic such that it is determined whether or not the calculation result falls within the value (see FIG. 38). When the result falls within the value, the received signal is sent to the address conversion part 4101 of its own apparatus, while the signal concerned is canceled when the result does not fall within the value.

The address conversion part 4101 receiving the sigrral then performs processing same as that performed by the address conversion apparatus in each embodiment described above. Thus, address conversion is performed according to correspondence information of a conversion table managing communications between the communications apparatus 421 through 42n belonging to a rule-1 (IPv4) address network and the communications apparatus 431 through 43n belonging to a rule-2 (IPv6) address network. Thereby, communications therebetween can be established.

The communications apparatuses 421-42n are communications apparatuses of the address system of rule 1, and are apparatuses which can communicate between the apparatuses in the address network of rule 1. The communications apparatus 431-43n are communications apparatuses of the address system of rule 2, and are apparatuses which can communicate between the apparatuses in the address network of rule 2 similarly.

When the address conversion apparatus 411-41n performs correspondence between the communications apparatus of rule 1, and the communications apparatus of rule 2, the name solution apparatus 440 sends to the connection apparatus 451, a correspondence request signal. On the other hand, when performing correspondence between the communications apparatus of rule 1 and the communications apparatus of rule 2 within the name solution apparatus itself, a correspondence notice signal is sent to the connection apparatus 451. The connection apparatus 441 transmits the signal sent from the name solution apparatus 440 or the communications apparatus of rule 1 to all the address conversion apparatuses 411-41n.

In the system shown in FIG. 36, as the communications apparatus 421-42n of rule 1, personal computers, PDAs, cellular phones or the like according to IPv4 address system may be used. As the communications apparatus 431-43n of rule 2, personal computers, PDAs, cellular phones or the like according to IPv6 address system may be used. As the name solution apparatus 440, a DNS or the like may be used. As the connection apparatus 451, a switching hub or the like may be used. As the address conversion apparatuses 411-41n, gateways, etc. may be applied.

The address conversion part 4101, the filtering part 4102, and the communications processing part 4103 of each address conversion apparatus may be provided as hardware units mounted into a computer of the like. Alternatively, these functional units may be provided as combinations of hardware and software mounted.

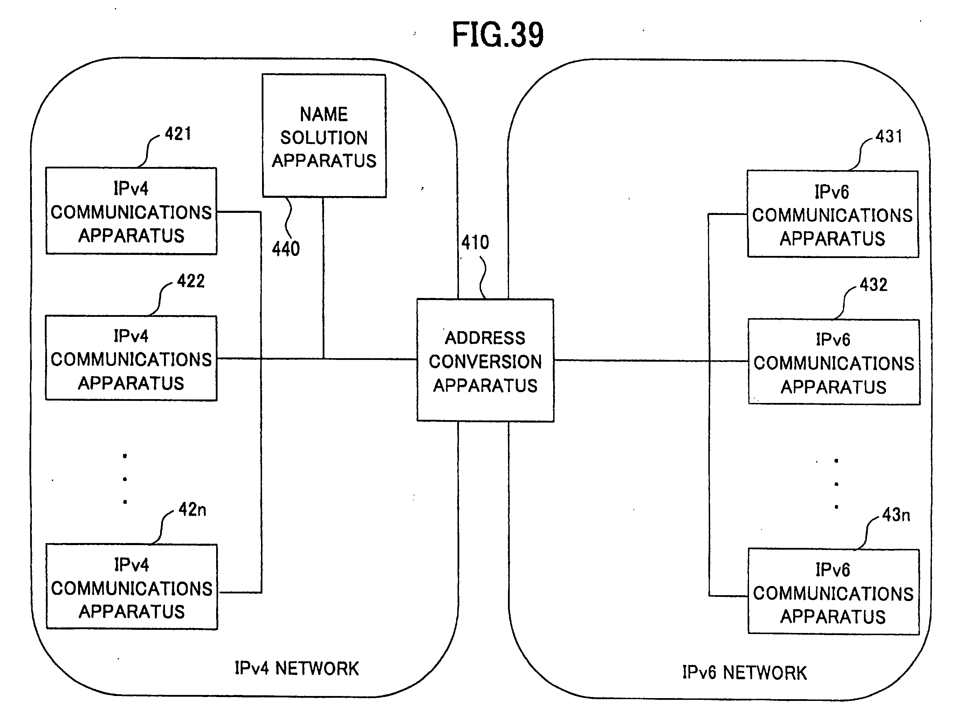

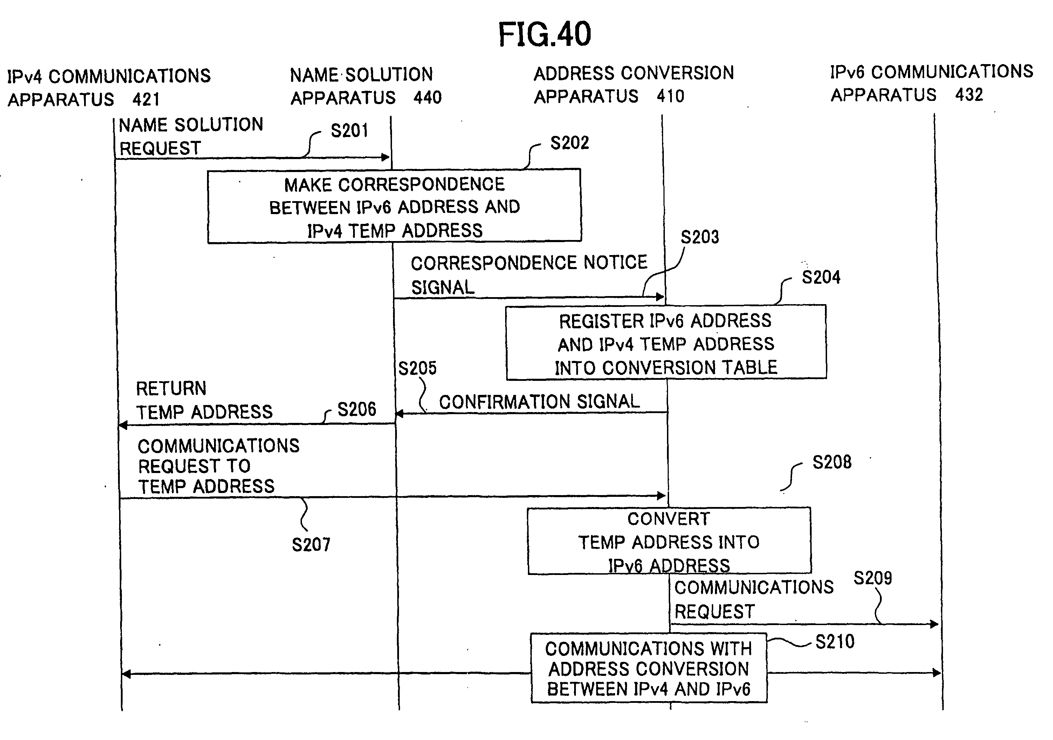

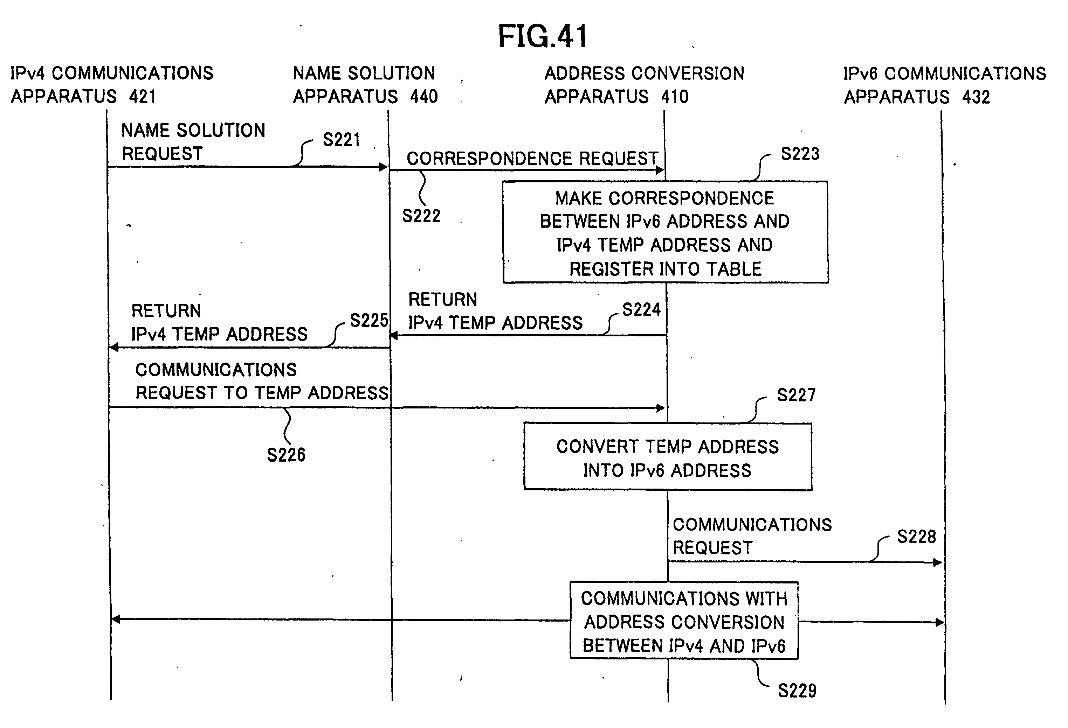

Before detailed description of the fourth embodiment of the present invention, the configurations of the above-mentioned first and second embodiments of the present invention will now be described again with reference to FIGS. 39 through 41. Namely, for example, different communications address systems or different communications address management systems are assumed as belonging to an IPv4 network and an IPv6 network, respectively.

A name solution request signal for an address of IPv6 communications apparatus 432 is first transmitted to the name solution apparatus 440 from an IPv4 communications apparatus 421 so as to establish communications from an IPv4 communications apparatus 421 to an IPv6 communications apparatus 432 (in steps S201 and S221).

In the name solution apparatus 440, when performing correspondence of an address of the IPv6 communications apparatus 432 with a temporary address of IPv4 network by itself, a corresponding notice signal indicating the correspondence result is sent to the address conversion apparatus 410 in a step S202. On the other hand, when correspondence of the address of IPv6 communications apparatus 432 with the temporary address of IPv4 network is to be performed by the address conversion apparatus 410, and a correspondence request signal is transmitted to the address conversion apparatus 410 (in a step S222). The address conversion apparatus 410 is set up so that it can receive not only a signal directed to the address of its own but also a signal directed to an address of a temporary address group which the apparatus holds.

When the above-mentioned correspondence request signal is received (in a step S222), a temporary address 1 currently available is registered for the address of IPv6 communications apparatus 432 with a correspondence therebetween (in a step S223). The temporary address 1 is sent as a reply of the correspondence request signal to the name solution apparatus 440 (in a step S224). The name solution apparatus 440 returns the temporary address 1 to the IPv4 communications apparatus 421 as a name solution result (in a step S225), and the IPv4 communications apparatus 421 then sends out a communications request directed to the temporary address 1 (in a step S226).

The address conversion apparatus 410 receives the signal directed to the temporary address 1, and converts it into the address of the IPv6 communications apparatus based on the registered correspondence information, and sends a corresponding communications request to the IPv6 network (in steps S227 and S228).

On the other hand, when the address conversion apparatus 410 receives the correspondence notice signal (in a step S203), the address of the IPv6 communications apparatus 432 and the temporary address 1 of IPv4 network within the correspondence notice signal are registered there (in a step S204), and a confirmation signal is returned to the name solution apparatus 440 (in a step S205).

The name solution apparatus 440 returns the temporary address 1 as a name solution result to the IPv4 communications apparatus 421, when receiving the confirmation signal (in a step S206). The IPv4 communications apparatus 421 then issues a communications request using the temporary address 1 of IPv4 network returned from the name solution apparatus 440 (in a step S207).

The address conversion apparatus 410 receives the signal directed to the temporary address 1, converts the address thereof into the address of the IPv6 communications apparatus according to the registered correspondence information, and, therewith, issues a communications request to the IPv6 network (in a step S208).

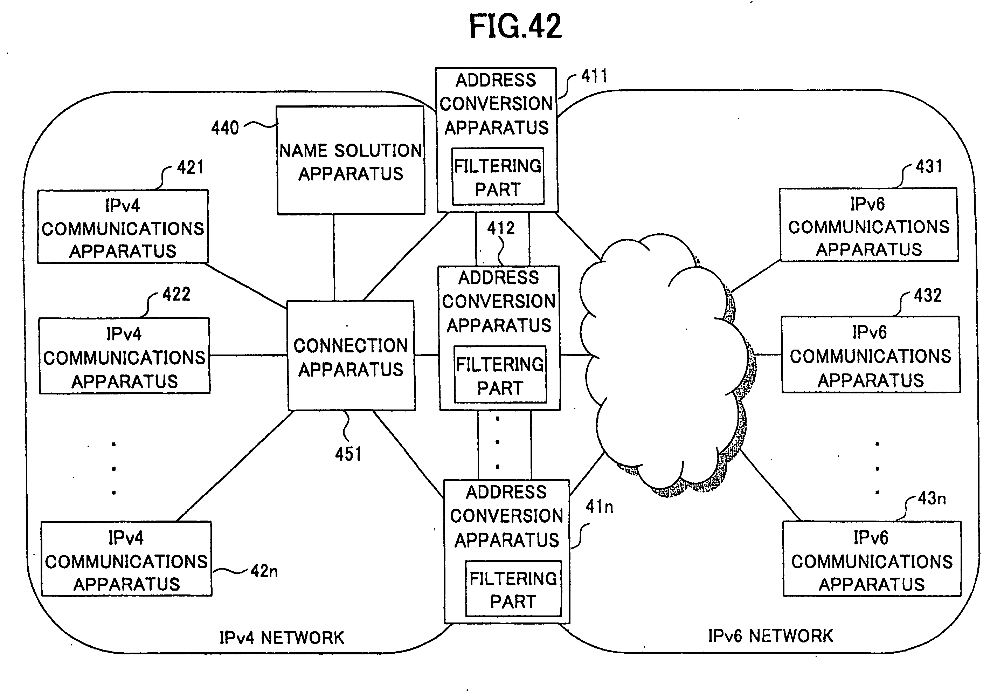

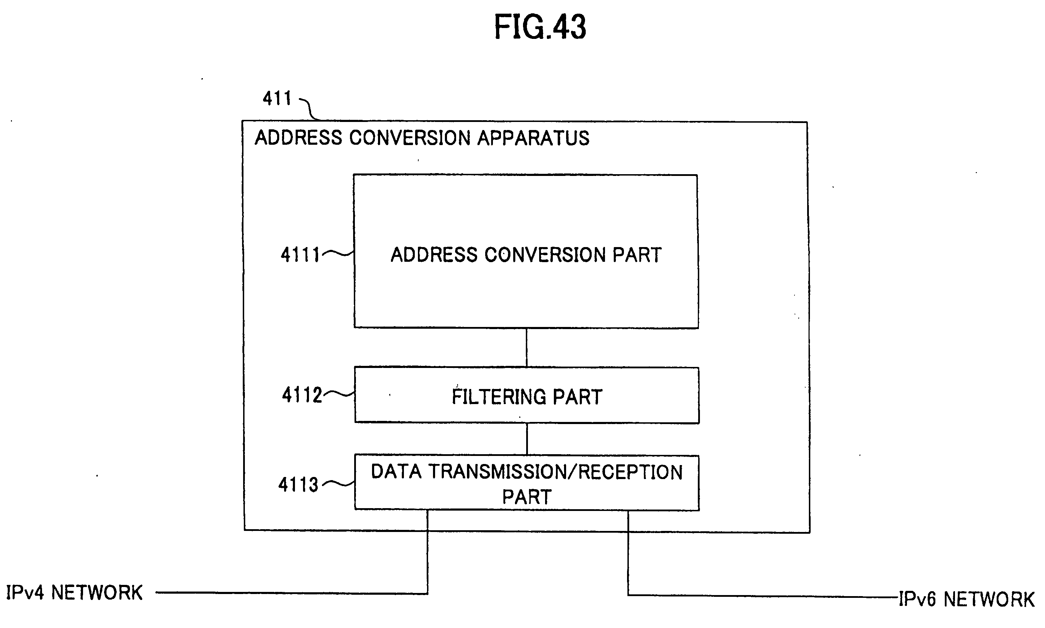

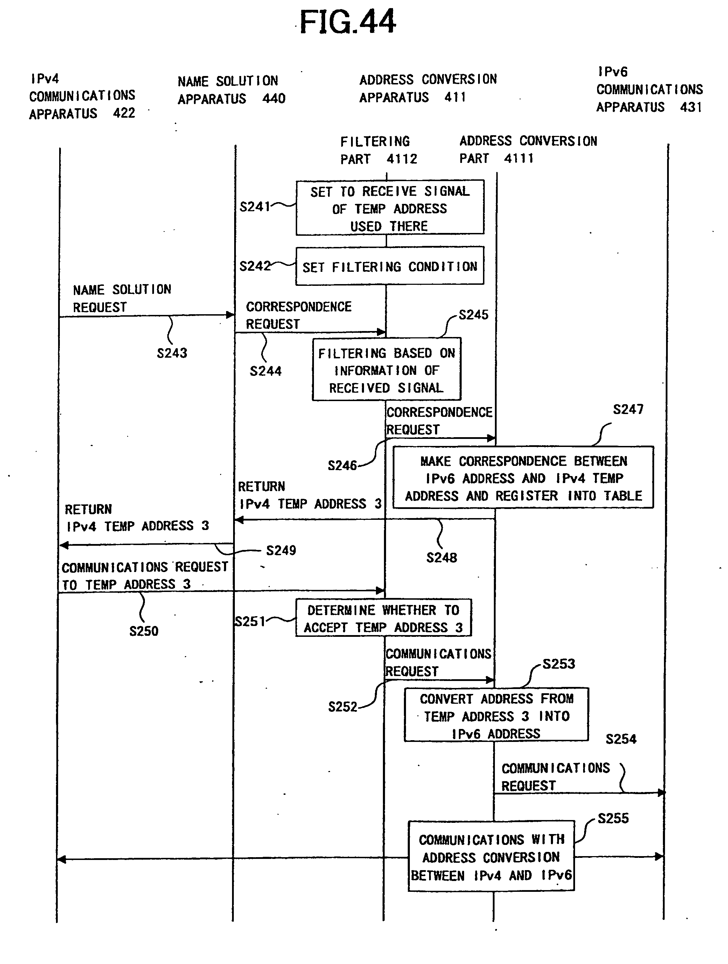

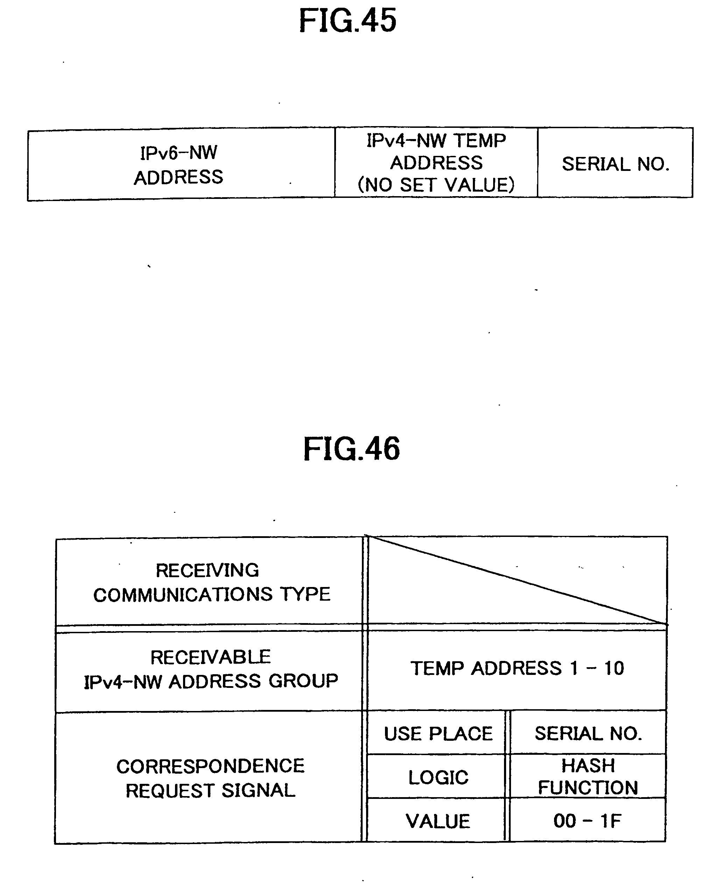

In contrast to the above-described first and second embodiments of the present invention, FIG. 42 shows a system configuration of the above-mentioned fourth embodiment of the present invention. FIG. 43 shows a configuration of each address conversion apparatus. FIG. 44 shows a flow chart of operation performed by the fourth embodiment. FIG. 45 shows a correspondence request signal. FIG. 46 shows a management table of a filtering part 4112.

In the fourth embodiment of the present invention, a name solution request signal for an address of IPv6 communications apparatus 431 is first sent to the name solution apparatus 440 from the IPv4 communications apparatus 422 to communicate from the IPv4 communications apparatus 422 to the IPv6 communications apparatus 431, for example (in a step S243). The name solution apparatus 440 transmits a correspondence request signal concerned to the connection apparatus 451. The connection apparatus 451 sends the correspondence request signal concerned to all the address conversion apparatus 411-41n.

As shown in FIG. 46, a set value is beforehand provided for every receiving communications type in the management table which each address conversion apparatus 411-41n has in the filtering part 4112 thereof. Further, IPv4 network temporary addresses managed in the address conversion part 4111 are beforehand set as a receivable IPv4 network address group. And, in the correspondence request signal item thereof, which logic is to be applied to which part of a received correspondence request signal, and which range of calculation result is allowed for accepting and thus transferring the signal concerned to the address conversion part 411 are set beforehand (in steps S241 and S242). The signal is canceled when the calculation result does not fall within the range of value (in a step S245).

According to the fourth embodiment, each address conversion apparatus 411-41n calculates a Hash function which is the logic prescribed in the above-mentioned management table for the serial No. of a given correspondence request signal (see the FIG. 45). The result of the calculation is assumed as "1A", for example. According to the calculation result of the Hash function concerned, the filtering part of each of the address conversion apparatus 412-41n cancels the received correspondence request signal, while only the filtering part 4112 of the address conversion apparatus 411 accepts and thus transfers the correspondence request signal to the address conversion part 4111 (in a step S246), for example.

The address conversion part 4111 then registers the IPv6 network address 431 included in this correspondence request signal, and an IPv4 network temporary address 3 currently available, for example, into the conversion table (in a step S247), and sends the above-mentioned IPv4 network temporary address 3 to the name solution apparatus 440 as a reply to the correspondence request signal (in a step S248). The name solution apparatus 440 returns the IPv4 network temporary address 3 to the IPv4 communications apparatus 422 as a name solution result (in a step S249), and the IPv4 communications apparatus 422 then sends out a communications request using the IPv4 network temporary address 3 (in a step S250).

The signal of the IPv4 network temporary address 3 is sent to all the address conversion apparatuses 411-41n via the connection apparatus 451. Then, the receivable IPv4 network address group registered in the management table in the filtering part 4112 is searched by each address conversion apparatus (in a step S251). Then, when there is a relevant address in any address conversion apparatus, the received signal is accepted and then transferred to the address conversion part of the relevant address conversion apparatus (in a step S252). However, for any address conversion apparatus in which there is no relevant address, the signal is cancelled therein.

In this example, the filtering part 4112 of only the address conversion apparatus 411 accepts and thus transfers the received signal to its own address conversion part 4111 (in a step S252). However, in any other address conversion apparatus 412 through 41n, the filtering part cancels the received signal. And, then, the address conversion part 4111 of the address conversion apparatus 411 converts the IPv4 network temporary address received into the address of the IPv6 communications apparatus 431 according to the correspondence information registered in the registration table. Then, it sends a communications request to the IPv6 communications apparatus 431 of IPv6 network, and thus, communications between the IPv4 communications apparatus 422 and the IPv6 communications apparatus 431 is attained.

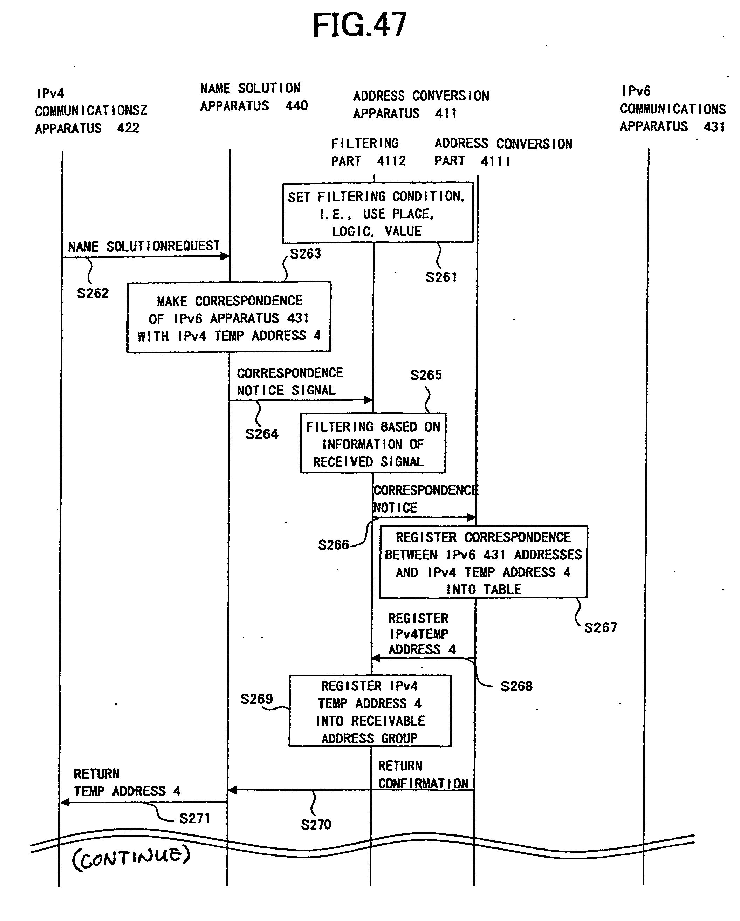

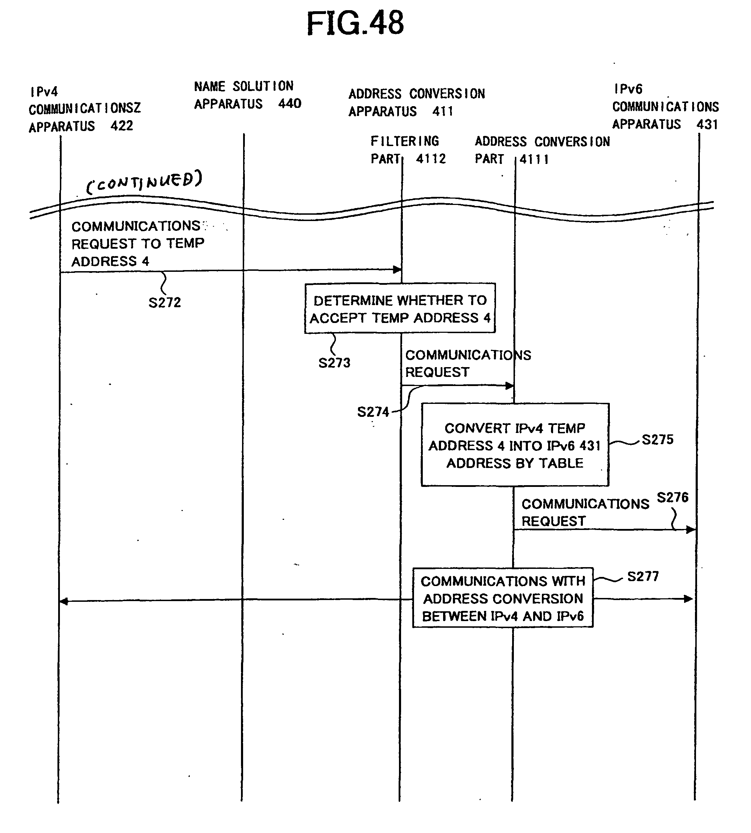

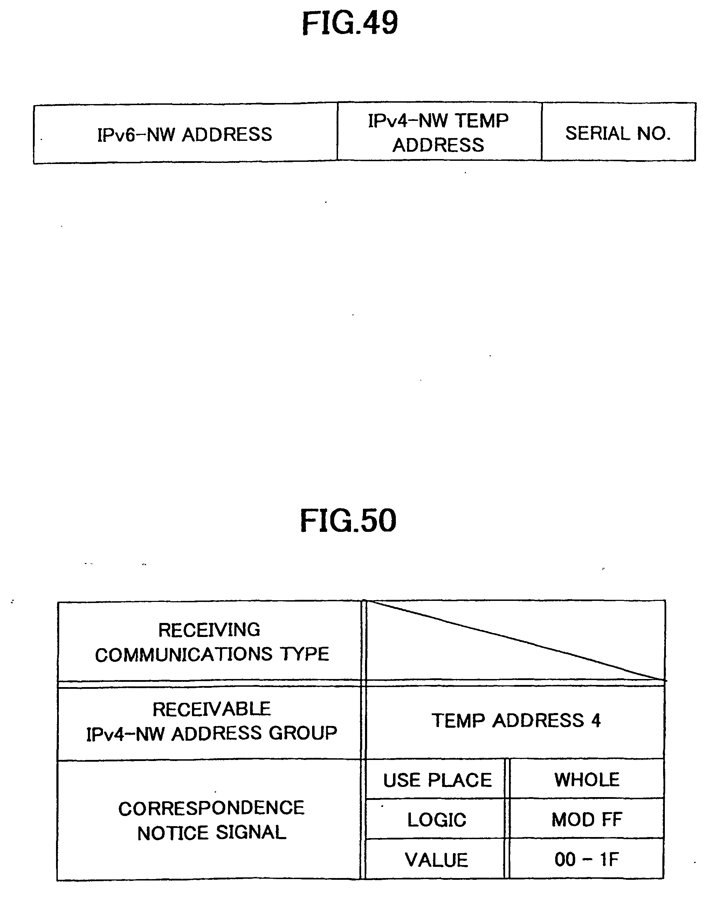

A fifth embodiment of the present invention which is a variant of the above-described fourth embodiment will now be described. The fifth embodiment has the same system configuration as that of the fourth embodiment shown in FIG. 42. FIG. 47 and FIG. 48 show a flow chart of operation according to the fifth embodiment, FIG. 49 shows a correspondence notice signal according to the fifth embodiment, and FIG. 50 shows a management table of the filtering part according to the fifth embodiment.

For example, a name solution request signal for an address of IPv6 communications apparatus 431 is first sent to the name solution apparatus 440 from the IPv4 communications apparatus 422 to communicate from the IPv4 communications apparatus 422 to the IPv6 communications apparatus 431 (in a step S262). The name solution apparatus 440 selects a currently available IPv4 network temporary address, and manages the matter of giving the correspondence with this IPv4 network temporary address (in a step S262), sets the address of IPv6 communications apparatus 431 and the IPv4 network temporary address into the correspondence notice signal, and transmits the signal to the connection apparatus 451 (see FIG. 49).

The connection apparatus 451 sends the same correspondence notice signal to all the address conversion apparatuses 411-41n (in a step S264). A set value for every reception communications type is beforehand provided in the management table of the filtering part of each address conversion apparatuses 411-41n (see FIG. 50). Further, in the correspondence notice signal item of the management table, beforehand set is which part of the correspondence signal is to be applied, which logic should be applied thereto, and what range of value the calculation result should fall within so as to accept the signal (in a step S261). The signal is canceled when the calculation result does not fall within the range of value.

According to the fifth embodiment, each of the address conversion apparatuses 411-41n calculates the remainder after performing division operation on all the information of the received correspondence notice signal by "FF" which is the logic specified beforehand in the management table as shown. The result is assumed as being "1A", for example. In this case, according to the same calculation of the remainder, the filtering part of each of the address conversion apparatuses 412-41n cancels the received correspondence notice signal, while the filtering part 4112 of only the address conversion apparatus 411 accepts and thus transfers the same signal to the address conversion part 4111 its own without canceling it (in steps S265 and S266). Setting of the filtering part of each of the respective address conversion apparatuses is made such that only one specific address conversion apparatus actually handles the signal while any other ones cancels the same.

The relevant address conversion part 4111 extracts the IPv4 network temporary address 4 from the correspondence notice signal concerned, registers this into the receivable IPv4 network temporary address group of the filtering part 4112 and also to the conversion table of the address conversion part 4111 as shown (in steps S268 and S269), and sends a confirmation signal as a reply to the correspondence notice signal to the name solution apparatus 440 (in a step S270). The name solution apparatus 440 returns the above-mentioned IPv4 network temporary address 4 as a name solution result to the IPv4 communications apparatus 422 (in a step S271).

The IPv4 communications apparatus 422 thus sends out a communications request using the above-mentioned IPv4 network temporary address 4. The signal of this IPv4 network temporary address 4 is then sent to all the address conversion apparatuses 411-41n by the connection apparatus 451 (in a step S272), and the receivable IPv4 network address group registered in the management table in the filtering part is searched for in each address conversion apparatus.

When there occurs the relevant address as a result, the received signal is accepted and transferred to the address conversion part 4111 of own apparatus, while the received signal is canceled in any address conversion apparatus in which there occurs no relevant address as a result(in a step S273). Since the IPv4 network temporary address 4 is registered only in the filtering part 4112 of the address conversion apparatus 411 by the above-mentioned processing in this example, the received signal is accepted and transferred to the address conversion part 4111 (in a step S274) there, and the filtering part in any other address conversion apparatus cancels the received signal.

The address conversion part 4111 receiving the signal then converts the IPv4 network temporary address of the received data into the address of the IPv6 communications apparatus 431 according to the registration table thereof, sends a communications request for the IPv6 communications apparatus 431 in the IPv6 network (in steps S275 and S276), and thus communications between the IPv4 communications apparatus 422 and the IPv6 communications apparatus 431 is attained.

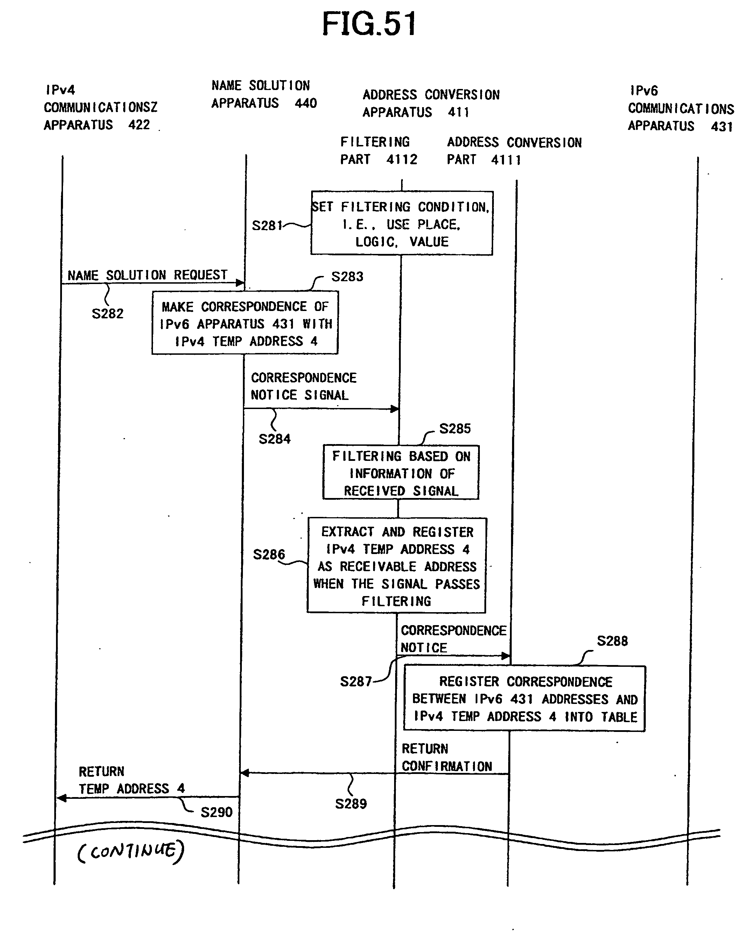

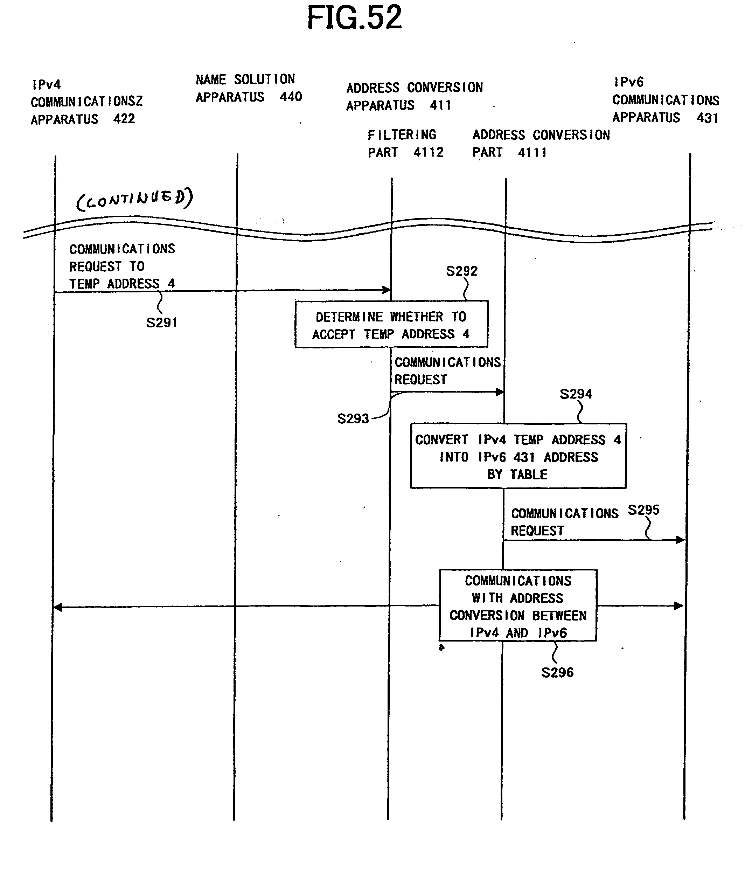

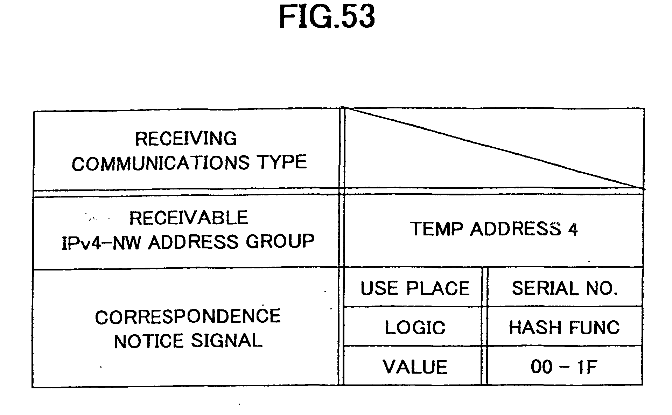

A sixth embodiment as a further variant of the above-described fourth and fifth embodiments of the present invention will now be described. The sixth embodiment of the present invention has the same system configuration as that of the fourth and fifth embodiments, FIGS. 51 and 52 shows an operation flow chart thereof. The correspondence notice signal shown in FIG. 49 is also used, and also, the management table of the filtering part shown in FIG. 53 is used.

A name solution request signal for an address of IPv6 communications apparatus 431 is first sent to the name solution apparatus 440 from the IPv4 communications apparatus 422 as in the above-mentioned embodiments to communicate from the IPv4 communications apparatus 422 to the IPv6 communications apparatus 431 (in a step S282). The name solution apparatus 440 chooses an IPv4 network temporary address currently available, and gives a correspondence thereof with the relevant request signal (in a step S283), manages this matter on a table, sets the address of the IPv6 communications apparatus 431 and the selected IPv4 network temporary address into a correspondence notice signal (see FIG. 49), and transmits it to the connection apparatus 451. The connection apparatus 451 transfers the same correspondence notice signal to all the address conversion apparatuses 411-41n.

A set value for every reception communications type is beforehand provided in a management table (see FIG. 53) of each of the address conversion apparatuses 411-41n. Also in a correspondence notice signal item thereof, what logic is to be applied to which part of a received correspondence notice signal, and what range of value a calculation result of the logical operation should fall within to accept the received data to be transferred to the address conversion part of its own (in a step S281). The received signal is canceled when the calculation result does not fall within the range of value.

According to the sixth embodiment, each of the address conversion apparatuses 411-41n calculates the Hash function which is the logic beforehand specified in the management table onto the serial No. of the correspondence notice signal concerned. The result of the calculation is assumed as being "1A", for example. According to the calculation result of this Hash function, the filtering part of each of the address conversion apparatuses 412-41n cancels the received correspondence request signal, while only the filtering part 4112 of the address conversion apparatus 411 accepts and transfers the same into the address conversion part 4111 of its own apparatus without canceling it (in steps S285, S286, and S287).

At this time, the filtering part 4112 extracts the IPv4 network temporary address 4 from the correspondence notice signal, and registers it into the receivable IPv4 network temporary address group thereof (in a step S286). The address conversion part 4111 extracts the IPv4 network temporary address 4 from the correspondence notice signal, and registers it into the conversion table of the address conversion part 4111 (in a step S288), and sends a confirmation signal as a reply on the correspondence notice signal to the name solution apparatus 440 (in a step S289).

The same operations as in the above-described fifth embodiment are then performed (in step S290 through S296).

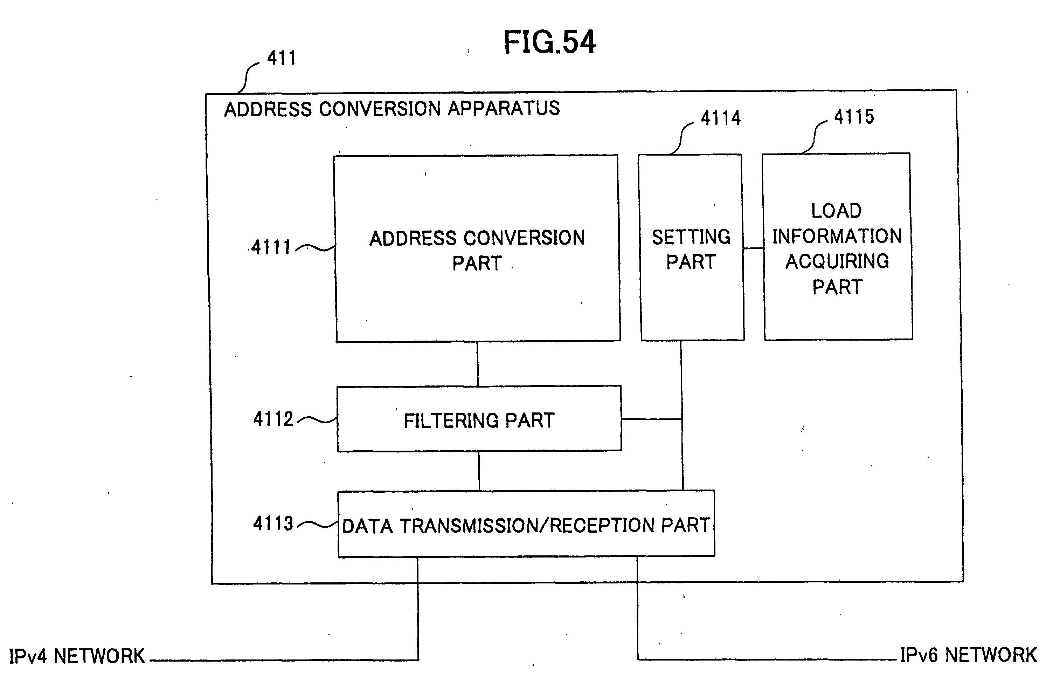

FIG. 54 shows a configuration of an address conversion apparatus 411 according to a seventh embodiment of the present invention applicable to each of the above-mentioned fourth through sixth embodiments of the present invention. Here, a load information acquisition part 4115 investigates the rate of CPU load and the rate of memory usage of the address conversion apparatus of its own, and notifies the information to a setting part 4114.

The setting part notifies the rate of CPU load and the rate of memory usage to other address conversion apparatuses through a data transmission/reception part 4113, and, also, receives rates of CPU load and rates of memory usage of other address conversion apparatuses. For example, when the address conversion apparatus 411 acts as a main address conversion apparatus, the setting part 4114 thereof calculates sharing rates of the processing load based on the rates of CPU load and the rates of memory usage sent from the respective address conversion apparatuses 412-41n, and the rate of CPU load and the rate of memory usage of the own apparatus acquired from the own load information acquisition part 4115.

A numerical value as a determination criterion to be set with respect to the value of the correspondence request signal or the correspondence notice signal of the filtering parts 4112-41n2 for the above-mentioned acceptance calculation are notified to the setting parts 4124-41n4 of the respective address conversion apparatuses 412-41n. Similarly, the numerical value newly determined is set into its own filtering part 4112. Also, the setting parts 4124-14n4 of the respective address conversion apparatus 421-41n set the received new numerical values into their own filtering parts 4122-41n4, respectively, as the determination criteria used for their own acceptance calculation for determining whether or not a received signal is accepted as being processed by utilization of their own resources.

Thereby, load sharing accordance to a new policy based on the thus-set numerical values can be achieved. And, since the policy reflects the current actual processing load situation in each address conversion apparatus, it becomes possible to efficiently use the respective address conversion apparatus as processing operation resources.

Thus, according to the present invention in the aspect described above with reference to the fourth through seventh embodiments, a special load sharing apparatus in the form of hardware becomes unnecessary, and, also, complicated communications setting with respect to various items of setting in the respective address conversion apparatuses becomes unnecessary, merely by providing the filtering part in each of the address conversion apparatuses.

Further, the present invention is not limited to the above-described embodiments, and various and modifications may be made without departing from the scope of the present invention.

## Claims

1. A communications system for performing communications between first and second communications networks (11, 13; 202, 203) having different address systems, comprising:
an allocating part (32; 253) operable to allocate a temporary address, according to an address system of the first communications network (11, 202) for an address (261) of a terminal (141∼14n; 205; 431∼43n) on the second ommunications network according to an address system of the second communications network (17; 203),
a registering part (33; 42; 252) operable to register, as correspondence information for the temporary address, the address (261) on the second communications network for which the temporary address is allocated; and
an address converting part (47; 255; 4111~41n1) operable to perform address conversion according to the correspondence information registered by said registering part; **characterised in that**:
said registering part (33; 42; 252) is operable to register at least any one of an address (262) and a predetermined application identifier (321) of a terminal (121~12n; 204; 421∼42n) on the first communications network (11; 202) as part of said correspondence information.

2. The communications system as claimed in claim 1, further comprising a deleting part (35; 44) operable to delete the correspondence information registered by said registering part after a predetermined time interval has elapsed since latest relevant communications started.

3. The communications system as claimed in claim 1, wherein:
registration of at least any one of the address (262) and the predetermined application identifier (321) of the terminal of the first communications network is performed at a time of start of relevant communications by referring to communications data sent from said terminal (121~12n; 204; 421~42n) of the first communications network.

4. The communications system as claimed in claim 1, having:
a plurality of such address converting parts (4111-41n1), each operable to perform address conversion between the mutually different address systems in communications between the first and second communications networks; and
a filtering part (4112, 4122, ... 41n2) operable to determine one of the plurality of address conversion parts by which address conversion is actually performed, for each occasion of communications.

5. The communications system as claimed in claim 4, wherein:
said filtering part is operable to perform control such that only the determined one of the address conversion parts receives an address correspondence request, an address obtained through the address conversion being supplied in response to the address correspondence request.

6. The communications system as claimed in claim 4, wherein:
said filtering part is operable to perform control such that only the determined one of the address conversion parts receives an address correspondence notice, the address conversion part which has received the address correspondence notice being operable to register an address correspondence according to the notice so that a signal directed to a relevant address can then be received.

7. The communications system as claimed in claim 4, wherein:
said filtering part is operable to perform control such that only the determined one of the address conversion parts receives an address correspondence notice, the address conversion part which has received the address correspondence notice being operable to extracts an address from the notice so that a signal directed to the relevant address can then be received.

8. The communications system as claimed in claim 4, further comprising:
a communications part (4113) operable to communicate processing load conditions of the respective address conversion parts,
wherein:
said filtering part (4112, 4122, ... 41n2) is operable to control load sharing rates on the address conversion parts (4111∼41n1) so that different instances of communications are processed by different address conversion parts according to the processing load conditions obtained via said communications part.

9. The communications system as claimed in claim. 4, having:
a plurality of filtering parts (4112, 4122, ... 41n2); and
each of the filtering parts (41i2) has an associated one of the address conversion parts (41i1) from among said plurality of address conversion parts and is operable to determine whether or not its said associated address conversion part (41i1) is to perform the address conversion.

10. An address conversion apparatus (16; 201; 411∼41n) for performing address conversion in communications between first and second communications networks (11, 13; 202, 203) having different address systems, comprising:
an address converting part (47; 255; 4111~41n1) for performing the address conversion in accordance with correspondence information comprising a temporary address according to the address system of the first communications network and an address (261) according to the address system of the second communications network of a terminal (141~14n; 431∼43n) on the second communications network;
**characterised in that** the address converting part is operable to perform said conversion based on at least any one of an address (262) and a predetermined application identifier (321) of a terminal (121∼12n; 204; .421∼42n) on the first communications network (11; 202), included in said correspondence information.

11. The address conversion apparatus as claimed in claim 10, wherein:
registration of at least any one of the address (262) and the predetermined application identifier (321) of the terminal of the first communications network is performed at a time of start of relevant communications by referring to communications data sent from said terminal (121∼12n; 204; 421~42n) of the first communications network.

12. The address conversion apparatus (201) as claimed in claim 10, wherein said terminal on the first communications network (202) is a first communications apparatus (204) operable to perform communications by using addresses according to a first rule and said terminal on the second communications network (203) is a second communications apparatusoperable to perform communications by using addresses according to a second rule, the address conversion apparatus further comprising:
a correspondence address determining part (253) operable to allocate said temporary address to the second communications apparatus according to the said first rule;
an address conversion table storage part having an address conversion table (252) operable to store, with a correspondence therebetween, the address (262) of the first communications apparatus as a communications source, the temporary address (263) allocated by said correspondence address determining part and an address (261) of the second communications apparatus according to the second rule; and
a data receiving part (256) operable to receive communications for the temporary address according to the first rule from the first communications apparatus;
wherein said address converting part (255) is operable to convert the communications for the temporary address into communications for the address (261) of the second communications apparatus according to the second rule according to the address conversion table (252) stored by said address conversion table storage part; and
the address conversion apparatus further comprises a data transmitting part (256) operable to transmit the communications from the first communications apparatus (204), converted by said address converting part (255), to the second communications apparatus (205).

13. The address conversion apparatus as claimed in claim 12, wherein:
said address conversion table storage part is operable to hold the address (262) of the first communications apparatus in an undefined state during an interval from when said address determining part (253) allocates the temporary address for the second communications apparatus (205) until the first communications apparatus (204) starts communications with the second communications apparatus by using the temporary address thereof.

14. The address conversion apparatus as claimed in claim 12, wherein the apparatus is arranged such that curing the interval from when said address determining part, (253) allocates the temporary address for the second communications apparatus (205) until the first communications apparatus (204) starts communications with the second communications apparatus by using the temporary address thereof, said temporary address is not used for a new allocation for any further communications apparatus (205) that performs communications by using addresses according to the second rule.

15. The address conversion apparatus as claimed in claim 12, wherein the apparatus is arranged such that after a predetermined time interval has elapsed while no communications are performed for the second communications apparatus (205) by using the temporary address from the first communications apparatus (204) since the temporary address was initially allocated for the second communications apparatus, said temporary address is allowed to be used for new allocation for a further communications apparatus (205) that performs communications by using addresses according to the second rule.

16. The address conversion apparatus as claimed in claim 12, wherein
said address conversion table storage part is operable to store, with a correspondence therebetween, a transmission port number (321) for the communications of the first communications apparatus (204), in addition to the address (261) of the second communications apparatus (205), the temporary address for the second communications apparatus and the address (262) of the first communications apparatus; and the apparatus is arranged such that when the temporary address is allocated for the second communications apparatus, the transmission port number for the relevant communications is registered for the temporary address.

17. The address conversion apparatus as claimed in claim 12, wherein the apparatus is arranged such that when the first communications apparatus (204) performs communications with the second communications apparatus (205) by indicating the temporary address, the address of the first communications apparatus which has thus started the communications is registered in the address conversion table (252) for said temporary address.

18. The address conversion apparatus as claimed in claim 17, operable to determine the start of communications from the first communications apparatus from a communications start command issued for the temporary address of the second communications apparatus.

19. The address conversion apparatus as claimed in claim 17, wherein the apparatus is arranged such that the start of communications from the first communications apparatus is determined from a fact that communications are performed for the temporary address of the second communications apparatus by using a specific reserved port number.

20. The address conversion apparatus as claimed in claim 17, wherein:
said address conversion table storage part is operable to store, with a correspondence therebetween, a transmission port number (321) by which a plurality of instances of communications on said first communications apparatus (204) can be distinguished, in addition to the address (261) of the second communications apparatus, the temporary address for the second communications apparatus, and the address .(262) of the first communications apparatus.

21. The address conversion apparatus as claimed in claim 20, wherein the address conversion table storage part is operable, when the first communications apparatus (204) performs communications with the second communications apparatus by indicating the temporary address, to register the address (262) of the first communications apparatus which has started the communications for said temporary address, and, also, to register the transmission port number (321) of the same communications for said temporary address.

22. The address conversion apparatus as claimed in claim 21, wherein the apparatus is arranged such that when the first communications apparatus (204) starts communications by indicating the temporary address, address conversion is performed on the communications such that the communications are directed to the address (261) of the second communications apparatus (205) for which the information registered by the address conversion table storage part is coincident with said temporary address (263) and the transmission port number (321) included in the communications sent from the first communications apparatus.

23. A name solution apparatus (15; 206; 440) which converts a name of a terminal with which communications are to be made into a relevant address in communications between first and second communications networks (11, 13; 202, 203) having different address systems, comprising:
a name solving part (31; 231) for obtaining a predetermined correspondence for a relevant address from correspondence information comprising a temporary address according to the address system of the first communications network and an address (261) according to the address system of the second communications network of a terminal (141~14n; 431∼43n) on the second communications network;
**characterised in that** said name solving part is operable to obtain said predetermined correspondence based on at least any one of an address (262) and a predetermined application identifier (321) of a terminal (121~12n; 204; 421∼42n) on the first communications network (11; 202), included in said correspondence information.

24. The name solution apparatus as claimed in claim 23, further comprising a notifying part (34; 234) operable to notify an address conversion apparatus (16; 201; 411~41n) of the correspondence for address conversion obtained by said name solving part (31; 231).

25. A communications method for performing communications between first and second communications networks (11, 13; 202, 203) having different address systems, comprising:
an allocating step (S15, S45; S95; S96; S135, S136; S202; S223; S247; S263; S283) of allocating a temporary address according to an address system of the first communications network (11; 202) for an address (261) of a terminal (141∼14n; 205; 431~43n) on the second communications network according to an address system of the second communications network (13; 203),
a registering step of registering, as correspondence information for the temporary address, the address (261) on the second communications network for which the temporary address is allocated; and
an address converting step (S25; S55; S1006; S1009; S146; S149; S208; S227; S253; 5275; S294) of performing address conversion according to the correspondence information registered by said registering step;
**characterised in that**:
said registering step (S16; S22; S46; So2; S95; S96; S1006, S135, S136, S146, 5203; S223; S247; S267; S283; S288) also registers at least any one of an address (262) and a predetermined application identifier (321) of a terminal (121~12n; 204; 421∼42n) on the first communications network (11; 202), as part of said correspondence information.

26. The communications method as claimed in claim 25, wherein:
registration of at least either one of the address (262) and the predetermined application identifier (321) of the terminal on said first communications network is performed at a time of start of relevant communications by referring (S24; S54; S1006; S146) to communications data sent from the terminal (121~12n; 204; 421∼42n) on said first communications network (11; 202).

27. The communications method as claimed in claim 25, wherein said terminal on said first communications network (11; 202) is a first communications apparatus (204) which performs communications by using addresses according to a first rule and said terminal on said second communications network (13; 203) is a second communications apparatus (205) which performs communications by using addresses according to a second rule, the method further comprising:
a correspondence address determining step (S91-S96; S131-S136) of allocating to the second communications apparatus (205) said temporary address according to the first rule;
an address conversion table storage step of providing an address conversion table (252) which stores, with a correspondence therebetween, the address (262) of the first communications apparatus as a communications source, the temporary address allocated in said correspondence address determining step and an address (261) of the second communications apparatus according to the second rule; and
a data receiving step (S1001; S141) of receiving communications for the temporary address according to the first rule from the first communications apparatus;
wherein said address converting step (S1006; S1009; S146; S149) includes converting the communications for the temporary address into communications for the address of the second communications apparatus according to the second rule according to the address conversion table (252) provided in said address conversion table storage step; and
the method further comprises a data transmitting step of transmitting the communications from the first communications apparatus, converted in said address converting step, to the second communications apparatus.

28. The communications method as claimed in claim 27, wherein:
in said address conversion table storage step, the address (262) of the first communications apparatus is held in an undefined state during an interval from when said address determining step allocates the temporary address for the second communications until the first communications apparatus starts communications with the second communications apparatus by using the temporary address thereof..

29. The communications method as claimed in claim 27, wherein:
during the interval from when the temporary address is allocated for the second communications in said address determining step until the first communications apparatus starts communications with the second communications apparatus by using the temporary address thereof, said temporary address is not used for a new allocation for any further communications apparatus (205) that performs communications by using addresses according to the second rule.

30. The communications method as claimed in claim 29, wherein:
after a predetermined time interval has elapsed (S113) while no communications are performed for the second communications apparatus by using the temporary address from the first communications apparatus since the temporary address was initially allocated (S111) for the second communications apparatus, said temporary address is allowed (5114) to be used for new allocation for a further communications apparatus (205) that performs communications by using addresses according to the second rule.

31. The communications method as claimed in claim 29, wherein:
in said address conversion table storage step, a transmission port number (321) for the communications of the first communications apparatus, in addition to the address (261) of the second communications apparatus, the temporary address for the second communications apparatus and the address (262) of the first communications apparatus, is stored with a correspondence therebetween; and
when the temporary address is allocated (S146) for the second communications apparatus, the transmission port number for the relevant communications is registered for said temporary address.

32. The communications method as claimed in claim 28, wherein:
when the first communications apparatus performs communications with the second communications apparatus by indicating the temporary address (S1004; S144), the address (262) of the first communications apparatus which has thus started the communications is registered in the address conversion table (252) for said temporary address.

33. The communications method as claimed in claim 32, wherein the start of communications from the first communications apparatus is determined from a communications start command issued for the temporary address of the second communications apparatus.

34. The communications method as claimed in claim 32, wherein:
wherein the start of communications from the first communications apparatus is determined from a fact that communications are performed for the temporary address of the second communications apparatus by using a specific reserved port number.

35. The communications method as claimed in claim . 32 wherein:
in said address conversion table storage step, a transmission port number (321), by which a plurality of instances of communications on said first communications apparatus can be distinguished, is stored, in addition to the address (261) of the second communications apparatus, the temporary address for the second communications apparatus, and the address (262) of the first communications apparatus with a correspondence therebetween.

36. The communications method as claimed in claim 35, wherein:
when the first communications apparatus performs communications with the second communications apparatus by indicating the temporary address, the address (262) of the first communications apparatus which has started the communications is registered (S146) in the address conversion.table (252) for said temporary address, and, also, the transmission port number (321) of the same communications is registered in the address conversion table for said temporary address.

37. The communications method as claimed in claim 36, wherein:
when the first communications apparatus starts communications by indicating the temporary address, address conversion is performed (S146, S149) on the communications such that the communications are directed to the address (261) of the second communications apparatus for which the information (263, 321) registered in the address conversion table (252) is coincident with said temporary address and the transmission port number included in the communications sent from the first communications apparatus.

38. The communications method as claimed in claims 25, wherein:
said address converting step (S253; S275; S294) is executed using a plurality of address converting parts (4111~41n1), each performing address conversion between the mutually different address systems in communications between the first and second communications networks; and
said method further comprises a filtering step (S245; S265; S285) of determining one of the plurality of address conversion parts by which address conversion is actually performed, for each occasion of communications.

39. The communications method as claimed in claim 38, further comprising:
a communications step of communicating processing load conditions of the respective address conversion parts (4111~41n1),
wherein:
in said filtering step (S245; S265; S285), load sharing rates on the address conversion parts are controlled so that different instances of communications are processed by different address conversion parts (4111∼41n1) according to the processing load conditions obtained in said communications step.

40. A computer-readable medium storing thereon a computer program which, when executed on a computer in a communications system that permits communications between first and second communications networks (11; 13; 202; 203) having different address systems, causes the computer to perform the functions of
allocating (S15, S45; S95; S96; S135, S136; S202; S223; S247; S263; S283) a temporary address according to an address system of the first communications network (11; 202) for an address (261) of a terminal (141~14n; 205; 431~42n) on the second communications network according to said address system of the second communications network (13; 203),
registering, as correspondence information for the temporary address, the address (261) on the second communications network for which the temporary address is allocated; and
address converting (S25; S55; S1006; S1009; S146; S149; S208; S227; S253; S275; S294) according to the correspondence information registered by said registering function; **characterised in that**:
said registering function (S16; S22; S46; S52; S95; S96; S1006, S135, S136, S146, S203; S223;. S247; S267; S283; S288) also registers at least any one of an address (262) and a predetermined application identifier (321) of a terminal (121~12n; 204; 421∼42n) on the first communications network (11; 202) as part of said correspondence information.

41. The computer-readable medium as claimed in claim 40, wherein:
in said registering function, the registration of at least either one of the address (262) of the terminal on the first communications network and the predetermined application identifier (321) is made by referring to communications data sent from said terminal (121∼12n; 204; 421~42n) on said first communications network (11; 202) at a time of commencement of relevant communications.

42. The computer-readable medium as claimed in claim 40, further causing the computer to perform a filtering function of:
determining one of a plurality of address conversion parts (4111~41n1) of said communications system that is to perform address conversion between the different address systems in each of the communications made between the first and second communications networks, and causing the determined address conversion part to perform the address conversion.

43. The computer-readable medium as claimed in claim 42, further causing the computer to perform a communications function of communicating processing load conditions of the respective address conversion parts (4111~41n1),
wherein, in said filtering function, load sharing rates on the respective address conversion parts are controlled so that different instances of communications are processed by different address conversion parts according to the processing load conditions of the respective address conversion parts obtained by said communications function.

## Patentansprüche

1. Ein Kommunikationssystem zum Durchführen von Kommunikationen zwischen ersten und zweiten Kommunikationsnetzwerken (11, 13; 202, 203) mit unterschiedlichen Adresssystemen, umfassend:
einen zuweisungsteil (32; 253) der betreibbar ist, um eine temporäre Adresse zuzuweisen gemäß einem Adresssystem des ersten Kommunikationsnetzwerks (11; 202) für eine Adresse (261) eines Terminals (141∼14n; 205; 431∼43n) an dem zweiten Kommunikationsnetzwerk gemäß einem Adresssystem des zweiten Kommunikationsnetzwerks (17; 203);
einen Registrierungsteil (33; 42; 252) der betreibbar ist, um als Korrespondenzinformation für die temporäre Adresse die Adresse (261) an dem zweiten Kommunikationsnetzwerk zu registrieren, für welche die temporäre Adresse zugewiesen wird; und
einen Adresskonvertierungsteil (47; 255; 4111~41n1) der betreibbar ist, eine Adresskonvertierung gemäß der Korrespondenzinformation durchzuführen, die durch den Registrierungsteil registriert wird; **dadurch gekennzeichnet, dass**
der Registrierungsteil (33; 42; 252) betreibbar ist, um mindestens eines von einer Adresse (262) und eines vorbestimmten Anwendungsidentifikators (321) eines Terminals (121∼12n; 204; 421∼42n) an dem ersten Kommunikationsnetzwerk (11; 202) als Teil der Korrespondenzinformation zu registrieren.

2. Das Kommunikationssystem nach Anspruch 1, des weiteren umfassend einen Löschungsteil (35; 44) der betreibbar ist, um die Korrespondenzinformation, die durch den Registrierungsteil registriert wird, zu löschen, nachdem ein vorbestimmtes Zeitintervall abgelaufen ist, seitdem letzte relevante Kommunikationen starteten.

3. Das Kommunikationssystem nach Anspruch 1, wobei:
eine Registrierung von mindestens einem der Adresse (262) und des vorbestimmten Anwendungsidentifikators (321) des Terminals des ersten Kommunikationsnetzwerks zu einer Startzeit relevanter Kommunikationen durch Bezugnahme auf von dem Terminal (121~12n; 204; 421∼42n) des ersten Kommunikationsnetzwerks gesendete Kommunikationsdaten durchgeführt wird.

4. Das Kommunikationssystem nach Anspruch 1, mit:
einer Vielzahl solcher Adresskonvertierungsteile (4111-41n1), wobei jedes betreibbar ist, um eine Adresskonvertierung zwischen den sich gegenseitig unterscheidenden Adresssystemen in Kommunikationen zwischen den ersten und zweiten Kommunikationsnetzwerken durchzuführen; und
einem Filterteil (4112, 4122, ... 41n2) der betreibbar ist, um einen der Vielzahl von Adresskonvertierungsteilen zu bestimmen, durch welchen die Adresskonvertierung tatsächlich durchgeführt wird, für jedes Ereignis von Kommunikationen.

5. Das Kommunikationssystem nach Anspruch 4, wobei:
der Filterteil betreibbar ist, um eine Steuerung so durchzuführen, dass nur der Bestimmte der Adresskonvertierungsteile eine Adresskorrespondenzanfrage empfängt, wobei eine durch die Adresskonvertierung erhaltene Adresse in Antwort auf die Adresskorrespondenzanfrage bereitgestellt wird.

6. Das Kommunikationssystem nach Anspruch 4, wobei:
der Filterteil betreibbar ist, um eine Steuerung so durchzuführen, dass nur der Bestimmte der Adresskonvertierungsteile eine Adresskorrespondenznotiz empfängt, wobei der Adresskonvertierungsteil, der die Adresskorrespondenznotiz empfangen hat, betreibbar ist, um eine Adresskorrespondenz gemäß der Notiz zu registrieren, so dass ein Signal, das auf eine relevante Adresse gerichtet ist, dann empfangen werden kann.

7. Das Kommunikationssystem nach Anspruch 4, wobei:
der Filterteil betreibbar ist, um eine Steuerung so durchzuführen, dass nur der Bestimmte der Adresskonvertierungsteile eine Adresskorrespondenznotiz empfängt, wobei der Adresskonvertierungsteil, der die Adresskorrespondenznotiz empfangen hat, betreibbar ist, um eine Adresse aus der Notiz zu extrahieren, so dass ein Signal, das auf die relevante Adresse gerichtet ist, dann empfangen werden kann.

8. Das Kommunikationssystem nach Anspruch 4, des weiteren umfassend:
einen Kommunikationsteil (4113) der betreibbar ist, um Verarbeitungslastbedingungen der entsprechenden Adresskonvertierungsteile zu kommunizieren,
wobei:
der Filterteil (4112, 4122, ... 41n2) betreibbar ist, um Lastverteilungsraten an den Adresskonvertierungsteilen (4111∼41n1) zu steuern, so dass unterschiedliche Instanzen von Kommunikationen durch unterschiedliche Adresskonvertierungsteile gemäß den Verarbeitungslastbedingungen verarbeitet werden, die über den Kommunikationsteil erhalten werden.

9. Das Kommunikationssystem nach Anspruch 4, mit:
einer Vielzahl von Filterteilen (4112, 4122, ..., 41n2); und
wobei jedes der Filterteile (41i2) einen Zugehörigen der Adresskonvertierungsteile (41i1) aus der Vielzahl von Adresskonvertierungsteilen besitzt und betreibbar ist, um zu bestimmen, ob sein zugehöriger Adresskonvertierungsteil (41i1) zum Durchführen der Adresskonvertierung ist oder nicht.

10. Eine Adresskonvertierungsvorrichtung (16; 201; 411∼41n) zum Durchführen von Adresskonvertierung in Kommunikationen zwischen ersten und zweiten Kommunikationsnetzwerken (11, 13; 202, 203) mit unterschiedlichen Adresssystemeh, umfassend:
einen Adresskonvertierungsteil (47; 255; 4111~41n1) zum Durchführen der Adresskonvertierung gemäß Korrespondenzinformation, welche eine temporäre Adresse gemäß dem Adresssystem des ersten Kommunikationsnetzwerks und eine Adresse (261) gemäß dem Adresssystem des zweiten Kommunikationsnetzwerks eines Terminals (141∼14n; 431∼43n) an dem zweiten Kommunikationsnetzwerk umfasst;
**dadurch gekennzeichnet, dass** der Adresskonvertierungsteil betreibbar ist, um die Konvertierung basierend auf mindestens einem von einer Adresse (262) und eines vorbestimmten Anwendungsidentifikators (321) eines Terminals (121~12n; 204; 421∼42n) an dem ersten Kommunikationsnetzwerk (11; 202) durchzuführen, welche in der Korrespondenzinformation enthalten sind.

11. Die Adresskonvertierungsvorrichtung nach Anspruch 10, wobei:
eine Registrierung mindestens eines von der Adresse (262) und des vorbestimmten Anwendungsidentifikators (321) des Terminals des ersten Kommunikationsnetzwerks zu einer Startzeit relevanter Kommunikationen durch Bezugnahme auf von dem Terminal 121~12n; 204; 421∼42n) des ersten Kommunikationsnetzwerks gesendete Kommunikationsdaten durchgeführt wird.

12. Die Adresskorvertierungsvorrichtung (201) nach Anspruch 10, wobei das Terminal an dem ersten Kommunikationsnetzwerk (202) eine Kommunikationsvorrichtung (204) ist, die betreibbar ist um Kommunikationen mittels Adressen gemäß einer ersten Regel durchzuführen, und das Terminal an dem zweiten Kommunikationsnetzwerk (203) eine zweite Kommunikationsvorrichtung ist, die betreibbar ist, um Kommunikationen mittels Adressen gemäß einer zweiten Regel durchzuführen, wobei die Adresskonvertierungsvorrichtung des weiteren umfasst:
einen Korrespondenzadresse-Bestimmungsteil (253) der betreibbar ist, um die temporäre Adresse der zweiten Kommunikationsvorrichtung gemäß der ersten Regel zuzuweisen;
einen Adresskonvertierungstabelle-Speicherteil mit einer Adresskonvertierungstabelle (252) der betreibbar ist, um, mit einer Korrespondenz dazwischen, die Adresse (262) der ersten Kommunikationsvorrichtung als eine Kommunikationsquelle, die temporäre Adresse (263), die durch den Korrespondenzadresse-Bestimmungsteil zugewiesen ist, und eine Adresse (261) der zweiten Kommunikationsvorrichtung gemäß der zweiten Regel zu speichern; und
einen Datenempfangsteil (256) der betreibbar ist, um Kommunikationen für die temporäre Adresse gemäß der ersten Regel von der ersten Kommunikationsvorrichtung zu empfangen;
wobei der Adresskonvertierungsteil (255) betreibbar ist, um die Kommunikationen für die temporäre Adresse in Kommunikationen für die Adresse (261) der zweiten Kommunikationsvorrichtung gemäß der zweiten Regel gemäß der Adresskonvertierungstabelle (252) zu konvertieren, die durch den Adresskonvertierungstabelle-Speicherteil gespeichert ist; und
wobei die Adresskonvertierungsvorrichtung des weiteren einen Datenübertragungsteil (256) umfasst, der betreibbar ist, um die Kommunikationen von der ersten Kommunikationsvorrichtung (204), die durch den Adresskonvertierungsteil (255) konvertiert werden, zu der zweiten Kommunikationsvorrichtung (205) zu übertragen.

13. Die Adresskonvertierungsvorrichtung nach Anspruch 12, wobei:
der Adresskonvertierungstabelle-Speicherteil betreibbar ist, um die Adresse (262) der ersten Kommunikationsvorrichtung in einem undefinierten Zustand während eines Intervalls zu halten, von wenn der Adressbestimmungsteil (253) die temporäre Adresse für die zweite Kommunikationsvorrichtung (205) zuweist an bis die erste Kommunikationsvorrichtung (204) Kommunikationen mit der zweiten Kommunikationsvorrichtung mittels der temporären Adresse davon startet.

14. Die Adresskonvertierungsvorrichtung nach Anspruch 12, wobei die Vorrichtung so angepasst ist, dass während des Intervalls, von wenn der Adressbestimmungsteil (253) die temporäre Adresse für die zweite Kommunikationsvorrichtung (205) zuweist an bis die erste Kommunikationsvorrichtung (204) Kommunikationen mit der zweiten Kommunikationsvorrichtung mittels der temporären Adresse davon startet, die temporäre Adresse nicht für eine neue Zuweisung für irgendeine weitere Kommunikationsvorrichtung (205) verwendet wird, die Kommunikationen mittels Adressen gemäß der zweiten Regel durchführt.

15. Die Adresskonvertierungsvorrichtung nach Anspruch 12, wobei die Vorrichtung so angepasst ist, dass, nachdem ein vorbestimmtes Zeitintervall abgelaufen ist während keine Kommunikationen für die zweite Kommunikationsvorrichtung (205) mittels der temporären Adresse von der ersten Kommunikationsvorrichtung (204) durchgeführt werden, da die temporäre Adresse anfangs für die zweite Kommunikationsvorrichtung zugewiesen war, die temporäre Adresse für eine neue Zuweisung für eine weitere Kommunikationsvorrichtung (205) verwendet werden darf, die Kommunikationen mittels Adressen gemäß der zweiten Regel durchführt.

16. Die Adresskonvertierungsvorrichtung nach Anspruch 12, wobei
der Adresskonvertierungstabelle-Speicherteil betreibbar ist, mit einer Korrespondenz dazwischen, eine Übertragungsanschlussnummer (321) für die Kommunikationen der ersten Kommunikationsvorrichtung (204) zusätzlich zu der Adresse (261) der zweiten Kommunikationsvorrichtung (205), der temporären Adresse für die zweite Kommunikationsvorrichtung und der Adresse (262) der ersten Kommunikationsvorrichtung zu speichern; und die Vorrichtung so angepasst ist, dass, wenn die temporäre Adresse für die zweite Kommunikationsvorrichtung zugewiesen wird, die Übertragungsanschlusszahl für die relevanten Kommunikationen für die temporäre Adresse registriert wird.

17. Die Adresskonvertierungsvorrichtung nach Anspruch 12, wobei die Vorrichtung so angepasst ist, dass, wenn die erste Kommunikationsvorrichtung (204) Kommunikationen mit der zweiten Kommunikationsvorrichtung (205) durch Indizieren der temporären Adresse durchführt, die Adresse der ersten Kommunikationsvorrichtung, welche **dadurch** die Kommunikationen gestartet hat, in der Adresskonvertierungstabelle (252) für die temporäre Adresse registriert wird.

18. Die Adresskonvertierungsvorrichtung nach Anspruch 17, die betreibbar ist, um den Start von Kommunikationen von der ersten Kommunikationsvorrichtung aus einer Kommunikationsstartanweisung zu bestimmen, die für die temporäre Adresse der zweiten Kommunikationsvorrichtung erstellt wird.

19. Die Adresskonvertierungsvorrichtung nach Anspruch 17, wobei die Vorrichtung so angepasst ist, dass der Start von Kommunikationen von der ersten Kommunikationsvorrichtung von einer Tatsache bestimmt wird, dass Kommunikationen für die temporäre Adresse der zweiten Kommunikationsvorrichtung mittels einer spezifischen reservierten Anschlussnummer durchgeführt werden.

20. Die Adresskonvertierungsvorrichtung nach Anspruch 17, wobei:
der Adresskonvertierungstabelle-Speicherteil betreibbar ist, um, mit einer Korrespondenz dazwischen, eine Übertragungsanschlussnummer (321) zu speichern, durch die eine Vielzahl von Instanzen von Kommunikationen an der ersten Kommunikationsvorrichtung (204) unterschieden werden können, zusätzlich zu der Adresse (261) der zweiten Kommunikationsvorrichtung, der temporären Adresse für die zweite Kommunikationsvorrichtung und der Adresse (262) der ersten Kommunikationsvorrichtung

21. Die Adresskonvertierungsvorrichtung nach Anspruch 20, wobei der Adresskonvertierungstabelle-Speicherteil betreibbar ist, wenn die erste Kommunikationsvorrichtung (204) Kommunikationen mit der zweiten Kommunikationsvorrichtung lurch Indizieren der temporären Adresse durchführt, um die Adresse (262) der ersten Kommunikationsvorrichtung zu registrieren, welche die Kommunikationen für die temporäre Adresse gestartet hat, und auch um die Übertragungsanschlusszahl (321) der gleichen Kommunikationen für die temporäre Adresse zu registrieren.

22. Die Adresskonvertierungsvorrichtung nach Anspruch 21, wobei die Vorrichtung so angepasst ist, dass, wenn die erste Kommunikation Vorrichtung (204) Kommunikationen durch Indizieren der temporären Adresse startet, Adresskonvertierung an den Kommunikationen so durchgeführt wird, dass die Kommunikationen an die Adresse (261) der zweiten Kommunikationsvorrichtung 205) gerichtet sind, für welche die Information, welche durch den Adresskonvertierungstabelle-Speicherteil registriert ist, übereinstimmend mit der temporären Adresse (263) und der Übertragungsanschlussnummer (321) ist, welche in den von der ersten Kommunikationsvorrichtung gesendeten Kommunikationen enthalten sind.

23. Eine Namenauflösungsvorrichtung (15; 206; 440), welche einen Namen eines Terminals, mit welchem Kommunikationen hergestellt werden sollen, in eine relevante Adresse konvertiert in Kommunikationen zwischen ersten und zweiten Kommunikationsnetzwerken (11, 13; 202, 203) mit unterschiedlichen Adresssystemen, umfassend:
einen Namenauflösungsteil (31; 231) zum Erhalten einer vorbestimmten Korrespondenz für eine relevante Adresse von Korrespondenzinformation, welche eine temporäre Adresse gemäß einem Adresssystem des ersten Kommunikationsnetzwerks und eine Adresse (261) gemäß dem Adresssystem des zweiten Kommunikationsnetzwerks eines Terminals (141~14n; 431∼43n) an dem zweiten Kommunikationsnetzwerk umfasst;
**dadurch gekennzeichnet, dass** der Namenauflösungsteil betreibbar ist, um die vorbestimmte Korrespondenz basierend auf mindestens einem von einer Adresse (262) und einem vorbestimmten Anwendungsidentifikator (321) eines Terminals (121∼12n; 204; 421∼42n) an dem ersten Kommunikationsnetzwerk (11; 202) zu erhalten, welche in der Korrespondenzinformation enthalten sind.

24. Die Namenauflösungsvorrichtung nach Anspruch 23, des weiteren umfassend einen Benachrichtigungsteil (34; 234) der betreibbar ist, um eine Adresskonvertierungsvorrichtung (16; 201; 411∼41n) über die Korrespondenz für Adresskonvertierung zu benachrichtigen, welche durch den Namenauflösungsteil (31; 231) erhalten wird.

25. Ein Kommunikationsverfahren zum Durchführen von Kommunikationen zwischen ersten und zweiten Kommunikationsnetzwerken (11, 13; 202, 203) mit unterschiedlichen Adresssystemen, umfassend:
einen zuweisungsschritt (S15, S45; S95; S96; S135, S136; S202; S223; S247; S263; S283) des Zuweisens einer temporären Adresse gemäß eines Adresssystems des ersten Kommunikationsnetzwerks (11; 202) für eine Adresse (261) eines Terminals (141∼14n; 205; 431∼43n) an dem zweiten Kommunikationsnetzwerk gemäß einem Adresssystem des zweiten Kommunikationsnetzwerks (13; 203);
einen Registrierungsschritt des Registrierens, als Korrespondenzinformation für die temporäre Adresse, der Adresse (261) an dem zweiten Kommunikationsnetzwerk, für welche die temporäre Adresse zugewiesen wird; und
einen Adresskonvertierungsschritt (S25; S55; S1006; S1009; S146; S149; S208; S227; S253; S275; S294) des Durchführens von Adresskonvertierung gemäß der Korrespondenzinformation, welche durch den Registrierungsschritt registriert wird; **dadurch gekennzeichnet, dass**
der Registrierungsschritt (S16; S22; S46; S52; S95; S96; S1006, S135, S136, S146, S203; S223; S247; S267; S283; S288) auch mindestens eines von einer Adresse (262) und eines vorbestimmten Anwendungsidentifikators (321) eines Terminals (121∼12n; 204; 421∼42n) an dem ersten Kommunikationsnetzwerk (11; 202) registriert, als Teil der Korrespondenzinformation.

26. Das Kommunikationsverfahren nach Anspruch 25, wobei:
Registrierung von mindestens Einem der Adresse (262) und des vorbestimmten Anwendungsidentifikators (321) des Terminals an dem ersten Kommunikationsnetzwerk zu einer Startzeit relevanter Kommunikationen durch Bezugnahme (S24; S54; S1006; S146) auf von dem Terminal (121∼12n; 204; 421∼42n) an dem ersten Kommunikationsnetzwerk (11; 202) gesendete Kommunikationsdaten durchgeführt wird.

27. Das Kommunikationsverfahren nach Anspruch 25, wobei das Terminal an dem ersten Kommunikationsnetzwerk (11; 202) eine erste Kommunikationsvorrichtung (204) ist, welche Kommunikationen mittels Adressen gemäß einer ersten Regel durchführt, und das Terminal an dem zweiten Kommunikationsnetzwerk (13; 203) eine zweite Kommunikationsvorrichtung (205) ist, welche Kommunikationen mittels Adressen gemäß einer zweiten Regel durchführt, wobei das Verfahren des weiteren umfasst:
einen Korrespondenzadresse-Bestimmungsschritt (S91-S96; S131-S136) des Zuweisens der temporären Adresse gemäß der ersten Regel an die zweite Kommunikationsvorrichtung (205);
einen Adresskonvertierungstabelle-Speicherschritt des Bereitstellens einer Adresskonvertierungstabelle (252), welche, mit einer Korrespondenz.dazwischen, die Adresse (262) der ersten Kommunikationsvorrichtung als eine Kommunikationsquelle, die temporäre Adresse, welche in dem Korrespondenzadresse-Bestimmungsschritt zugewiesen wird, und eine Adresse (261) der zweiten Kommunikationsvorrichtung gemäß der zweiten Regel speichert; und
einen Datenempfangsschritt (S1001; S141) des Empfangens von Kommunikationen für die temporäre Adresse gemäß der ersten Regel von der ersten Kommunikationsvorrichtung;
wobei der Adresskonvertierungsschritt (S1006; S1009; S146; S149) Konvertieren der Kommunikationen für die temporäre Adresse in Kommunikationen für die Adresse der zweiten Kommunikationsvorrichtung gemäß der zweiten Regel gemäß der Adresskonvertierungstabelle (252) einschließt, welche in dem Adresskonvertierungstabelle-Speicherschritt bereitgestellt wird; und
das Verfahren des weiteren einen Datenübertragungsschritt des Übertragens der Kommunikationen von der ersten Kommunikationsvorrichtung, welche in dem Adresskonvertierungsschritt konvertiert werden, an die zweite Kommunikationsvorrichtung umfasst.

28. Das Kommunikationsverfahren nach Anspruch 27, wobei:
in dem Adresskonvertierungstabelle-Speicherschritt die Adresse (262) der ersten Kommunikationsvorrichtung in einem undefinierten Zustand während eines Intervalls gehalten wird, von wenn der Adressbestimmungsschritt die temporäre Adresse für die zweiten Kommunikationen zuweist an bis die erste Kommunikationsvorrichtung Kommunikationen mit der zweiten Kommunikationsvorrichtung mittels der temporären Adresse davon startet.

29. Das Kommunikationsverfahren nach Anspruch 27, wobei:
während des Intervalls, von wenn die temporäre Adresse für die zweiten Kommunikationen in dem Adressbestimmungsschritt zugewiesen wird an bis die erste Kommunikationsvorrichtung Kommunikationen mit der zweiten Kommunikationsvorrichtung mittels der temporären Adresse davon startet, die temporäre Adresse nicht für eine neue Zuweisung für irgendeine weitere Kommunikationsvorrichtung (205) verwendet wird, die Kommunikationen mittels Adressen gemäß der zweiten Regel durchführt.

30. Das Kommunikationsverfahren nach Anspruch 29, wobei:
nachdem ein vorbestimmtes zeitintervall abgelaufen ist (S113) während keine Kommunikationen für die zweite Kommunikationsvorrichtung mittels der temporären Adresse von der ersten Kommunikationsvorrichtung durchgeführt werden, da die temporäre Adresse anfangs für die zweite Kommunikationsvorrichtung zugewiesen war (S111), die temporäre Adresse für eine neue Zuweisung für eine weitere Kommunikationsvorrichtung (205) verwendet werden darf (S114), die Kommunikationen mittels Adressen gemäß der zweiten Regel durchführt.

31. Das Kommunikationsverfahren nach Anspruch 29, wobei:
in dem Adresskonvertierungstabelle-Speicherschritt eine Übertragungsanschlussnummer (321) für die Kommunikationen der ersten Kommunikationsvorrichtung, zusätzlich zu der Adresse (261) der zweiten Kommunikationsvorrichtung, der temporären Adresse für die zweite Kommunikationsvorrichtung und der Adresse (262) der ersten Kommunikationsvorrichtung, mit einer Korrespondenz dazwischen, gespeichert ist; und
wenn die temporäre Adresse für die zweite Kommunikationsvorrichtung zugewiesen wird (S146), die Übertragungsanschlusszahl für die relevanten Kommunikationen für die temporäre Adresse registriert wird.

32. Das Kommunikationsverfahren nach Anspruch 28, wobei :
wenn die erste Kommunikationsvorrichtung Kommunikationen mit der zweiten Kommunikationsvorrichtung durch Indizieren der temporären Adresse (S1004; S144) durchführt, die Adresse (262) der ersten Kommunikationsvorrichtung, welche **dadurch** die Kommunikation gestartet hat, in der Adresskonvertierungstabelle (252) für die temporäre Adresse registriert wird.

33. Das Kommunikationsverfahren nach Anspruch 32, wobei der Start von Kommunikationen von der ersten Kommunikationsvorrichtung aus einer Kommunikationsstartanweisung bestimmt wird, die für die temporäre Adresse der zweiten Kommunikationsvorrichtung erstellt wird.

34. Das Kommunikationsverfahren nach Anspruch 32, wobei:
wobei der Start von Kommunikationen von der ersten Kommunikationsvorrichtung von der Tatsache bestimmt wird, dass Kommunikationen für die temporäre Adresse der zweiten Kommunikationsvorrichtung mittels einer spezifischen, reservierten Anschlussnummer durchgeführt werden.

35. Das Kommunikationsverfahren nach Anspruch 32, wobei:
in dem Adresskcnvertierungstabelle-Speicherschritt eine Übertragungsanschlussnummer (321), durch welche eine Vielzahl von Instanzen von Kommunikationen an der ersten Kommunikationsvorrichtung unterschieden werden können, gespeichert wird, zusätzlich zu der Adresse (261) der zweiten Kommunikationsvorrichtung, der temporären Adresse für die zweite Kommunikationsvorrichtung und der Adresse (262) der ersten Kommunikationsvorrichtung, mit einer Korrespondenz dazwischen.

36. Das Kommunikationsverfahren nach Anspruch 35, wobei:
wenn die erste Kommunikationsvorrichtung Kommunikationen mit der zweiten Kommunikationsvorrichtung durch Indizieren der temporären Adresse durchführt, die Adresse (262) der ersten Kommunikationsvorrichtung, welche die Kommunikationen gestartet hat, in der Adresskonvertierungstabelle (252) für die temporäre Adresse registriert wird (S146), und auch die Übertragungsanschlussnummer (321) der gleichen Kommunikationen in der Adresskonvertierungstabelle für die temporäre Adresse registriert wird.

37. Das Kommunikationsverfahren nach Anspruch 36, wobei:
wenn die erste Kommunikationsvorrichtung Kommunikationen durch Indizieren der temporären Adresse startet, Adresskonvertierung an den Kommunikationen so durchgeführt wird (S146, S149), dass die Kommunikationen an die Adresse (261) der zweiten Kommunikationsvorrichtung gerichtet sind, für welche die in der Adresskonvertierungstabelle (252) registrierte Information (263, 321) mit der temporären Adresse und der Übertragungsanschlussnummer übereinstimmt, welche in den von der ersten Kommunikationsvorrichtung gesendeten Kommunikationen enthalten sind.

38. Das Kommunikationsverfahren nach Anspruch 25, wobei:
der Adresskonvertierungsschritt (S253; S275; S294) mittels einer Vielzahl von Adresskonvertierungsteilen (4111~41n1) ausgeführt wird, wobei jeder eine Adresskonvertierung zwischen den gegenseitig unterschiedlichen Adresssystemen in Kommunikationen zwischen den ersten und zweiten Kommunikationsnetzwerken durchführt; und
das Verfahren des weiteren einen Filterschritt (S245; S265; S285) des Bestimmens eines einer Vielzahl von Ädresskonvertierungsteilen umfasst, durch welchen Adresskonvertierung tatsächlich durchgeführt wird, für jedes Ereignis von Kommunikatonen.

39. Das Kommunikationsverfahren nach Anspruch 38, des weiteren umfassend:
einen Kommunikationsschritt des Kommunizierens von Verarbeitungslastbedingungen der entsprechenden Adresskonvertierungsteile (4111∼41n1),
wobei:
in dem Filterschritt (S245; S265; S285) Lastverteilungsraten an den Adresskonvertierungsteilen so gesteuert werden, dass unterschiedliche Instanzen von Kommunikationen durch unterschiedliche Adresskonvertierungsteile (4111~41n1) gemäß den Verarbeitungslastbedingungen verarbeitet werden, welche in dem Kommunikationsschritt erhalten werden.

40. Ein computerlesbares Medium, welches darauf ein Computerprogramm speichert, das, wenn es auf einem Computer in einem Kommunikationssystem ausgeführt wird, das Kommunikationen zwischen ersten und zweiten Kommunikationsnetzwerken (11; 13; 202; 203) mit unterschiedlichen Adresssystemen erlaubt, den Computer veranlasst, die Funktionen durchzuführen der
Zuweisung (S15, S45; S95; S96; S135, S136; S202; S223; S247; S263; S283) einer temporären Adresse gemäß eines Adresssystems des ersten Kommunikationsnetzwerks (11; 202) für eine Adresse (261) eines Terminals (141∼14n; 205; 431∼42n) an dem zweiten Kommunikationsnetzwerk gemäß des Adresssystems des zweiten Kommunikationsnetzwerks (13; 203);
Registrierung, als Korrespondenzinformation für die temporäre Adresse, der Adresse (261) an dem zweiten Kommunikationsnetzwerk, für welche die temporäre Adresse zugewiesen ist; und
Adresskonvertierung (S25; S55; S1006; S1009; S146; S149; S208; S227; S253; S275; S294) gemäß der Korrespondenzinformation, die durch die Registrierungsfunktion registriert ist; **dadurch gekennzeichnet, dass**:
die Registrierungsfunktion (S16; S22; S46; S52; S95; 596; S1006, S135, S136, S146, S203; 5223; S247; 5267; S283; S288) auch mindestens eine von einer Adresse (262) und eines vorbestimmten Anwendungsindentifikators (321) eines Terminals (121∼12n; 204; 421∼42n) an dem ersten Kommunikationsnetzwerk (11; 202) als Teil der Korrespondenzinformation registriert.

41. Das computerlesbare Medium nach Anspruch 40, wobei:
in der Registrierungsfunktion die Registrierung von mindestens einer der Adresse (262) des Terminals an dem ersten Kommunikationsnetzwerk und des vorbestimmten Anwendungsindentifikators (321) durch Bezugnahme auf von dem Terminal (121∼12n; 204; 421∼42n) an dem ersten Kommunikationsnetzwerk (11; 202) gesendete Kommunikationsdaten zu einer Zeit des' Beginns relevanter Kommunikationen hergestellt wird.

42. Das computerlesbare Medium nach Anspruch 40, welches den Computer des weiteren veranlasst eine Filterfunktion durchzuführen von:
Bestimmen eines einer Vielzahl von Adresskonvertierungsteilen (4111∼41n1) des Kommunikationssystems, der zum Durchführen von Adresskonvertierung zwischen den unterschiedlichen Adresssystemen in jeder der Kommunikationen ist, welche zwischen den ersten und zweiten Kommunikationsnetzwerken hergestellt werden, und Veranlassen des bestimmten Adresskonvertierungsteils, die Adresskonvertierung durchzuführen.

43. Das computerlesbare Medium nach Anspruch 42, welches den Computer des Weiteren veranlasst, eine Kommunikationsfunktion des Kommunizierens von Verarbeitungslastbedingungen der entsprechenden Adresskonvertierungsteile (4111∼41n1) durchzuführen,
wobei in der Filterfunktion Lastverteilungsraten an den entsprechenden Adresskonvertierungsteilen so gesteuert werden, dass unterschiedlichen Instanzen von Kommunikationen durch unterschiedliche Adresskonvertierungsteile gemäß den Verarbeitungslastbedingungen der entsprechenden Adresskonvertierungsteile Verarbeitet werden, die durch die Kommunikationsfunktion erhalten werden.

## Revendications

1. Système de communication pour réaliser des communications entre un premier et un deuxième réseaux de communication (11, 13 ; 202, 203) ayant différents systèmes d'adressage, comprenant :
une partie d'attribution (32 ; 253) pouvant attribuer une adresse provisoire, selon un système d'adressage du premier réseau de communication (11 ; 202) pour une adresse (261) d'un terminal (141~14n ; 205 ; 431~43n) du deuxième réseau de communication selon un système d'adressage du deuxième réseau de communication (17 ; 203),
une partie d'enregistrement (33 ; 42 ; 252) pour enregistrer, comme information de correspondance pour l'adresse provisoire, l'adresse (261) du deuxième réseau de communication pour laquelle l'adresse provisoire est attribuée ; et
une partie de conversion d'adresse (47; 255; 4111∼41n1) pour effectuer une conversion d'adresse en fonction de l'information de correspondance enregistrée par ladite partie d'enregistrement ; **caractérisé en ce que** :
ladite partie d'enregistrement (33 ; 42 ; 252) peut enregistrer au moins l'un quelconque d'une adresse (262) et d'un identificateur d'application prédéterminé (321) d'un terminal (121~12n ; 204 ; 421~42n) du premier réseau de communication (11 ; 202) comme partie de ladite information de correspondance.

2. Système de communication selon la revendication 1, comprenant de plus une partie d'effacement (35 ; 44) pouvant effacer l'information de correspondance enregistrée par ladite partie d'enregistrement après qu'une durée prédéterminée se soit écoulée depuis que la dernière communication concernée a commencé.

3. Système de communication selon la revendication 1, dans lequel :
l'enregistrement d'au moins l'un quelconque de l'adresse (262) et de l'identificateur d'application prédéterminé (321) du terminal du premier réseau de communication est exécuté à l'instant du commencement de communications concernées en se référant à des données de communication envoyées depuis ledit terminal (121∼12n ; 204 ; 421~42n) du premier réseau de communication.

4. Système de communication selon la revendication 1, possédant :
une pluralité de telles parties de conversion d'adresse (4111∼41n1), pouvant chacune exécuter une conversion d'adresse entre les systèmes d'adressage différents dans des communication entre les premier et deuxième réseaux de communication ; et
une partie de filtrage (4112, 4122, ... 41n2) pouvant déterminer l'une de la pluralité de parties de conversion d'adresse par laquelle la conversion d'adresse est réellement exécutée, à chaque fois qu'il y a une communication.

5. Système de communication selon la revendication 4, dans lequel :
ladite partie de filtrage peut exécuter une commande telle que seule celle déterminée des parties de conversion d'adresse reçoive une demande de correspondance d'adresse, une adresse obtenue par conversion d'adresse étant fournie en réponse à la demande de correspondance d'adresse.

6. Système de communication selon la revendication 4, dans lequel :
ladite partie de filtrage peut exécuter une commande telle que seule celle déterminée des parties de conversion d'adresse reçoive une notification de correspondance d'adresse, la partie de conversion d'adresse qui a reçu la notification de correspondance d'adresse pouvant enregistrer une correspondance d'adresse en fonction de la notification de façon qu'un signal dirigé vers une adresse concernée puisse ensuite être reçu.

7. Système de communication selon la revendication 4, dans lequel :
ladite partie de filtrage peut exécuter une commande telle que seule celle déterminée des parties de conversion d'adresse reçoive une notification de correspondance d'adresse, la partie de conversion d'adresse qui a reçu la notification de correspondance d'adresse pouvant extraire une adresse de la notification de façon qu'un signal dirigé vers l'adresse concernée puisse ensuite être reçu.

8. Système de communication selon la revendication 4, comprenant de plus :
une partie de communication (4113) pouvant communiquer des conditions de charge de traitement des parties de conversion d'adresse respectives,
dans lequel :
ladite partie de filtrage (4112, 4122, ... 41n2) peut commander des coefficients de répartition de charge entre les parties de conversion d'adresse (4111~41n1) de façon que différentes communications soient traitées par différentes parties de conversion d'adresse en fonction des conditions de charge de traitement obtenues par l'intermédiaire de ladite partie de communication.

9. Système de communication selon la revendication 4, possédant :
une pluralité de parties de filtrage (4112, 4122, ... 41n2) ; et
chacune des parties de filtrage (41i2) possède l'une associée des parties de conversion d'adresse (41i1) de ladite pluralité de parties de conversion d'adresse et peut déterminer si oui ou non sa dite partie associée de conversion d'adresse (41i1) doit exécuter la conversion d'adresse.

10. Dispositif de conversion d'adresse (16; 201 ; 411~41n) pour exécuter une conversion d'adresse dans des communications entre des premier et deuxième réseaux de communication (11, 13 ; 202, 203) ayant des systèmes d'adressages différents, comprenant :
une partie de conversion d'adresse (47 ; 255 ; 4111~41n1) pour effectuer la conversion d'adresse en fonction de l'information de correspondance comprenant une adresse provisoire selon le système d'adressage du premier réseau de communication et une adresse (261) selon le système d'adressage du deuxième réseau de communication d'un terminal (141~14n ; 431~43n) du deuxième réseau de communication ;
**caractérisé en ce que** la partie de conversion d'adresse peut exécuter ladite conversion en fonction d'au moins l'un quelconque d'une adresse (262) et d'un identificateur d'application prédéterminé (321) d'un terminal (121~12n ; 204 ; 421~42n) du premier réseau de communication (11 ; 202), inclus dans ladite information de correspondance.

11. Dispositif de conversion d'adresse selon la revendication 10, dans lequel :
l'enregistrement d'au moins l'un quelconque de l'adresse (262) et de l'identificateur d'application prédéterminé (321) du terminal du premier réseau de communication est exécuté à l'instant du commencement d'une communication concemée- en se référant à des données- de communication envoyées depuis ledit terminal (121~12n ; 204 ; 421∼42n) du premier réseau de communication.

12. Dispositif de conversion d'adresse (201) selon la revendication 10, dans lequel ledit terminal du premier réseau de communication (202) est un premier dispositif de communication (204) pouvant réaliser des communications en utilisant des adresses selon une première règle et ledit terminal du deuxième réseau de communication (203) est un deuxième dispositif de communication pouvant réaliser des communications en utilisant des adresses selon une deuxième règle, le dispositif de conversion d'adresse comprenant de plus :
une partie de détermination de correspondance d'adresse (253) pouvant attribuer ladite adresse provisoire au deuxième dispositif de communication selon ladite première règle ;
une partie d'enregistrement de table de conversion d'adresse ayant une table de conversion d'adresse (252) pouvant enregistrer, avec une correspondance entre celles-ci, l'adresse (262) du premier dispositif de communication comme origine de communication, l'adresse provisoire (263) attribuée par ladite partie de détermination de correspondance d'adresse et une adresse (261) du deuxième dispositif de communication selon la deuxième règle ; et
une partie de réception de données (256) pouvant recevoir des communications pour l'adresse provisoire selon la première règle provenant du premier dispositif de communication ;
dans lequel la partie de conversion d'adresse (255) peut convertir les communications pour l'adresse provisoire en communications pour l'adresse (261) du deuxième dispositif de communication selon la deuxième règle en fonction de la table de conversion d'adresse (252) enregistrée par ladite partie d'enregistrement de table de conversion d'adresse ; et
le dispositif de conversion d'adresse comprend de plus une partie de communication de données (256) pouvant transmettre les communications provenant du premier dispositif de communication (204), converties par ladite partie de conversion d'adresse (255), au deuxième dispositif de communication (205).

13. Dispositif de conversion d'adresse selon la revendication 12, dans lequel :
ladite partie d'enregistrement de table de conversion d'adresse peut maintenir l'adresse (262) du premier dispositif de communication dans un état non défini pendant une durée allant de l'instant où ladite partie de détermination d'adresse (253) attribue l'adresse provisoire pour le deuxième dispositif de communication (205) à l'instant où le premier dispositif de communication (204) commence la communication avec le deuxième dispositif de communication en utilisant l'adresse provisoire de celui-ci.

14. Dispositif de conversion d'adresse selon la revendication 12, dans lequel le dispositif est conçu de telle façon que pendant la durée allant de l'instant où ladite partie de détermination d'adresse (253) attribue l'adresse provisoire pour le deuxième dispositif de communication (205) à l'instant où le premier dispositif de communication (204) commence la communication avec le deuxième dispositif de communication en utilisant l'adresse provisoire de celui-ci, ladite adresse provisoire n'est pas utilisée pour une nouvelle attribution pour tout autre dispositif de communication (205) qui réalise une communication en utilisant des adresses selon la deuxième règle.

15. Dispositif de conversion d'adresse selon la revendication 12, dans lequel le dispositif est conçu de telle façon qu'après qu'une durée prédéterminée s'est écoulée pendant laquelle aucune communication n'est réalisée pour le deuxième dispositif de communication (205) en utilisant l'adresse provisoire provenant du premier dispositif de communication (204) depuis que l'adresse provisoire a été initialement attribuée au deuxième dispositif de communication, ladite adresse provisoire est autorisée à être utilisée pour une nouvelle attribution pour un autre dispositif de communication (205) qui réalise des communications en utilisant des adresses selon la deuxième règle.

16. Dispositif de conversion d'adresse selon la revendication 12, dans lequel
ladite partie d'enregistrement de table de conversion d'adresse peut enregistrer, avec une correspondance entre ceux-ci, un numéro de port de transmission (321) pour les communication du premier dispositif de communication (204) en plus de l'adresse (261) du deuxième dispositif de communication (205), de l'adresse provisoire pour le deuxième dispositif de communication et l'adresse (262) du premier dispositif de communication ; et le dispositif est conçu de telle façon que quand l'adresse provisoire est attribuée pour le deuxième dispositif de communication, le numéro de port de transmission pour les communications concernées est enregistré comme l'adresse provisoire.

17. Dispositif de conversion d'adresse selon la revendication 12, dans lequel le dispositif est conçu de telle façon que quand le premier dispositif de communication (204) réalise une communication avec le deuxième dispositif de communication (205) en indiquant l'adresse provisoire, l'adresse du premier dispositif de communication qui a ainsi commencé la communication est enregistrée dans la table de conversion d'adresse (252) pour ladite adresse provisoire.

18. Dispositif de conversion d'adresse selon la revendication 17, pouvant déterminer le début de communications provenant du premier dispositif de communication à partir d'une commande de commencement de communication émise pour l'adresse provisoire du deuxième dispositif de communication.

19. Dispositif de conversion d'adresse selon la revendication 17, dans lequel le dispositif est conçu de telle façon que le début de communications provenant du premier dispositif de communication est déterminé à partir du fait que des communications sont réalisées pour l'adresse provisoire du deuxième dispositif de communication en utilisant un numéro de port particulier réservé.

20. Dispositif de conversion d'adresse selon la revendication 17, dans lequel :
ladite partie d'enregistrement de table de conversion d'adresse peut enregistrer, avec une correspondance entre ceux-ci, un numéro de port de transmission (321) par lequel une pluralité de communications sur ledit premier dispositif de communication (204) peuvent être distinguées, en plus de l'adresse (261) du deuxième dispositif de communication, de l'adresse provisoire pour le deuxième dispositif de communication, et de l'adresse (262) du premier dispositif de communication.

21. Dispositif de conversion d'adresse selon la revendication 20, dans lequel la partie d'enregistrement de table de conversion d'adresse peut, quand le premier dispositif de communication (204) réalise des communications avec le deuxième dispositif de communication en indiquant l'adresse provisoire, enregistrer l'adresse (262) du premier dispositif de communication qui a commencé la communication pour ladite adresse provisoire et, aussi, enregistrer le numéro de port de transmission (321) la même communication pour ladite adresse provisoire.

22. Dispositif de conversion d'adresse selon la revendication 21, dans lequel le dispositif est conçu de telle façon que quand le premier dispositif de communication (204) commence des communications en indiquant l'adresse provisoire, la conversion d'adresse est exécutée sur les communications de telle façon que les communications soient dirigées vers l'adresse (261) du deuxième dispositif de communication (205) pour lequel l'information enregistrée par la partie d'enregistrement de table de conversion d'adresse coïncide avec ladite adresse provisoire (263) et le numéro de port de transmission (321) inclus dans les communications envoyées de puis le premier dispositif de communication.

23. Dispositif de détermination de nom (15 ; 206 ; 440) qui convertit un nom d'un terminal avec lequel une communication doit être réalisée en une adresse concernée lors de communications entre des premier et deuxième réseaux de communication (11, 13 ; 202, 203) ayant des systèmes d'adressage différents :
une partie de détermination de nom (31 ; 231) pour obtenir une correspondance prédéterminée pour une adresse concernée à partir de l'information de correspondance comprenant une adresse provisoire selon le système d'adressage du premier réseau de communication et une adresse (261) selon le système d'adressage du deuxième réseau de communication d'un terminal (141~14n ; 431~43n) du deuxième réseau de communication ;
**caractérisé en ce que** ladite partie de détermination de nom peut obtenir ladite correspondance prédéterminée en se fondant sur au moins l'un quelconque d'une adresse (262) et d'un identificateur d'application prédéterminé (321) d'un terminal (121~12n; 204; 421~42n) du premier réseau de communication (11 ; 202), inclus dans ladite information de correspondance.

24. Dispositif de détermination de nom selon la revendication 23, comprenant de plus une partie de notification (34 ; 234) pouvant informer un dispositif de conversion d'adresse (16; 201 ; 411~41n) de la correspondance pour la conversion d'adresse obtenue par ladite partie de détermination de nom (31 ; 231).

25. Procédé de communication pour réaliser des communications entre des premier et deuxième réseaux de communication (11, 13 ; 202, 203) ayant différents systèmes d'adressage, comprenant :
une opération d'attribution (S15, S45 ; S95 ; S96 ; S135, S136 ; S202 ; S223 ; S247 ; S263 ; S283) consistant à attribuer une adresse provisoire selon un système d'adressage du premier réseau de communication (11 ; 202) pour une adresse (261) d'un terminal (141~14n ; 205 ; 431~43n) du deuxième réseau de communication selon un système d'adressage du deuxième réseau de communication (13 ; 203),
une opération d'enregistrement consistant à enregistrer, comme information de correspondance pour l'adresse provisoire, l'adresse (261) du deuxième réseau de communication pour laquelle l'adresse provisoire est attribuée ; et
une opération de conversion d'adresse (S25 ; S55 ; S1006 ; S1009 ; S146 ; S149 ; S208 ; S227 ; S253 ; S275; S294) consistant à exécuter une conversion d'adresse selon l'information de correspondance enregistrée par ladite opération d'enregistrement ;
**caractérisé en ce que** :
ladite opération d'enregistrement (S16 ; S22 ; S46; S52 ; S95 ; S96 ; S1006, S135, S136, S146, S203; S223; S247; S267; S283 ; S288) enregistre également au moins l'un quelconque d'une adresse (262) et d'un identificateur d'application prédéterminé (321) d'un terminal (121~12n ; 204; 421~42n) du premier réseau de communication (11 ; 202), comme partie de ladite information de correspondance.

26. Procédé de communication selon la revendication 25, dans lequel :
l'enregistrement d'au moins l'un ou l'autre de l'adresse (262) et de l'identificateur d'application prédéterminé (321) du terminal dudit premier réseau de communication est exécuté à l'instant du commencement des communications concernées en se référant (S24 ; S54; S1006 ; S146) à des données de communication-envoyées depuis le terminal (121~12n ; 204 ; 421~42n) dudit premier réseau de communication (11 ; 202).

27. Procédé de communication selon la revendication 25, dans lequel ledit terminal dudit premier réseau de communication (11 ; 202) est un premier dispositif de communication (204) qui réalise des communications en utilisant des adresses selon une première règle et ledit terminal dudit deuxième réseau de communication (13 ; 203) est un deuxième dispositif de communication (205) qui réalise des communications en utilisant des adresses selon une deuxième règle, le procédé comprenant de plus :
une opération de détermination d'adresse de correspondance (S91-S96; S131-S136) consistant à attribuer au deuxième dispositif de communication (205) ladite adresse provisoire selon la première règle ;
une opération d'enregistrement de table de conversion d'adresse consistant à fournir une table de conversion d'adresse (252) qui enregistre, avec une correspondance entre celles-ci, l'adresse (262) du premier dispositif de communication comme origine de communication, l'adresse provisoire attribuée dans ladite opération de détermination d'adresse de correspondance et une adresse (261) du deuxième dispositif de communication selon la deuxième règle ; et
une opération de réception de données (S1001 ; S141) consistant à recevoir une communication pour l'adresse provisoire selon la première règle provenant du premier dispositif de communication ;
dans lequel ladite opération de conversion d'adresse (S1006 ; S1009 ; S146 ; S149) comprend la conversion de la communication pour l'adresse provisoire en communication pour l'adresse du deuxième dispositif de communication selon la deuxième règle en fonction de la table de conversion d'adresse (252) fournie dans ladite opération d'enregistrement de table de conversion d'adresse ; et
le procédé comprend de plus une opération de transmission de données consistant à transmettre la communication provenant du premier dispositif de communication, convertie dans ladite opération de conversion d'adresse, au deuxième dispositif de communication.

28. Procédé de communication selon la revendication 27, dans lequel :
dans ladite opération d'enregistrement de table de conversion d'adresse, l'adresse (262) du premier dispositif de communication est maintenue dans un état non défini pendant une durée allant de l'instant où ladite opération de détermination d'adresse attribue l'adresse provisoire pour la deuxième communication à l'instant où le premier dispositif de communication commence une communication avec le deuxième dispositif de communication en utilisant l'adresse provisoire de celui-ci.

29. Procédé de communication selon la revendication 27, dans lequel :
pendant la durée allant de l'instant où l'adresse provisoire est attribuée pour la deuxième communication dans ladite opération de détermination d'adresse à l'instant où le premier dispositif de communication commence une communication avec le deuxième dispositif de communication en utilisant l'adresse provisoire de celui-ci, ladite adresse provisoire n'est pas utilisée pour une nouvelle attribution pour tout autre dispositif de communication (205) qui réalise une communication en utilisant des adresses selon la deuxième règle.

30. Procédé de communication selon la revendication 29, dans lequel :
après qu'une durée prédéterminée s'est écoulée (S113) pendant laquelle aucune communication n'est réalisée pour le deuxième dispositif de communication en utilisant l'adresse provisoire provenant du premier dispositif de communication depuis que l'adresse provisoire a été attribuée initialement (S111) pour le deuxième dispositif de communication, on permet d'utiliser ladite adresse provisoire (S114) pour une nouvelle attribution pour un autre dispositif de communication (205) qui réalise une communication en utilisant des adresses selon la deuxième règle.

31. Procédé de communication selon la revendication 29, dans lequel :
dans ladite opération d'enregistrement de table de conversion d'adresse, un numéro de port de transmission (321) pour les communication du premier dispositif de communication est enregistré en plus de l'adresse (261) du deuxième dispositif de communication, de l'adresse provisoire pour le deuxième dispositif de communication et de l'adresse (262) du premier dispositif de communication, avec une correspondance entre ceux-ci ; et
quand l'adresse provisoire est attribuée (S146) pour le deuxième dispositif de communication, le numéro de port de transmission pour la communication concernée est enregistré pour ladite adresse provisoire.

32. Procédé de communication selon la revendication 28, dans lequel :
quand le premier dispositif de communication réalise une communication avec le deuxième dispositif de communication en indiquant l'adresse provisoire (S1004 ; S144), l'adresse (262) du premier dispositif de communication qui a ainsi commencé la communication est enregistré dans la table de conversion d'adresse (252) pour ladite adresse provisoire.

33. Procédé de communication selon la revendication 32, dans lequel le début de communication à partir du premier dispositif de communication est déterminé à partir d'une commande de début de communication émise pour l'adresse provisoire du deuxième dispositif de communication.

34. Procédé de communication selon la revendication 32, dans lequel :
le début d'une communication provenant du premier dispositif de communication est déterminé à partir d'un fait qu'une communication est réalisée pour l'adresse provisoire du deuxième dispositif de communication en utilisant un numéro de port particulier réservé.

35. Procédé de communication selon la revendication 32 dans lequel :
dans ladite opération d'enregistrement de table de conversion d'adresse, un numéro de port de transmission (321), par lequel une pluralité de communications sur ledit premier dispositif de communication peuvent être distinguées, est enregistré, en plus de l'adresse (261) du deuxième dispositif de communication, de l'adresse provisoire pour le deuxième dispositif de communication, et de l'adresse (262) du premier dispositif de communication avec une correspondance entre ceux-ci.

36. Procédé de communication selon la revendication 35, dans lequel :
quand le premier dispositif de communication réalise une communication avec le deuxième dispositif de communication en indiquant l'adresse provisoire, l'adresse (262) du premier dispositif de communication qui a commencé la communication est enregistrée (S146) dans la table de conversion d'adresse (252) pour ladite adresse provisoire, et, également, le numéro de port de transmission (321) de la même communication est enregistré dans la table de conversion d'adresse pour ladite adresse provisoire.

37. Procédé de communication selon la revendication 36, dans lequel :
quand le premier dispositif de communication commence des communications en indiquant l'adresse provisoire, la conversion d'adresse est exécutée (S146, S149) sur les communications de telle façon que les communications soient dirigées vers l'adresse (261) du deuxième dispositif de communication pour lequel l'information (263, 321) enregistrée dans la table de conversion d'adresse (252) coïncide avec ladite adresse provisoire et le numéro de port de transmission inclus dans les communications envoyées depuis le premier dispositif de communication.

38. Procédé de communication selon la revendication 25, dans lequel :
ladite opération de conversion d'adresse (S253 ; S275 ; S294) est exécutée en utilisant une pluralité de parties de conversion d'adresse (4111~41n1), exécutant chacune une conversion d'adresse entre les systèmes d'adressage différents dans des communications entre les premier et deuxième réseaux de communication ; et
ledit procédé comprend de plus une opération de filtrage (S245 ; S265 ; S285) consistant à déterminer l'une de la pluralité de parties de conversion d'adresse par laquelle la conversion d'adresse est réellement exécutée, pour chacune des communications.

39. Procédé de communication selon la revendication 38, comprenant de plus :
une opération de communication consistant à communiquer des conditions de charge de traitement des parties de conversion d'adresse respectives (4111~41n1),
dans lequel :
dans ladite opération de filtrage (S245; 5265; 5285), des coefficients de répartition de charge entre les parties de conversion d'adresse sont imposés de façon que des communications différentes soient traitées par des parties de conversion d'adresse différentes (4111~41n1) en fonction des conditions de charge de traitement obtenues dans ladite opération de communication.

40. Support pouvant être lu par ordinateur sur lequel est enregistré un programme d'ordinateur qui, lorsqu'il est exécuté sur un ordinateur dans un système de communication qui permet des communications entre des premier et deuxième réseaux de communication (11 ; 13 ; 202 ; 203) ayant des systèmes d'adressage différents, fait effectuer à l'ordinateur les fonctions consistant à :
attribuer (S15, S45 ; S95 ; S96 ; S135, S136 ; S202 ; S223 ; S247 ; S263 ; S283) une adresse provisoire selon un système d'adressage du premier réseau de communication (11 ; 202) pour une adresse (261) d'un terminal (141~14n ; 205; 431~42n) du deuxième réseau de communication selon ledit système d'adressage du deuxième réseau de communication (13 ; 203),
enregistrer, comme information de correspondance pour l'adresse provisoire, l'adresse (261) du deuxième réseau de communication pour lequel l'adresse provisoire est attribuée ; et
convertir une adresse (S25 ; S55 ; S1006 ; S1009 ; S146 ; S149 ; S208 ; S227 ; S253 ; S275 ; S294) selon l'information de correspondance enregistrée par ladite fonction d'enregistrement ; **caractérisé en ce que** :
ladite fonction d'enregistrement (S16 ; S22 ; S46 ; S52 ; S95 ; S96 ; S1006, S135, S136, S146, S203; S223 ; S247 ; S267; S283; S288) enregistre également au moins l'un quelconque d'une adresse (262) et d'un identificateur d'application prédéterminé (321) d'un terminal (121~12n ; 204 ; 421∼42n) du premier réseau de communication (11 ; 202) comme partie de ladite information de correspondance.

41. Support pouvant être lu par ordinateur selon la revendication 40, dans lequel :
dans ladite fonction d'enregistrement, l'enregistrement d'au moins l'un de l'adresse (262) du terminal du premier réseau de communication et de l'identificateur d'application prédéterminé (321) est effectué en se référant à des données de communication envoyées depuis ledit terminal (121~12n ; 204 ; 421~42n) dudit premier réseau de communication (11 ; 202) à un instant de commencement d'une communication concernées.

42. Support pouvant être lu par ordinateur selon la revendication 40, faisant de plus exécuter à l'ordinateur une fonction de filtrage consistant à:
déterminer l'une d'une pluralité de parties de conversion d'adresse (4111∼41n1) dudit système de communication qui doit exécuter la conversion d'adresse entre les systèmes d'adressage différentsdans chacune des communications réalisées entre les premier et deuxième réseaux de communication et faire exécuter à la partie de conversion d'adresse déterminée la conversion d'adresse.

43. Support pouvant être lu par ordinateur selon la revendication 42, faisant de plus exécuter à l'ordinateur une fonction de communication de conditions de charge de traitement des parties de conversion d'adresse (4111∼41n1) respectives,
dans lequel, dans ladite fonction de filtrage, des coefficients de répartition de charge entre les parties de conversion d'adresse respectives sont imposés de façon que des communications différentes soient traitées par des parties de conversion d'adresse différentes selon les conditions de charge de traitement des parties de conversion d'adresse respectives obtenues par ladite fonction de communication.
